# EUROPEAN PATENT APPLICATION

(11) **EP 4 832 405 A1**
(43) Date of publication of application: **28.10.2026**
(21) Application number: 26171212.9
(22) Date of filing: 08.04.2026
(51) Int. Cl.: H04L 5/00

(54) **CONTENTS OF CHANNEL STATE INFORMATION REPORTING**

(30) Priority: 09.04.2025 US 202563786116 P
(71) Applicant: Ofinno, LLC, Reston, VA 20190 (US); Cirik, Ali Cagatay, Reston, Virginia 20190 (US); Dinan, Esmael Hejazi, Reston, Virginia 20190 (US)
(72) Inventor: CIRIK, Ali Cagatay, Reston, Virginia 20190 (US); DINAN, Esmael Hejazi, Reston, Virginia 20190 (US)
(74) Representative: Westphal, Mussgnug & Partner, Patentanwälte mbB

(57) **Abstract**

A wireless device receives one or more channel state information (CSI) reporting configuration parameters, for a user equipment (UE)-initiated CSI reporting, indicating a value of Q. The wireless device detects an event based on a radio link quality of a reference signal associated with a transmission configuration indicator (TCI) state associated with a Q-th best radio link quality among one or more activated TCI states. The wireless device transmits a UE-initiated CSI report comprising a bitmap. Each bit, of one or more bits in the bitmap, corresponds to a respective activated TCI state. A value of a bit of the one or more bits indicates whether a radio link quality of a reference signal associated with a corresponding activated TCI state is better, or worse, than the radio link quality of the reference signal associated with the TCI state associated with the Q-th best radio link quality.

## Description

### BRIEF DESCRIPTION OF THE DRAWINGS

Examples of several of the various embodiments of the present disclosure are described herein with reference to the drawings.
FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIGs. 17A and 17B are call flow diagrams illustrating aspects of transmission configuration indicator (TCI) state indication according to the present disclosure.
FIGs. 18A, 18B, and 18C are call flow diagrams illustrating aspects of channel state information (CSI) reporting, triggered by the network, according to the present disclosure.
FIGs. 19A, 19B, and 19C are call flow diagrams illustrating aspects of CSI reporting, triggered by a wireless device, according to the present disclosure.
FIG. 20 illustrates an example signal flow diagram illustrating aspects of a first mode (e.g., Mode A) of CSI reporting, triggered by a wireless device, according to the present disclosure.
FIG. 21 illustrates an example signal flow diagram illustrating aspects of a second mode (e.g., Mode B) of CSI reporting, triggered by a wireless device, according to the present disclosure.
FIG. 22 illustrates an example of a CSI report configuration according to the present disclosure.
FIG. 23 illustrates an example of cross-cell CSI reporting according to the present disclosure.
FIG. 24 illustrates an aspect of an example embodiment according to the present disclosure.
FIGs. 25A-25D illustrate aspects of example embodiments according to the present disclosure.
FIGs. 26A and 26B illustrate aspects of example embodiments according to the present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of" as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element), or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

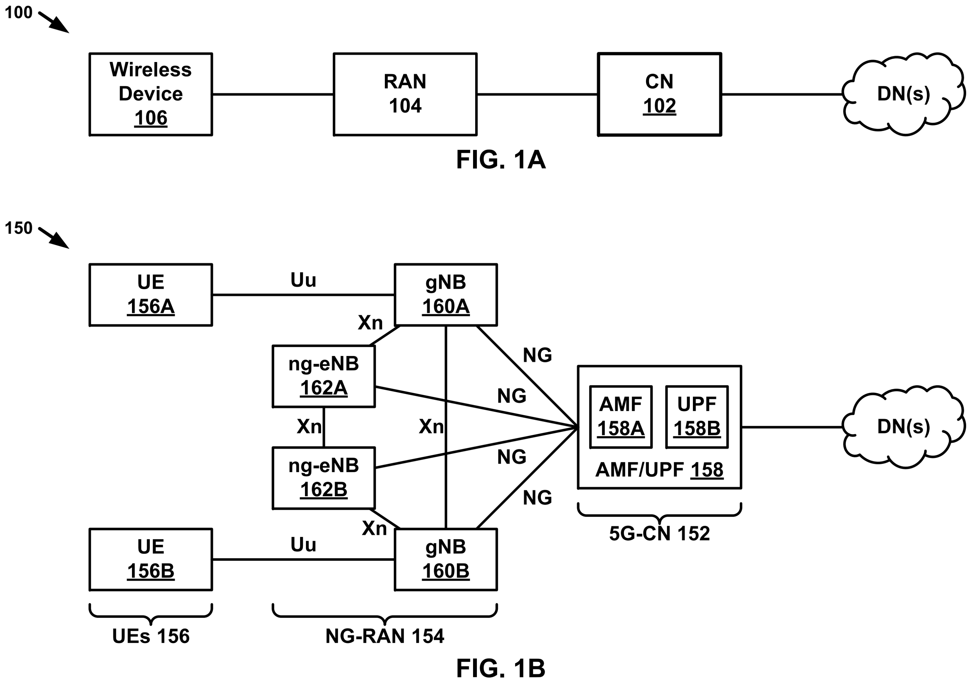

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

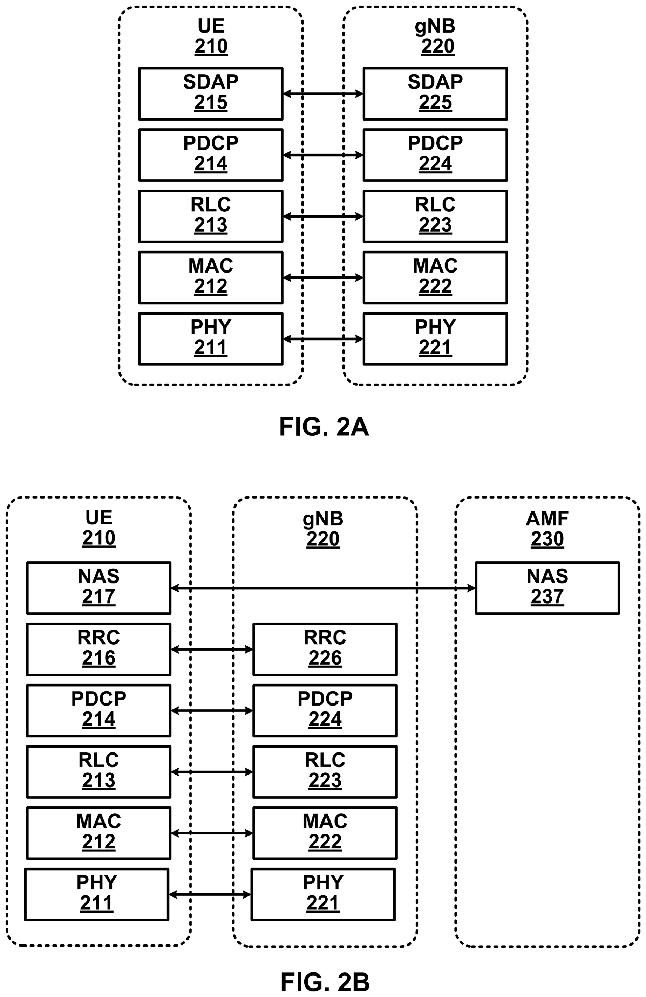

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise medium access control (MAC) layers (MACs) 212 and 222 (also referred to as media access control layers), radio link control (RLC) layers (RLCs) 213 and 223, packet data convergence protocol (PDCP) layers (PDCPs) 214 and 224, and service data application protocol (SDAP) layers (SDAPs) 215 and 225. Together, these four protocols may make up layer 2, or the data link layer, of the OSI model.

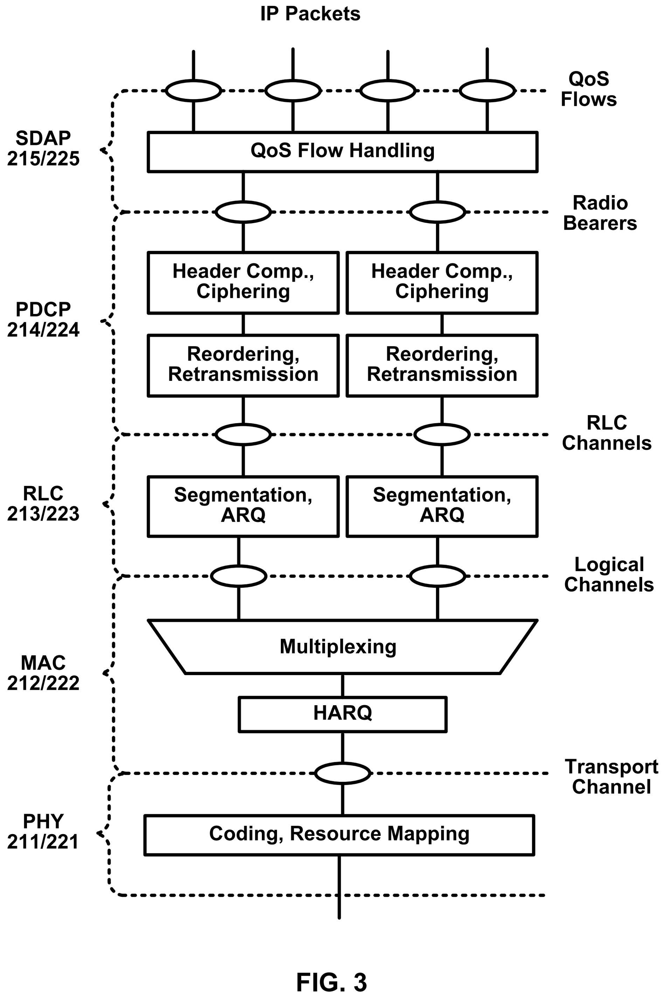

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/demapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

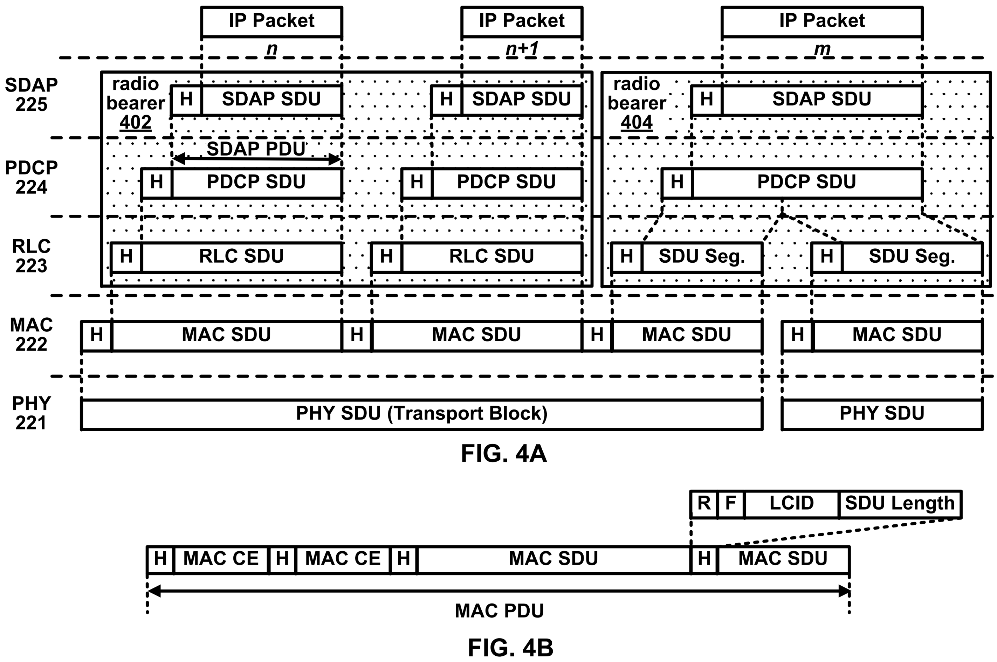

FIG. 4A illustrates an example downlink data flow through the NR user plane protocol stack. FIG. 4A illustrates a downlink data flow of three IP packets (*n, n+1,* and *m*) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets n and *n+1* to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

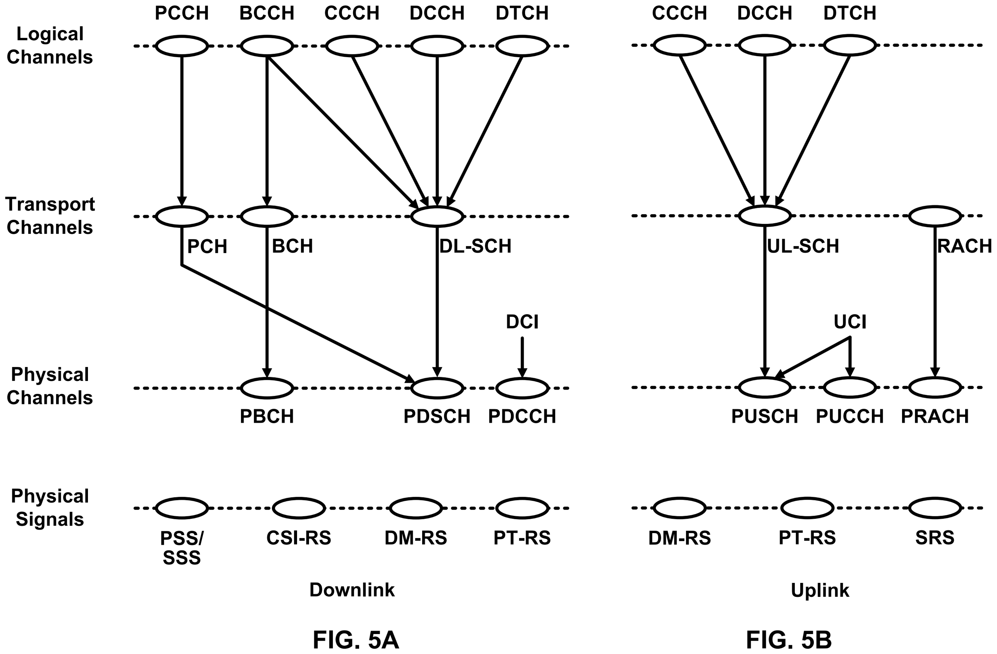

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:
-- a paging control channel (PCCH) for carrying paging messages used to page a UE whose location is not known to the network on a cell level;
-- a broadcast control channel (BCCH) for carrying system information messages in the form of a master information block (MIB) and several system information blocks (SIBs), wherein the system information messages may be used by the UEs to obtain information about how a cell is configured and how to operate within the cell;
-- a common control channel (CCCH) for carrying control messages together with random access;
-- a dedicated control channel (DCCH) for carrying control messages to/from a specific the UE to configure the UE; and
-- a dedicated traffic channel (DTCH) for carrying user data to/from a specific the UE.

Transport channels are used between the MAC and PHY layers and may be defined by how the information they carry is transmitted over the air interface. The set of transport channels defined by NR includes, for example:
-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:
-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

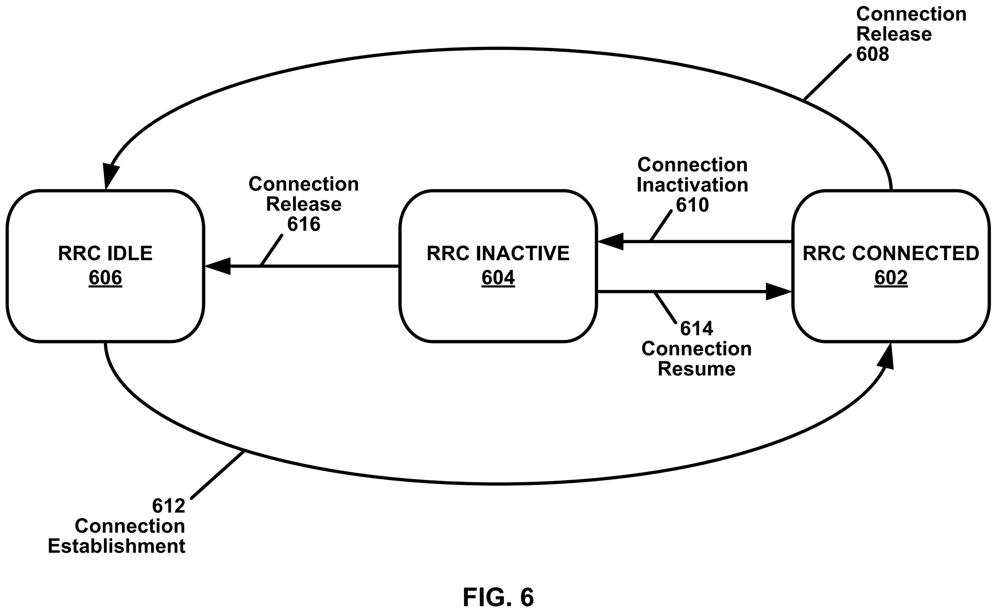

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAls associated with a UE registration area. If the UE moves, through cell reselection, to a cell associated with a TAI not included in the list of TAls associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAls, or a list of TAls. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into F parallel symbol streams. The F parallel symbol streams may be treated as though they are in the frequency domain and used as inputs to an Inverse Fast Fourier Transform (IFFT) block that transforms them into the time domain. The IFFT block may take in F source symbols at a time, one from each of the F parallel symbol streams, and use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. After some processing (e.g., addition of a cyclic prefix) and up-conversion, an OFDM symbol provided by the IFFT block may be transmitted over the air interface on a carrier frequency. The F parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

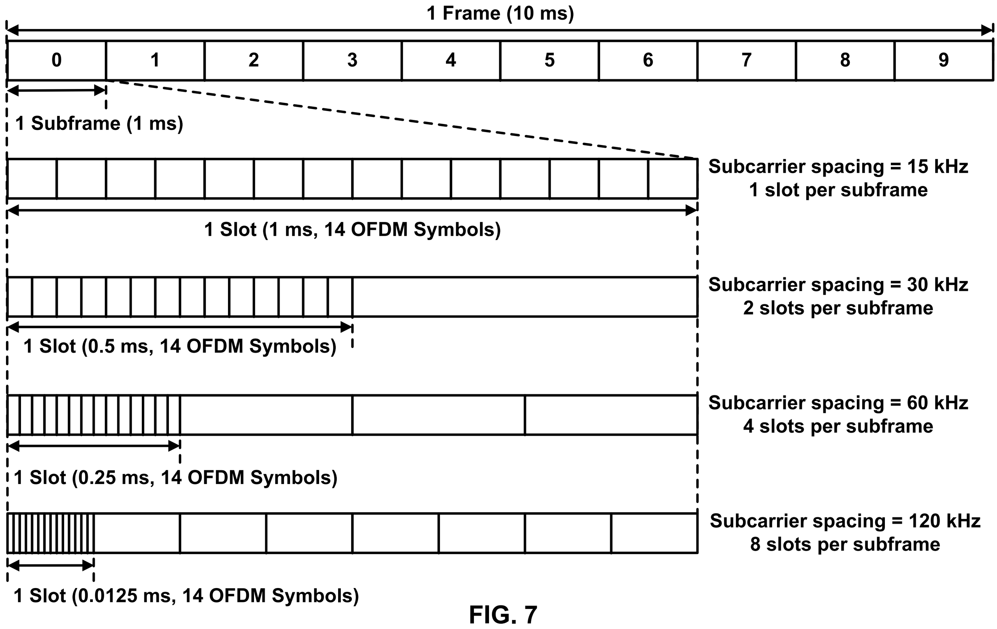

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

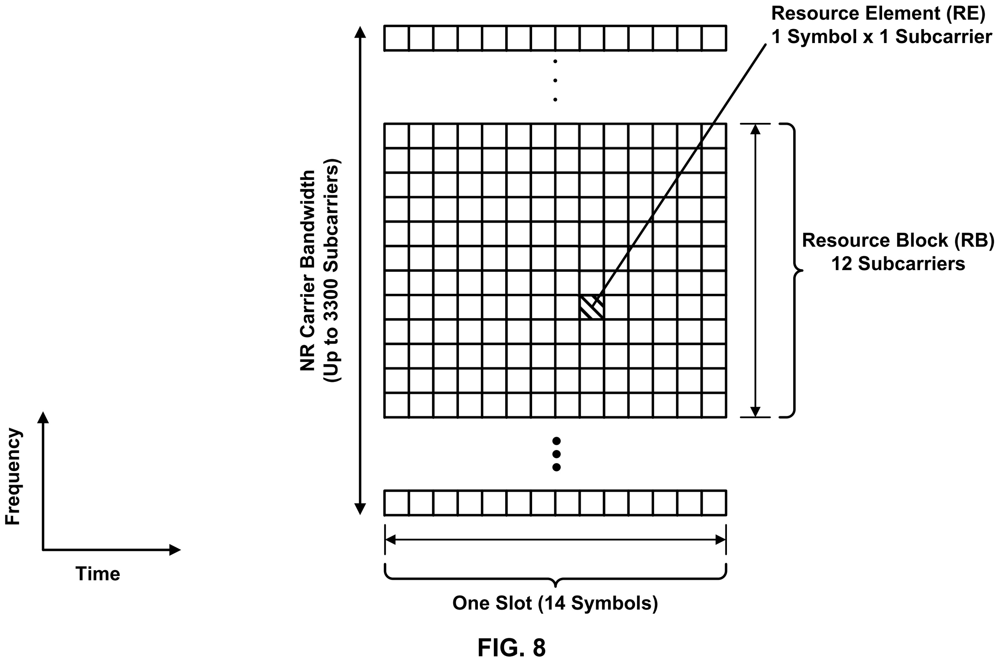

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

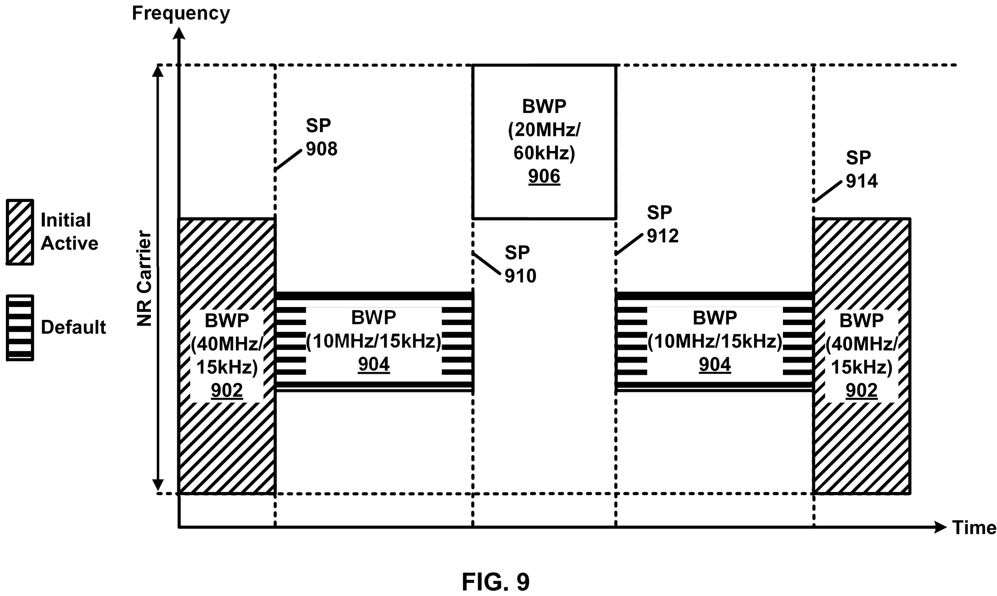

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

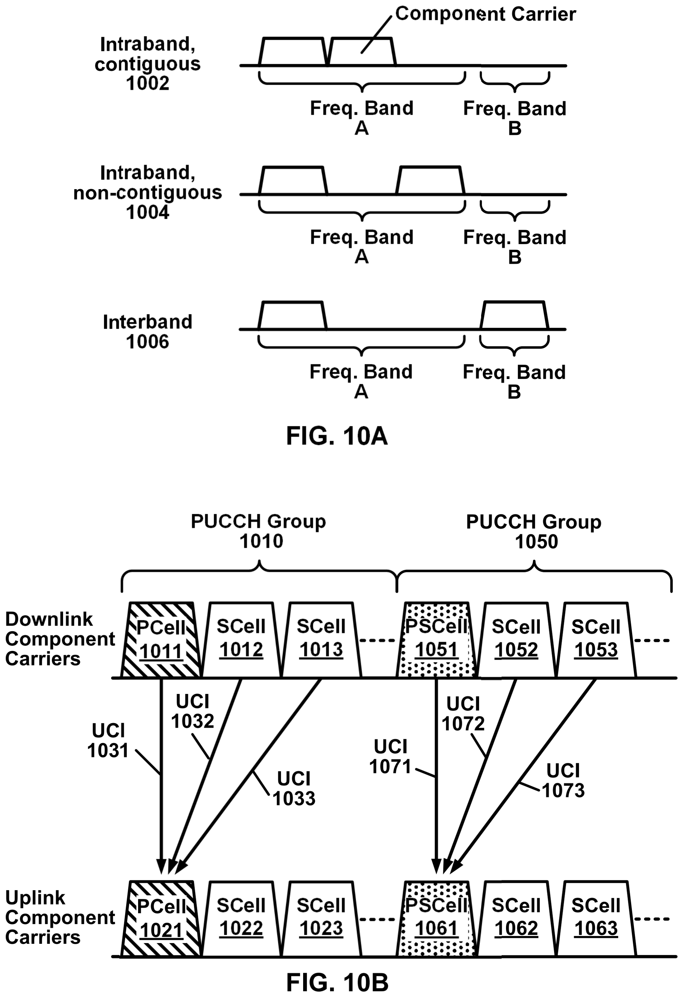

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (PCC). In the uplink, the carrier corresponding to the PCell may be referred to as the uplink PCC. The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (SCC). In the uplink, the carrier corresponding to the SCell may be referred to as the uplink SCC.

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQl, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

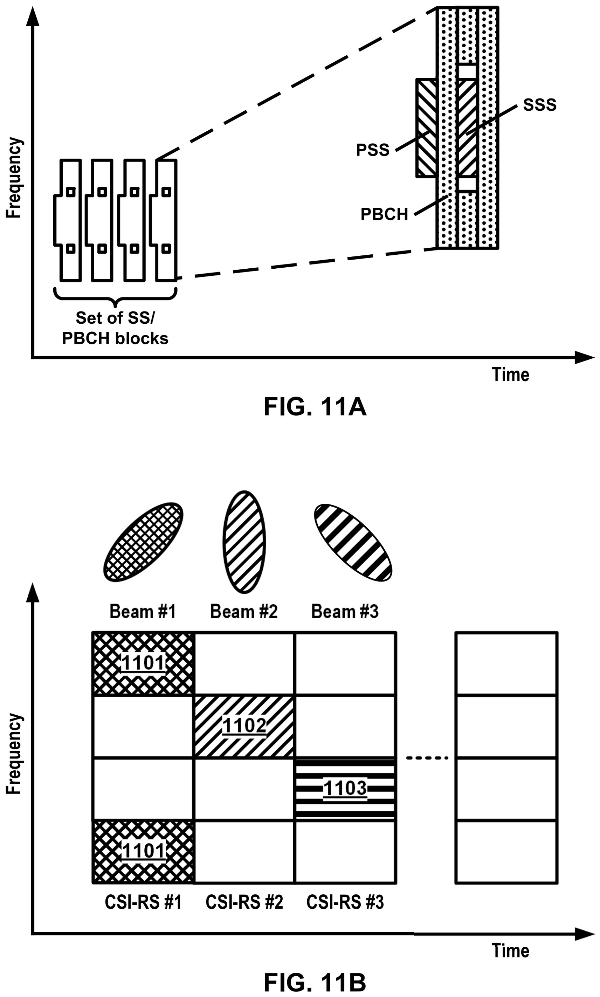

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g., a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH. The base station may semi-statically configure the UE with a number (e.g., maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

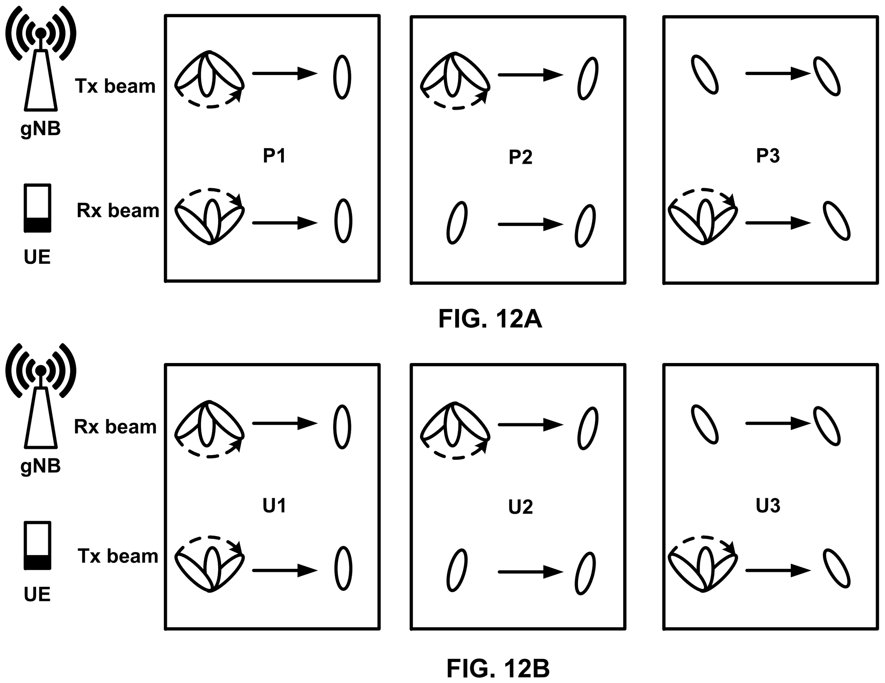

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement. The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

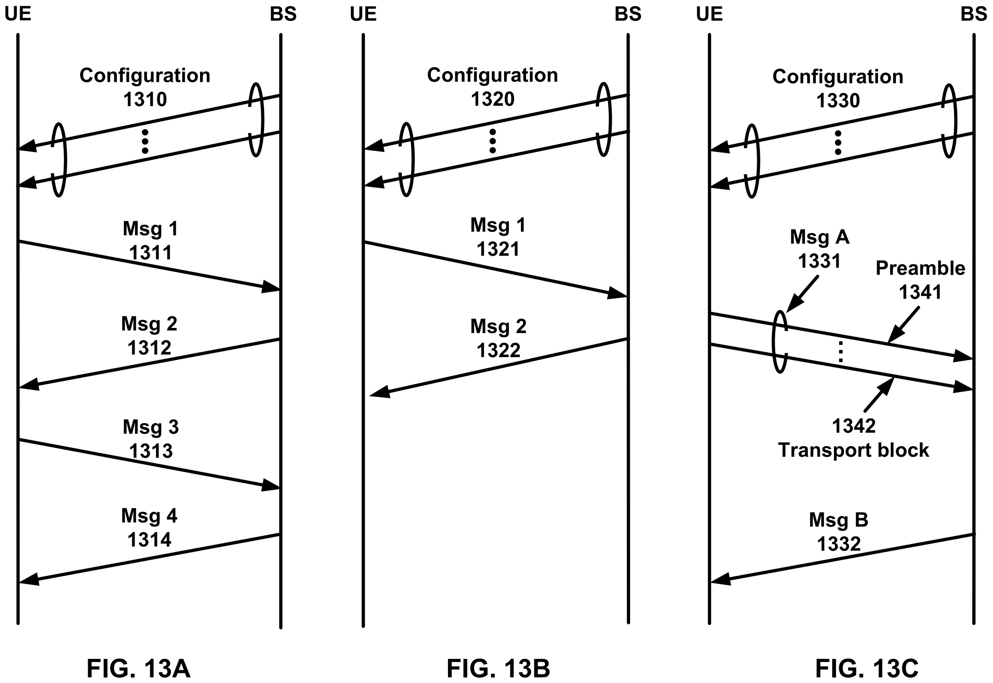

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral*); cell-specific parameters (e.g., *RACH-ConfigCommon*); and/or dedicated parameters (e.g., *RACH-configDedicated*)*.* The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *rassb-OccasionMskIndex* and/or *ra-OccasionList*) may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE_TRANSMISSION_COUNTER*). The UE may determine that a random access procedure completed unsuccessfully, for example, if the number of preamble transmissions exceeds a threshold configured by the one or more RACH parameters (e.g., *preambleTransMax*).

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= 1 + s_id + 14 × t_id + 14 × 80 × f_id + 14 × 80 × 8 × ul_carrier_id, where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-PreambleIndex*)*.*

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceId*)*.* The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCls may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCls with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

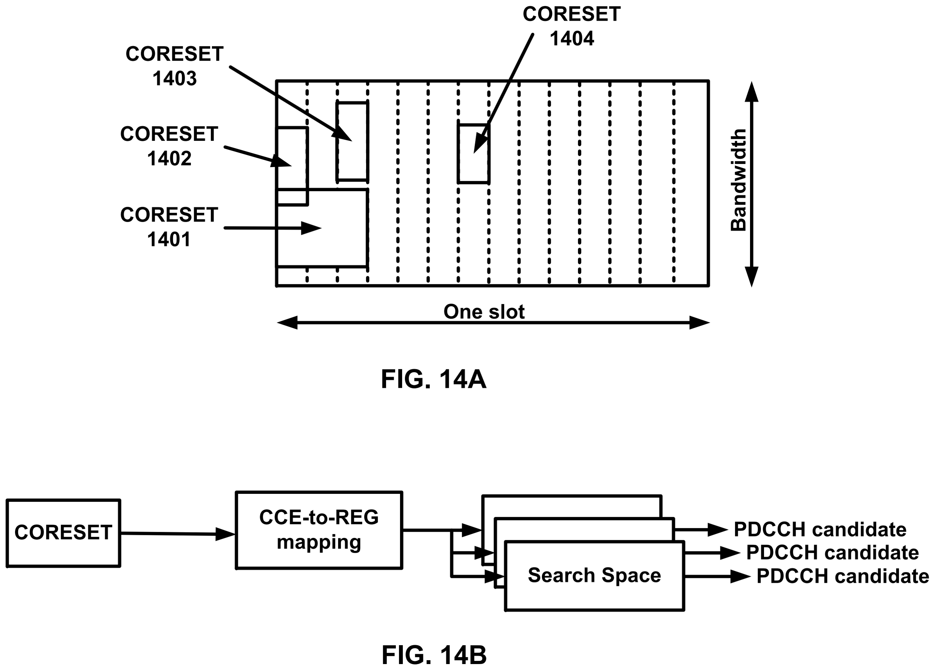

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCls. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a number (e.g., a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

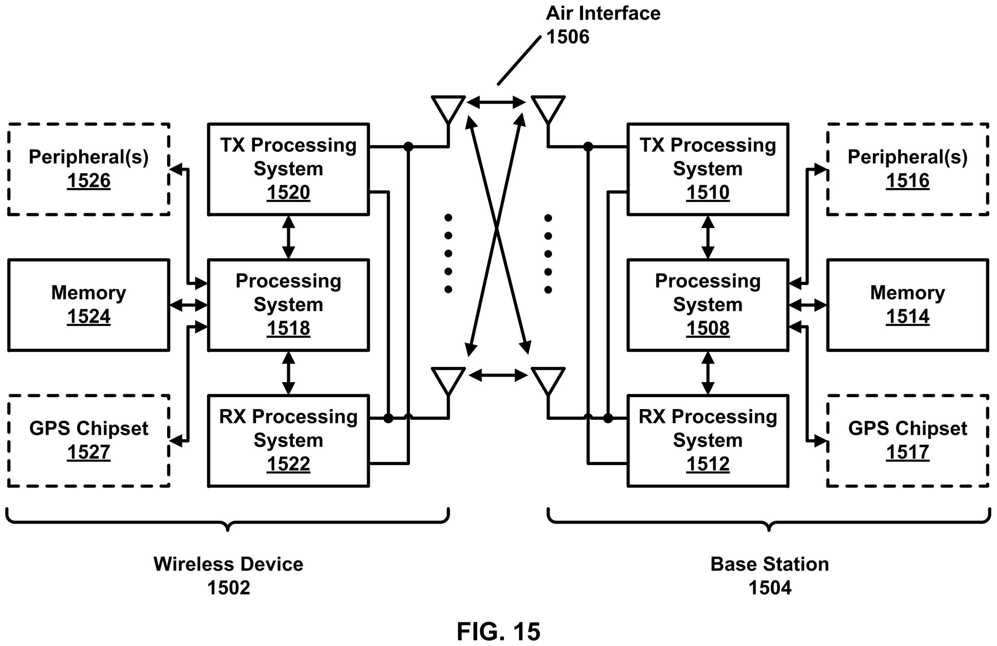

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

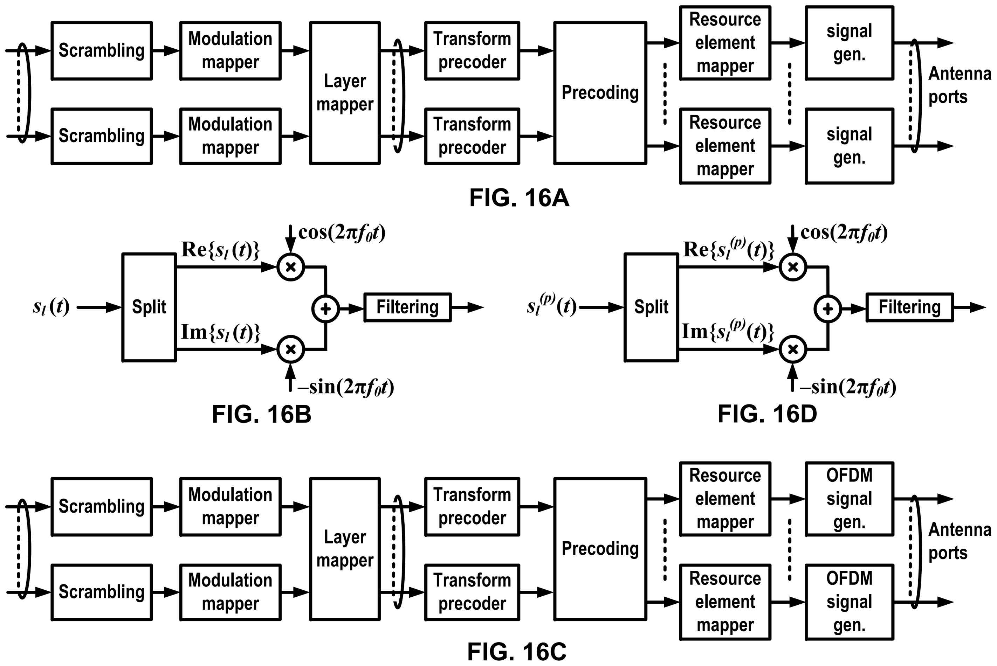

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise:
scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements;
generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual connectivity) via the plurality of cells. The one or more messages (e.g., as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g., the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

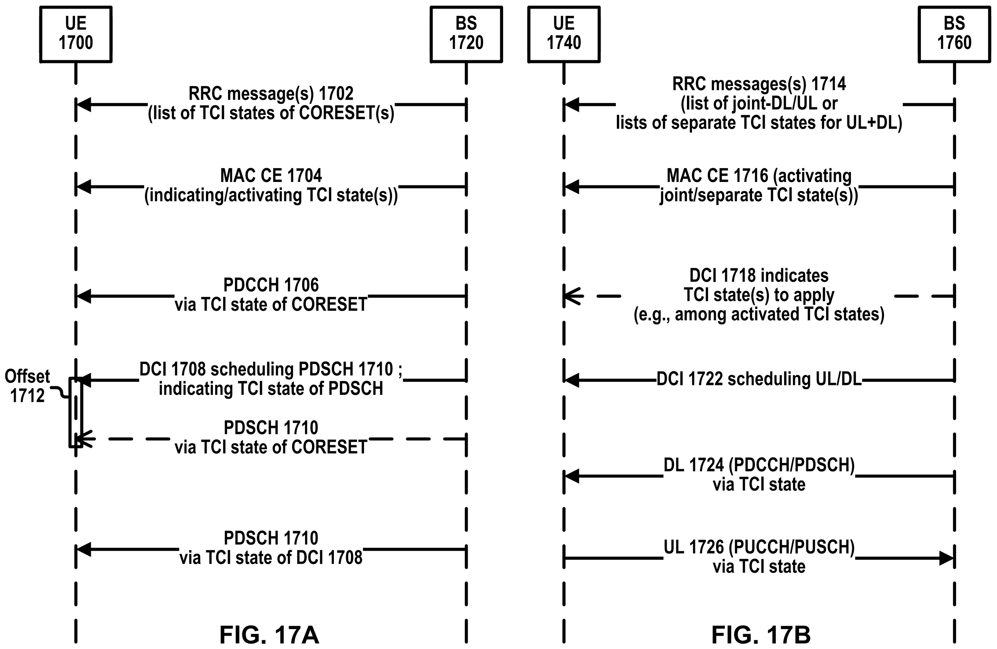

FIGs. 17A and 17B illustrate examples procedures for beam indication based on TCI states. FIG. 17A illustrates an example of a wireless device 1700 receiving, from a base station 1720, channel-specific beam indications for separate downlink physical channels, such as the PDCCH and the PDSCH. FIG. 17B illustrates an example of a wireless device 1740 receiving, from a base station 1760, beam indications applicable (jointly) to multiple physical channels (i.e., common among physical channels), such as TCI states for downlink receptions and/or uplink transmissions. This approach of using a TCI state for multiple physical channels as illustrated in FIG. 17B may be referred to as a unified TCI framework.

As illustrated in FIG. 17A, wireless device 1700 receives one or more RRC messages 1702 from base station 1720. One or more RRC messages 1702 may indicate one or more TCI states for one or more CORESETs. For example, RRC messages 1702 may comprise a list of TCI states (e.g., a list of IDs of TCI states) for CORESETs of wireless device 1700.

Each TCI state may indicate one or more reference signals. For example, each TCI state may comprise one or more IDs of one or more reference signals. The one or more reference signals of a TCI state may be used for channel estimation (including beam determination) such that a signal that is quasi co-located (QCL'd) with the reference signal of a TCI state may experience the same channel conditions (e.g., distortions) and properties as the reference signal of the TCI state and therefore the effects of the channel on the signal may be inferred from the effects of the channel on the reference signal as the reference signal is a known sequence (e.g., a pilot signal).

A TCI state may indicate which, so-called, large-scale channel properties may be inferred from the QCL association between a signal and a reference signal of a TCI state. To do so, each of the one or more reference signals of a TCI state may be associated with a QCL type. In an example, there may be four QCL types, such as QCL-Type A, QCL-Type B, QCL-Type C, and QCL-Type D. QCL-Type A may be used to estimate Doppler shift, Doppler spread, average delay, and delay spread. QCL-Type B may be used to estimate Doppler shift and Doppler spread. QCL-Type C may be used to estimate average delay and Doppler shift. QCL-Type D may be used for spatial domain parameters (e.g., one or more parameters for spatial domain reception filters used to receive downlink signals).

A reference signal of a TCI state with a QCL type of QCL-Type D may be used for beam determination. For example, when a signal is QCL'd with a reference signal of a TCI state with QCL-Type D, wireless device 1700 may determine (e.g., assume or infer) that base station 1720 applies the same spatial (domain) filter to both the signal and the reference signal of the TCI states. By being able to determine (e.g., assume or infer) the spatial domain (transmission) filter applied by base station 1720 to a signal (from the spatial domain filter applied to the QCL'd reference signal), wireless device 1700 may apply a spatial domain (reception) filter suitable to receive the signal.

Returning to FIG. 17A, wireless device 1700 receives one or more RRC messages 1702 that indicate TCI states. For example, one or more RRC messages 1702 may comprise a list of TCI states of a CORESET (e.g., a list of IDs of TCI states). Wireless device 1700 may use the TCI states in the list for receiving PDCCHs on the CORESETs. The TCI states indicated by one or more RRC messages 1702 may be referred to as configured TCI states or RRC-configured TCI states.

FIG. 17A illustrates that wireless device 1700 receives MAC CE 1704 from base station 1720. MAC CE 1704 may indicate, or activate, one or more TCI states configured by one or more RRC messages 1702. For example, MAC CE 1704 may indicate a (e.g., single) TCI state for one or more CORESETs (e.g., for PDCCH receptions via the one or more CORESETs). As another example, MAC CE 1704 may activate a plurality of TCI states that may be used (applied) for PDCCH receptions via CORESETs. The TCI states indicated by MAC CE 1704 may be referred to as activated TCI states or MAC-CE activated TCI states.

Wireless device 1700 may determine one or more spatial (domain) filter parameters based on a reference signal of the TCI state. For example, FIG. 17A illustrates that wireless device 1700 receives PDCCH 1706, of a CORESET, via a TCI state of the CORESET.

For PDSCH reception, a DCI may be used to indicate which TCI state, among the (MAC-CE) activated TCI states (e.g., for the CORESETs), wireless device 1700 is to use (apply) for receiving PDSCH receptions (e.g., data, transport blocks, code block groups of a transport block). As illustrated, wireless device 1700 receives DCI 1708. DCI 1708 schedules a PDSCH transmission and indicates which TCI state, among the activated TCI states, wireless device 1700 is to use (apply) for receiving the PDSCH transmission. A TCI state indicated by a DCI may be referred to as an indicated TCI state. Similarly, a MAC CE that indicates a (e.g., one) TCI state may be referred to as an indicated TCI state.

Although DCI 1708 indicates a TCI state to use for receiving the scheduled PDSCH reception, wireless device 1700 may apply a different TCI state depending on an offset (e.g., in scheduling) between receiving DCI 1708 and the PDSCH reception. For example, DCI 1708 may schedule PDSCH reception 1710 within an offset 1712. Offset 1712 may be referred to as a scheduling offset. Offset 1712 may be a duration or a number of symbols. Offset 1712 may be based on a UE-capability of wireless device 1700.

Based on base station 1720 scheduling, via DCI 1708, the PDSCH reception 1710 within offset 1712, wireless device 1700 applies the TCI state of the CORESET. That is, wireless device 1700 applies the TCI state used to receive PDCCH 1706 (e.g., and does not apply the TCI state indicated by DCI 1708 for receiving PDSCH reception 1710).

Within offset 1712, wireless device 1700 may be unable to (successfully) decode DCI 1708, update the spatial filtering, and/or retune RF chains in time for receiving PDSCH reception 1710. By using the TCI state of the CORESET used to receive PDCCH 1706 (instead of the TCI state indicated in DCI 1708 for receiving the PDSCH reception 1710), this allows wireless device 1700 to receive PDSCH reception 1710 within offset 1712.

On the other hand, when, e.g., PDSCH 1710 is scheduled after offset 1712, wireless device 1700 may apply the TCI state indicated by DCI 1708 for receiving PDSCH reception 1710. For example, FIG. 17A illustrates that wireless device 1700 receives, from base station 1720, PDSCH reception 1710 via the TCI state indicated by DCI 1708. As another example, in response to DCI 1708 not comprising a field indicating a TCI state (any TCI state) for PDSCH reception 1710 (e.g., based on a DCI format of DCI 1708, such as DCI 1_0), wireless device 1700 may apply the TCI state of the CORESET for PDSCH reception 1710.

In the example illustrated in FIG. 17A, base station 1720 may transmit separate beam indications for the PDCCH and the PDSCH, along with separate beam indications for each PDSCH transmission. FIG. 17B illustrates an example of a unified TCI state framework. Under the unified TCI state framework, a single TCI state (or a set of TCI states) may be indicated for each of the downlink physical channels, such as a single TCI state for both PDCCH and PDSCH transmissions. A TCI state that is applied to both the PDCCH and PDSCH may be referred to as a downlink TCI state or a joint-downlink TCI state (joint may refer to a TCI state being jointly applied to different physical channels). For uplink beam indications under the unified TCI state framework, the network may indicate a TCI state (or a set of TCI states) for each of the uplink physical channels, such as a single TCI state for both PUCCH and PUSCH transmissions. A TCI state that is applied to both the PUCCH and PUSCH may be referred to as an uplink TCI state or a joint-uplink TCI state.

In addition to providing TCI states that are (jointly) applied to each of the physical channels in the downlink or uplink, the unified TCI state framework may also be used to indicate a single TCI state (or a set of TCI states) for both downlink and uplink. That is, the TCI state is used for each of the physical channels of the downlink and uplink, such as the PDCCH, PDSCH, PUCCH, and PUSCH. A TCI state applicable to both downlink and uplink, the TCI state may be referred to as a joint TCI state, a joint DL/UL TCI state, or a common TCI state. A TCI state applicable to the unified TCI state framework, the TCI state may be referred to as a unified TCI state.

Returning to FIG. 17B, wireless device 1740 receives, from base station 1760, one or more RRC messages 1714. One or more RRC messages 1714 indicates a plurality of TCI states. The plurality of TCI states may be a plurality of unified TCI states. As an example, one or more RRC messages 1714 may comprise a list of the plurality of TCI states. The list of the plurality of TCI states may be a list of joint (downlink-and-uplink) TCI states, which may be applied to both the downlink and uplink (e.g., each of the downlink and uplink physical channels). The list of joint TCI states may be a list of downlink TCI states (or joint-downlink TCI states), and the absence of a (separate) list of uplink TCI states may imply that the list of downlink TCI states is applicable to both the downlink and uplink (physical channels). In another example, one or more RRC messages 1714 may comprise separate lists of TCI states for downlink and uplink. For example, the list of the plurality of TCI states may comprise a list of downlink TCI states and a list of uplink TCI states. Additionally or alternatively, one or more RRC messages 1714 may comprise a parameter indicating that the TCI states are joint (e.g., TCI states are applicable for both downlink and uplink) or separate (e.g., TCI states are applicable to downlink or uplink).

As another example, one or more RRC messages 1714 may indicate one (e.g., a single) TCI state instead of a plurality of TCI states. In response to one or more RRC messages 1714 indicating one TCI state, wireless device 1740 may (e.g., start to) apply the TCI state without additional signaling via MAC CE and/or DCI.

Similar to the TCI states indicated by one or more RRC messages 1702 of FIG. 17A, the plurality of TCI states indicated by one or more RRC messages 1714 may be referred to as configured TCI states or RRC-configured TCI states.

There may be two mechanisms for indicating which TCI state, among the plurality of TCI states configured by one or more RRC messages 1714, to use (apply) to transmissions between wireless device 1740 and base station 1760. In a first mechanism, wireless device 1740 receives a MAC CE 1716. MAC CE 1716 indicates a (e.g., single) TCI state, or multiple TCI states, among the plurality of TCI states indicated by one or more RRC messages 1714 (i.e., among the (RRC-)configured TCI states). For example, a field of MAC CE 1716 may indicate a (e.g., single) value (e.g., a single value or a single codepoint) that is associated with one TCI state or more TCI states (e.g., one codepoint associated with two TCI states) among the plurality of TCI states indicated by one or more RRC messages 1714.

MAC CE 1716 may indicate a TCI state to be applied to downlink and uplink. For example, MAC CE 1716 may indicate, or comprise, an ID of a TCI state among TCI states in a list of downlink TCI states (joint-downlink TCI states). As another example, MAC CE 1716 may indicate separate TCI states for downlink and uplink. For example, MAC CE 1716 may indicate an ID of a TCI from the TCI states in a list of downlink TCI states (joint-downlink TCI states) and an ID of a TCI state from TCI states in a (separate) list of uplink TCI states. To indicate the one or more TCI states, MAC CE 1716 may comprise a field and a value of the field may correspond to an ID of the TCI state. In addition, MAC CE 1716 may have an indicator associated with the field (e.g., in the same octet) that indicates whether the indicated TCI state is an uplink TCI or a downlink TCI state (e.g., the ID of the TCI state is from the list of downlink TCI states or from the list of uplink TCI states configured by one or more RRC messages 1714).

In a second mechanism for indicating which TCI state to use (apply), both MAC CE and DCI signaling is involved. As illustrated in FIG. 17B, wireless device 1740 receives MAC CE 1716. MAC CE 1716 may indicate activation of a plurality of TCI states. For example, fields of MAC CE 1716 may indicate a plurality of values (e.g., codepoints) that are associated with the plurality of TCI states (e.g., each codepoint being associated one or more TCI states) among the plurality of TCI states indicated by one or more RRC messages 1714.The TCI states activated by MAC CE 1716 may be referred to as activated TCI states. Wireless device 1740 may receive DCI 1718. DCI 1718 may indicate a TCI state among the TCI states activated by MAC CE 1716. Based on DCI 1718 indicating the TCI state among the (MAC-CE) activated TCI states, wireless device 1740 applies the (DCI-)indicated TCI state for receiving transmissions on physical channels.

Similar to MAC CE 1716, DCI 1718 may indicate one or more TCI states. For example, DCI 1718 may indicate a TCI state for downlink receptions (e.g., from among the plurality of TCI states activated by MAC CE 1716). DCI 1718 may indicate a TCI state for uplink transmissions (e.g., from among the plurality of TCI states activated by MAC CE 1716). As example of indicating a TCI state, DCI 1718 may comprise a field to indicate the one or more TCI states. The field may be referred to as a TCI state field. A value (e.g., a codepoint) of the TCI state field of DCI 1718 may be associated with one or more TCI states. For example, a value of the TCI state field may indicate a TCI state to be applied to downlink transmission, a value of the TCI state field may indicate a TCI state to be applied to uplink transmissions, and/or a value of the TCI state field may indicate (both) a TCI to be applied to downlink transmissions and a TCI state to be applied to uplink transmissions. One or more RRC messages 1714 may indicate the association between the vales (e.g., codepoints) of the TCI state field of DCI 1718 and the IDs of the plurality of TCI states (configured by one or more RRC messages 1714 and activated by MAC CE 1716).

A TCI state indicated by MAC CE 1716 and/or DCI 1718 may be referred to as an updated TCI state, and the indicating by MAC CE 1716 and/or DCI 1718 may be referred to as updating the (current) TCI state. That is, by indicating a TCI state for downlink and/or uplink, MAC CE 1716 (in the first mechanism) may be said to update the (indicated) TCI state. Similarly, when MAC CE 1716 indicates activation of TCI states and DCI 1718 indicates a TCI state for downlink and/or uplink, DCI 1718 may be said to update the (indicated) TCI state.

After the TCI state is indicated by MAC CE 1716 and/or DCI 1718, wireless device 1740 applies the TCI state to receive downlink receptions and/or transmit uplink transmissions. That is, the (indicated) TCI state may remain as the TCI state that wireless device 1740 applies to (subsequent) downlink receptions and uplink receptions (e.g., until the TCI state is indicated, or updated, by a subsequent MAC CE and/or DCI).

Returning to FIG. 17B, wireless device 1740 receives a DCI 1722 from base station 1760. DCI 1722 schedules one or more downlink transmissions and/or schedules (or triggers) one or more uplink transmissions. Wireless device 1740 receives downlink transmission 1724 via the TCI state (indicated by MAC CE 1716 and/or DCI 1718). In addition, wireless device 1740 transmits uplink transmission 1726 via the TCI state (indicated by MAC CE 1716 and/or DCI 1718).

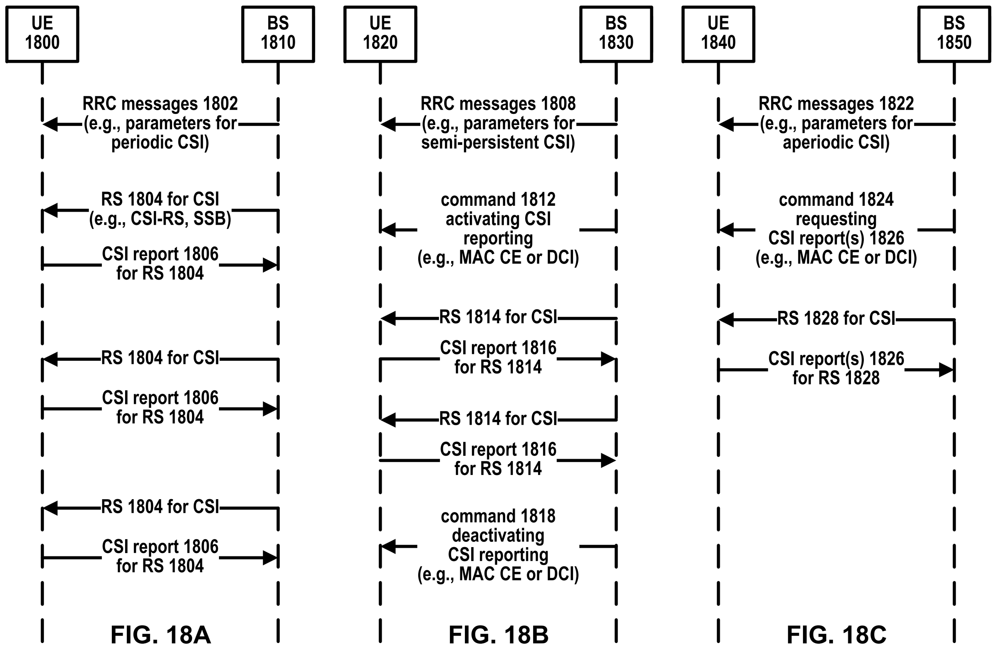

FIGs. 18A, 18B, and 18C illustrate example procedures for CSI reporting triggered by the network (e.g., a base station). FIG. 18A illustrates an example of periodic CSI reporting in which a wireless device 1800 periodically transmits CSI reports to a base station 1810. FIG. 18B illustrates an example of semi-persistent CSI reporting in which a wireless device 1820, after receiving an activation command from a base station 1830, periodically transmits CSI reports to base station 1830 until wireless device 1820 receives a deactivation command from base station 1830. FIG. 18C illustrates an example of aperiodic CSI reporting in which a wireless device 1840 receives, from a base station 1850, a request to transmit one or more aperiodic CSI reports to base station 1850 (e.g., a plurality of aperiodic CSI reports may be requested, which are not periodically transmitted).

FIG. 18A illustrates wireless device 1800 receives, from base station 1810, one or more RRC messages 1802. One or more RRC messages 1802 may indicate, or comprise, parameters for periodic CSI reporting. The parameters for periodic CSI reporting may comprise, for example, one or more CSI reporting configuration parameters, such as a CSI report configuration and/or a resource configuration of reference signals (e.g., resources of reference signals).

One or more RRC messages 1802 may indicate a periodicity for CSI reporting. This may be referred to as a report periodicity type. The periodicity may indicate that report periodicity type is periodic or semi-persistent. In FIG. 18A, the one or more parameters for periodic CSI reporting, in one or more RRC messages 1802, indicate that the periodicity for CSI reporting is periodic (e.g., the periodicity is set to periodic).

The one or more parameters for periodic CSI reporting (e.g., in the CSI report configuration), of one or more RRC messages 1802, may indicate one or more quantities to measure and report. A quantity to measure and report may be referred to as a report quantity, a quantity, or a radio link quality. The report quantity of the one or more configuration parameters for periodic CSI reporting may indicate to report one or a combination of any one of the following report quantities: channel quality indicator (CQI), a rank indicator (RI), a precoder-matrix indicator (PMI), a (e.g., strongest) layer indicator (LI or SLI), and/or a layer-1 RSRP (L1-RSRP).

The one or more parameters for periodic CSI reporting, of one or more RRC messages 1802, may indicate the (downlink) reference signals that wireless device 1800 measures to report the report quantity. For example, one or more parameters may indicate a reference signal from reference signals in a reference signal configuration. The reference signals and configurations of reference signals may be referred to as resource sets (e.g., of reference signals) and configuration of resource sets (e.g., for reference signals). The types of reference signals indicated by the one or more parameters may be CSI-RSs and/or SSBs. For example, the reference signal configuration may be a (non-zero power) CSI-RS resource set, which configures a set of CSI-RSs or a set of SSBs for CSI. The set of CSI-RSs may be one or more CSI-RSs (e.g., one CSI-RS may be configured in the set) and the set of SSBs may be one or more SSBs (e.g., one SSB may be configured in the set).

As with CSI reports, there may be three types of periodicities of (downlink) reference signals that may be measured and reported. A reference signal may be a periodic reference signal, a semi-persistent reference signal, or an aperiodic reference signal. A semi-persistent reference signal is a reference signal with a periodicity that may be (e.g., dynamically) stopped or skipped based on signaling.

The CSI reporting periodicity and the periodicity of the reference signal may be different from each other. For example, periodic CSI reporting may be reported for periodic reference signals. Semi-persistent CSI reporting may be reported for periodic reference signals and/or semi-persistent reference signals. Aperiodic CSI reporting may be reported for periodic reference signals, semi-persistent reference signals, and/or aperiodic reference signals.

In periodic CSI reporting, wireless device 1800 may not receive any signaling to begin reporting CSI (other than one or more RRC messages 1802) from base station 1810. That is, there is no (trigger) condition for periodic CSI reporting. For example, FIG. 18A illustrates that, after wireless device 1800 receives one or more RRC messages 1802, wireless device 1800 receives (e.g., starts receiving) a reference signal 1804 from base station 1810. Reference signal 1804 may be a periodic reference signal (e.g., periodic CSI-RS or SSB), as explained above. One or more RRC messages 1808 may indicate reference signal 1804 to be used for the periodic CSI reporting (e.g., from a reference signal configuration). Wireless device the transmits a CSI report 1806 based on reference signal 1804 to base station 1810. CSI report 1806 may comprise the report quantity indicated by the one or more parameters for periodic CSI reporting in one or more RRC messages 1802. Wireless device 1800 may measure (e.g., a radio link quality) of reference signal 1804 based on the report quantity indicated by one or more RRC messages 1802.

As illustrated in FIG. 18A, wireless device 1800 periodically transmits CSI report 1806 to base station 1810. While the same CSI report 1806 is illustrated (with the same type of report quantity), a value of the report quantity may change with each transmission of CSI report 1806 based on reference signal 1804.

FIG. 18B illustrates an example of semi-persistent CSI reporting. As illustrated, wireless device 1820 receives one or more RRC messages 1808 from base station 1830. One or more RRC messages 1808 comprise parameters for semi-persistent CSI reporting. One or more RRC messages 1808 may indicate, or comprise, the same parameters discussed above one or more RRC messages 1802 in FIG. 18A. For example, one or more RRC messages 1808 may indicate a periodicity for CSI reporting. The report periodicity type in one or more RRC messages 1808 is semi-persistent (instead of periodic as in one or more RRC messages 1802). In addition, the report periodicity type may indicate one of two types of semi-persistent CSI reporting. For example, the report periodicity type may indicate semi-persistent CSI reporting on PUCCH or semi-persistent CSI reporting on PUSCH. In FIG. 18B, the report periodicity type is semi-persistent on PUSCH.

Like one or more RRC messages 1802, one or more RRC messages 1808 may indicate a report quantity and (downlink) reference signals for the semi-persistent CSI reporting (on PUCCH or PUSCH). The parameters for semi-persistent CSI reporting may indicate a periodic reference signal or a semi-persistent reference signal for wireless device 1820 to measure and report to base station 1830.

Semi-persistent CSI reporting is similar to periodic CSI reporting except that signaling is involved to activate and deactivate the CSI reporting. As illustrated, wireless device 1820 receives a command 1812 indicating activation of the (semi-persistent) CSI reporting. Command 1812 may be an activation command. For example, command 1812 may be a MAC CE indicating activation of the semi-persistent CSI reporting (e.g., on PUCCH) or a DCI indicating activation of semi-persistent CSI reporting (e.g., on PUSCH). After receiving command 1812, wireless device 1820 may (start) receiving a reference signal 1814 for CSI reporting (e.g., CSI-RS or SSB). As illustrated, wireless device 1820 does not receive (e.g., measure) reference signal 1814 until (after) wireless device 1820 receives command 1812 from base station 1830,

After base station 1830 indicates activation of semi-persistent CSI reporting via command 1812, wireless device 1820 (periodically) transmits a CSI report 1816 for reference signal 1814. CSI report 1816 indicates the reporting quantity of reference signal 1814. Similar to (periodic) CSI report 1806 of FIG. 18A, the reporting quantity in CSI report 1816 may change over time based on measurements on reference signal 1814.

Wireless device 1820 (continues) periodically transmitting CSI report 1816 until a deactivation command is received in semi-persistent CSI reporting. As illustrated, wireless device 1820 receives a command 1818 from base station 1830. Command 1818 indicates deactivation of the (semi-persistent) CSI reporting. Command 1818 may be a deactivation command. For example, command 1818 may be a MAC CE indicating deactivation of the semi-persistent CSI reporting (e.g., on PUCCH) or a DCI indicating deactivation of semi-persistent CSI reporting (e.g., on PUSCH). After receiving command 1818 indicating to deactivate (semi-persistent) CSI reporting, wireless device 1820 may stop transmitting (and measuring) CSI report 1816 of reference signal 1814.

FIG. 18C illustrates an example of aperiodic CSI reporting. As illustrated, wireless device 1840 receives one or more RRC messages 1822 from base station 1850. One or more RRC messages 1822 comprises parameters for aperiodic CSI reporting.

One or more RRC messages 1822 may indicate, or comprise, the same parameters discussed above one or more RRC messages 1802 in FIG. 18A for periodic CSI reporting and/or one or more RRC messages 1808 for semi-persistent CSI reporting. For example, one or more RRC messages 1822 may indicate a periodicity for CSI reporting. The report periodicity type in one or more RRC messages 1822 is aperiodic (instead of periodic or semi-persistent).

Like one or more RRC messages 1802 for periodic CSI reporting and one or more RRC messages 1808 for semi-persistent CSI reporting, one or more RRC messages 1822 may indicate a report quantity and (downlink) reference signals for the aperiodic CSI reporting (e.g., on PUSCH). The parameters for aperiodic CSI reporting may indicate one or more reference signals for aperiodic CSI reporting. The types of reference signals for aperiodic CSI reporting may be periodic reference signals, semi-persistent reference signals, and/or aperiodic reference signals. The reference signals used for aperiodic CSI reports may be CSI-RSs and/or SSBs.

For aperiodic CSI reporting, a base station 1850 may transmit a DCI indicating a request for one or more aperiodic CSI reports. The request may be a CSI request field of the DCI. One or more RRC messages 1822 may indicate an association between reference signals or reference signal resource sets) and one or more bits of a CSI request field of a DCI. This allows base station 1850 to (dynamically) request (or trigger) wireless device 1840 to transmit a CSI report for one or more of the reference signals (or reference signal resource sets). In addition, one or more RRC messages 1822 may indicate a size of the CSI request field of the DCI for requesting aperiodic CSI reports (e.g., a trigger size). The size of CSI request field may be 0, 1, 2, 3, 4, 5 or 6 bits depending on the size indicated by a parameter in (the parameters for aperiodic CSI reporting of) one or more RRC messages 1822.

After receiving one or more RRC messages 1822 in FIG. 18C, wireless device 1840 receives a command 1824 from base station 1850. Command 1824 requests wireless device 1840 to transmit one or more aperiodic CSI reports 1826 of one or more reference signals 1828. Command 1824 may be a DCI. One or more aperiodic CSI reports 1826 may be a plurality of aperiodic CSI reports.

The parameters for aperiodic CSI reporting in one or more RRC messages 1822 do not comprise uplink resources for transmitting aperiodic CSI reports 1826. Instead, command 1824 indicates uplink resources (e.g., comprises an uplink grant) for one or more CSI reports 1826. As illustrated, wireless device 1840 transmits one or more CSI reports 1826 for one or more reference signals 1828. Wireless device 1840 transmits the one or more CSI reports 1826 on the PUSCH.

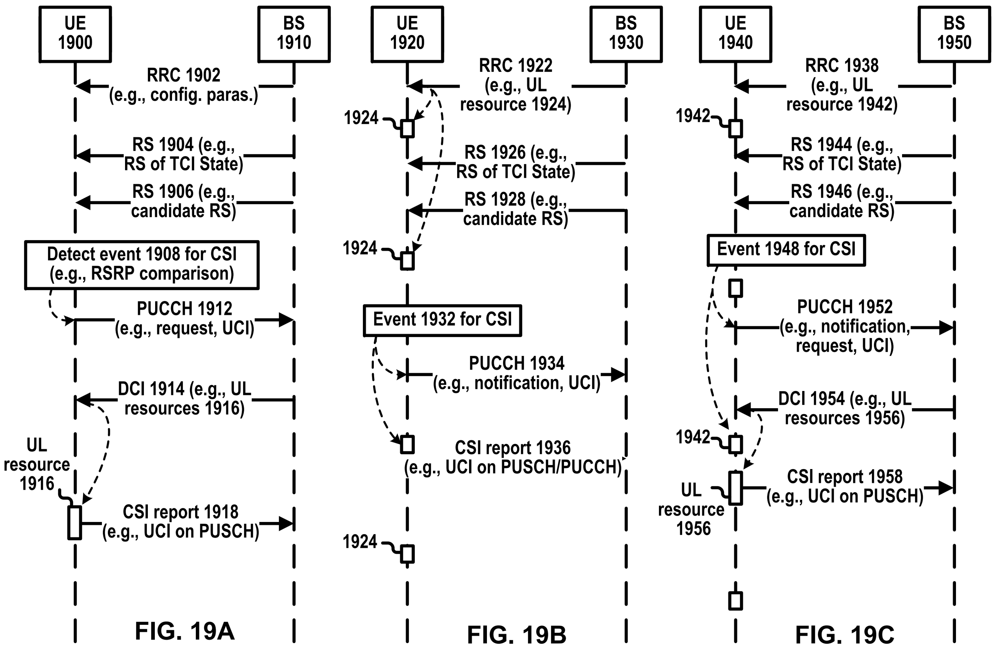

FIGs. 19A, 19B, and 19C illustrate example procedures for CSI reporting triggered (initiated) by the wireless device independently of the network. In periodic CSI reporting, semi-persistent CSI reporting, and aperiodic CSI reporting as illustrated in FIGs. 18A, 18B, and 18C, respectively, the network acts as a scheduler of CSI reporting and triggers the wireless device to transmit CSI reports. In the CSI reporting illustrated in FIGs. 19A, 19B, and 19C, the wireless device initiates (and triggers) CSI reporting. The example procedures in FIGs. 19A, 19B, and 19C may be used to provide the network with CSI for use in updating a (current) TCI state, such as a TCI state used in the unified TCI framework (e.g., for downlink, uplink, and/or both downlink and uplink) as illustrated in FIG. 17B.

In the present disclosure, CSI reporting triggered by a wireless device may be referred to event-driven CSI reporting, event-based CSI reporting, UE-initiated CSI reporting, UE-initiated beam reporting, or UE-initiated beam management. Similarly, a procedure for CSI reporting triggered by the wireless device may be referred to as an event-driven CSI reporting procedure, an event-based CSI reporting procedure, a UE-initiated CSI reporting procedure, a UE-initiated beam reporting procedure, or a UE-initiated beam management procedure. A CSI report, based on CSI reporting triggered by the wireless device, may be referred to as an event-driven CSI report, an event-based CSI report, a UE-initiated CSI report, a UE-initiated beam report, or a UE-initiated beam management report. Furthermore, the terms "event-driven," "event-based," "event-triggered," "UE-initiated," "UE-triggered," "terminal-initiated," and "terminal-triggered" may be used to refer to CSI reporting triggered by a wireless device and CSI reports based on the same.

FIG. 19A illustrates a first mode/scheme of UE-initiated CSI reporting in which a wireless device 1900 uses (dynamic) uplink grants to transmit UE-initiated CSI reporting to a base station 1910. FIG. 19B illustrates a second mode/scheme of UE-initiated CSI reporting in which a wireless device 1920 uses preconfigured uplink resources for reporting UE-initiated CSI reports to a base station 1930. FIG. 19C illustrates a scenario in which a wireless device 1940 and a base station 1950 use a combination of the first mode of FIG. 19A (using dynamic uplink grants) and the second mode of FIG. 19B (using preconfigured uplink resources) for transmitting UE-initiated CSI reporting.

As illustrated in FIG. 19A, wireless device 1900 receives one or more RRC messages 1902 from base station 1910. One or more RRC messages 1902 may indicate, or comprise, one or more CSI reporting configuration parameters for CSI reporting (e.g., UE-initiated CSI reporting).

The one or more CSI reporting configuration parameters, in one or more RRC messages 1902, may comprise a report configuration type parameter. The report configuration type parameter may indicate that the CSI reporting, of the one or more CSI reporting configuration parameters, is based on wireless device 1900 detecting an event. For example, the report configuration type parameter may be set to event-triggered (or UE-initiated).

The event may be a result from a comparison of a radio link quality of a reference signal to a reference signal of a TCI state. The reference signal of the TCI state may be referred to as a current reference signal or a reference signal of a current TCI state (e.g., a TCI state that has been indicated by a MAC CE for downlink and/or uplink or a TCI state that has been activated by a MAC CE and indicated by a DCI, as discussed in connection with FIG. 17B). A QCL type of the reference signal of the TCI, used for the comparison, may be QCL-Type D. The reference signal that wireless device 1900 compares to the current reference signal of the TCI state, for detecting the event, may be referred to a candidate reference signal.

In an example, the event may be that the radio link quality of the candidate reference signal is a threshold value better than a radio link quality of a reference signal of a TCI state. For example, the event may be that the radio link quality of the candidate reference signal is better (e.g., higher) than a radio link quality of a current reference signal of a TCI state by a threshold value. That is, the amount that the radio link quality of the candidate reference signal is better (e.g., higher or greater than) the radio link quality of the current reference signal of the TCI state may be greater than, or equal to, a threshold value.

One or more RRC messages 1902 may indicate the threshold value for detecting the event. In another example, the threshold value may be preconfigured (e.g., predetermined without being signaled). The threshold value may be an RSRP value, an RSRP offset, an SINR value, or an SINR offset. Similarly, the radio link quality may be a RSRP, a layer-1 RSRP, or a signal to interference-and-noise ratio (SINR). The radio link quality may be referred to as a report quantity. One or more RRC messages 1902 may indicate in the radio link quality to report (e.g., a report quantity).

The one or more CSI reporting configuration parameters may comprise a CSI resource parameter indicating a list of candidate reference signals. The list of candidate reference signals may be for CSI reporting triggered by the wireless device based on detecting the event. The list of candidate reference signals may be referred to as a list of candidate reference signals for UE-initiated CSI reporting or a reference signal resource set for UE-initiated CSI reporting.

In an example, the list of candidate reference signals may be a (e.g., UE-specific or dedicated) list of reference signals for CSI reporting triggered by wireless device 1900. In another example, the list of candidate reference signals may be for a cell (e.g., common among wireless devices in the first cell). In another example, the list of reference signals for CSI reporting may be reference signals of TCI states indicated (e.g., configured) by one or more RRC messages 1902. In another example, the list of reference signals for CSI reporting may be reference signals of TCI states activated by a MAC CE.

The one or more CSI reporting configuration parameters, indicated by one or more RRC messages 1902, may comprise an ID of a reference signal (resource) configuration. The reference signal configuration may be a CSI resource configuration ID. The reference signal configuration may indicate a list of one or more CSI-RS resource sets. The reference signals of the one or more CSI-RS resource sets may be CSI-RSs or SSBs.

The one or more CSI reporting configuration parameters may indicate PUCCH resources. The one or more CSI reporting configuration parameters may indicate a PUCCH resource among PUCCH resources of an uplink BWP. For example, the one or more CSI reporting configuration parameters, of one or more RRC messages 1902, may comprise an ID of a PUCCH resource among (IDs of) PUCCH resources of an uplink BWP.

In the first mode, the one or more CSI reporting configuration parameters may not indicate uplink resources for (transmitting) the CSI reporting. That is, the one or more CSI reporting configuration parameters may not indicate the uplink resources (e.g., PUSCH resources, PUCCH resources) for transmitting CSI reports triggered by wireless device 1900 based on detecting an event. The absence of an indication of the uplink resources to be used for transmitting CSI reports triggered by wireless device 1900 may (implicitly) indicate that the CSI reporting configuration parameters are for a first mode of CSI reporting in which the uplink resources must be requested from base station 1910 (e.g., a request for a dynamic grant).

The one or more CSI reporting configuration parameters may comprise a parameter indicating that CSI reporting, triggered by wireless device 1900 based on detecting the event (e.g., UE-initiated or event-driven CSI reporting), is enabled or activated. In an embodiment, the parameter may indicate that CSI reporting is enabled, or activated, for a cell. In another embodiment, the parameter may indicate that CSI reporting is enabled, or activated, for an uplink BWP. Additionally or alternatively to the implicit indication, the parameter (or another parameter) may (explicitly) indicate a mode that is being configured among the first mode and the second mode.

The one or more CSI reporting configuration parameters may comprise one or more timer values of one or more timers for detecting the event. Each of the one or more timers may be associated with at least one candidate reference signal among the one or more candidate reference signals.

The one or more CSI reporting configuration parameters may comprise one or more maximum count values of one or more counters of a number of times the event is detected, for one or more candidate reference signals. Each of the one or more counters may be incremented (e.g., up to an associated maximum count value among the one or more maximum count values) in response to receiving an indication (e.g., from a PHY layer of wireless device 1900) that the one or more candidate reference signals satisfy the event. Each of the one or more counters may be associated with a (respective) candidate reference signal.

The one or more CSI reporting configuration parameters may comprise, or indicate, one or more configuration parameters of a UCI for UE-initiated CSI reporting. The one or more configuration parameters of the UCI for UE-initiated CSI reporting may indicate a PUCCH resource, from among PUCCH resources in an uplink BWP, configured for the UCI for UE-initiated CSI reporting. The one or more configuration parameters of the UCI for UE-initiated CSI reporting indicate a periodicity and offset of the UCI for UE-initiated CSI reporting.

After receiving one or more RRC messages 1902, wireless device 1900 receives a reference signal 1904, of a TCI state, from base station 1910. Reference signal 1904 is a current reference signal of a TCI (an indicated TCI state by MAC CE and/or DCI for downlink and/or uplink). As illustrated, wireless device 1900 receives a reference signal 1906. Reference signal 1906 is a candidate reference signal for CSI reporting triggered by wireless device 1900. Reference signal 1906 may be from a list of candidate reference signals in one or more RRC messages 1902. As another example, reference signal 1906 may be a reference signal of a TCI state among the (e.g., MAC CE) activated TCI states (other than reference signal 1904). In yet another example, reference signal 1906 may be a reference signal of a TCI state among the (e.g., RRC) configured TCI states.

In an example, reference signal 1904 of the TCI state may be a reference signal (e.g., CSI-RS) indicated by the TCI state. A configuration of the TCI state may comprise a reference signal identifier/index indicating/identifying the reference signal 1904 of the TCI state.

In an example, reference signal 1904 of the TCI state may be a source reference signal (e.g., SSB) that is quasi co-located with a reference signal indicated by the TCI state. A configuration of the TCI state may comprise a reference signal identifier/index indicating/identifying the reference signal. The reference signal may be quasi co-located with the reference signal 1904.

FIG. 19A illustrates that wireless device 1900 detects an event 1908 for CSI reporting (e.g., that triggers CSI reporting). For example, as an example of event 1908, wireless device 1900 may detect that a radio link quality (e.g., L1-RSRP, L1-SINR) of reference signal 1906 is a threshold value better than (e.g., greater than by at least a threshold value) than a radio link quality of reference signal 1904 of the TCI state.

Based on detecting event 1908 for CSI reporting, wireless device 1900 transmits PUCCH transmission 1912. Wireless device 1900 may transmit PUCCH transmission 1912 via one or more PUCCH resources indicated by one or more RRC messages 1902. For example, PUCCH transmission 1912 may be transmitted via the PUCCH resource indicated by one or more RRC messages 1902.

PUCCH transmission 1912 requests uplink resources for transmitting a CSI report. The uplink resources may be PUSCH resources. A PUCCH format of PUCCH transmission 1912 may be PUCCH format 0 or PUCCH format 1. In yet another example, PUCCH transmission 1912 may be a UCI.

After transmitting PUCCH transmission 1912, wireless device 1900 receives DCI 1914 from base station 1910. DCI 1914 indicates uplink resources 1916 for transmitting CSI reporting based on wireless device 1900 detecting event 1908. For example, DCI 1914 may comprise an uplink grant indicating uplink resources 1916. Uplink resources 1916 may be PUSCH resources.

After receiving DCI 1914, wireless device 1900 transmits a CSI report 1918 via uplink resources 1916. For example, CSI report 1918 may be a UCI (e.g., CSI report 1918 may be a type of UCI). Wireless device 1900 may transmit the UCI on uplink resources 1916. The UCI (e.g., CSI report 1918) may be multiplexed on uplink resources 1916 (indicated by DCI 1914).

CSI report 1918 may comprise one or more radio link qualities and/or IDs of reference signals. For example, CSI report 1918 may comprise a radio link quality of (candidate) reference signal 1906. In another example, CSI report 1918 may comprise an ID of reference signal 1906. In another example, CSI report 1918 may comprise a radio link quality of (current) reference signal 1904 of the (indicated or current) TCI state. In yet another example, CSI report 1918 may comprise a plurality of radio link qualities of a plurality of candidate reference signals.

The number of radio link qualities and/or reference signals indicated in CSI report 1918 may be one, greater than one, or less than or equal to a maximum number of radio link qualities for CSI reporting (e.g., one or more RRC messages 1902 may comprise a parameter indicating the maximum number of radio link qualities for CSI reporting triggered by wireless device 1900).

The one or more radio link qualities indicated by CSI report 1918 may be absolute values, or differential values, of one or more radio link qualities of reference signals. The radio link qualities may be RSRP values, L1-RSRP values, and/or SINR values.

In an example, wireless device 1900 may monitor, detect, and/or report one or more events among a plurality of events for reporting CSI. A first event may be that a radio link quality of a candidate reference signal is a threshold value better than a radio link quality of a current reference signal of a TCI state. A second event may be that a radio link quality of a candidate reference signal is worse than a threshold. A third event may be that a radio link quality of a candidate reference signal is better than a threshold. A fourth event may be that a radio link quality of a reference signal, of a TCI state indicated by a control command, is worse than a first threshold and a radio link quality of at least one candidate reference signal is better than a second threshold. A fifth event may be that a difference between a radio link quality of a reference signal, of a TCI state indicated by a control command (e.g., DCI or MAC CE), and a radio link quality of at least one candidate reference signal is lower than a threshold. A sixth event may be that a radio link quality of the reference signal, of the TCI state indicated by the control command, is not among a number of candidate reference signals with a highest radio link qualities. A seventh event may be that a radio link quality of at least one candidate reference signal is a threshold value better than a reference signal of a TCI state, indicated by a control command, with a worst radio link quality among reference signals of TCI states indicated by the control command. An eighth event may be that a radio link quality of at least one candidate reference signal is a threshold value better than a reference signal of a TCI state, indicated by a control command, with a highest radio link quality among reference signals of TCI states indicated by the control command. A ninth event may be that a radio link quality of a number of candidate reference signals become a threshold value better than the reference signal of the TCI state indicated by the control command. A tenth event may be that a radio link quality of at least one candidate reference signal becomes a threshold value better than a reference signal configured by one or more RRC messages. The one or more events may comprise any one or any combination of the first, second, third, fourth, fifth, sixth, seventh, eighth, ninth, and tenth events. Furthermore, wireless device 1900 may monitor, detect, and/or report events other than those listed above.

CSI report 1918 may comprise an ID of the event. The ID of the event may be referred to as an event ID. Each of the events among a plurality of events may be associated with an event ID. For example, a first value of the event ID may indicate that the first event is detected (or satisfied). A second value of the event ID may indicate that the second event is detected. A third value of the event ID may indicate that the third event is detected. A fourth value of the event ID may indicate that the fourth event is detected. A fifth value of the event ID may indicate that the fifth event is detected. A sixth value of the event ID may indicate that the sixth event is detected. A seventh value of the event ID may indicate that the seventh event is detected. An eighth value of the event ID may indicate that the eighth event is detected. A ninth value of the event ID may indicate that the ninth event is detected. A tenth value of the event ID may indicate that the tenth event is detected.

Additionally or alternatively, PUCCH transmission 1912 may comprise, or indicate, an event ID. As an example of (implicitly) indicating an event ID, a set of PUCCH resources for PUCCH transmission 1912 may be associated with an event ID among the plurality of event IDs. Based on receiving PUCCH transmission 1912 via the set of PUCCH resources, base station 1910 may determine (e.g., infer) that the PUCCH transmission 1912 is for the associated event ID.

One or more RRC messages 1902 may comprise a list of the plurality of events and/or event IDs of the plurality of events. Each of the event IDs in CSI report 1918 (and/or PUCCH transmission 1912) may be associated with a respective reference signal (e.g., of a candidate reference signal or a reference signal of a TCI state) in CSI report 1918 (and/or PUCCH transmission 1912).

FIG. 19B illustrates a second mode of CSI reporting in which wireless device 1920 uses preconfigured uplink resources for reporting CSI, to base station 1930, based on wireless device 1920 detecting an event based on a radio link quality of a reference signal. The procedure, messages, and parameters in second mode illustrated in FIG. 19B may be the same as those discussed above in the first mode illustrated in FIG. 19A and the specific differences between the procedure, messages, and parameters in the second mode for CSI reporting based on preconfigured uplink resources will be discussed below.

As illustrated, wireless device 1920 receives one or more RRC messages 1922. One or more RRC messages 1922 may comprise, or indicate, the one or more CSI reporting configuration parameters (and other parameters) of one or more RRC messages 1902 (from FIG. 19A).

In contrast to the one or more CSI reporting configuration parameters of one or more RRC messages 1902, the one or more CSI reporting configuration parameters of one or more RRC messages 1922 indicate uplink resources 1924 for (transmitting) CSI reporting triggered by wireless device 1920. Uplink resources 1924 may be PUSCH resources or PUCCH resources for transmitting CSI reporting triggered by the wireless device 1920.

Base station 1930 may transmit the one or more CSI reporting configuration parameters of one or more RRC messages 1922 to wireless device 1920 based on receiving a UE-capability message from wireless device 1920 indicating that wireless device 1920 supports the second mode.

The presence of an indication of uplink resources 1924 may indicate to wireless device 1920 that the one or more CSI reporting configuration parameters, of one or more RRC messages 1922, are for the second mode of CSI reporting. In another example, the one or more CSI reporting configuration parameters of one or more RRC messages 1922 may comprise a parameter indicating that one or more CSI reporting configuration parameters are for reporting (e.g., UE-initiated) CSI on preconfigured uplink resources (e.g., the second mode). The parameter may indicate that the (e.g., UE-initiated) CSI reporting on preconfigured uplink resources is enabled or activated. Additionally or alternatively, the parameter (or another parameter) may (explicitly) indicating a mode that is being configured among the first mode and the second mode.

One or more RRC messages 1922 may indicate a periodicity of uplink resources 1924 (e.g., a configured (uplink) grant). The periodicity of uplink resources 1924 is illustrated in FIG. 19B. Before transmitting CSI reporting, wireless device 1920 transmits a notification to base station 1930. For example, FIG. 19B illustrates that wireless device 1920 receives a reference signal 1926. Similar to reference signal 1904 of FIG. 19A, reference signal 1926 is a (current) reference signal of a TCI state. Wireless device 1920 receives a reference signal 1928. Similar to reference signal 1906 of FIG. 19A, reference signal 1928 is a candidate reference signal.

After receiving reference signal 1926 and reference signal 1928, wireless device 1920 detects an event 1932 for CSI reporting (e.g., that triggers CSI reporting). Event 1932 may be the same as event 1908 of FIG. 19A. For example, for event 1932, wireless device 1920 may detect that a radio link quality (e.g., L1-RSRP, L1-SINR) of reference signal 1928 is a threshold value better than (e.g., greater than by at least a threshold value) than a radio link quality (e.g., L1-RSRP) of reference signal 1926 of the TCI state.

Based on detecting event 1932 for (UE-initiated) CSI reporting, wireless device 1920 transmits PUCCH transmission 1934 to base station 1930. Wireless device 1900 may transmit PUCCH transmission 1912 via one or more PUCCH resources indicated by one or more RRC messages 1922. As discussed above, one or more RRC messages 1922 indicate uplink resources 1924 for transmitting CSI reporting triggered by wireless device 1920. In the second mode, PUCCH transmission 1934 notifies that CSI reporting is to be transmitted on uplink resources 1924.

A PUCCH format of PUCCH transmission 1934 may be PUCCH format 0 or PUCCH format 1. In yet another example, PUCCH transmission 1934 may be a UCI.

After transmitting PUCCH transmission 1934, wireless device 1920 transmits a CSI report 1936 via uplink resources 1924. CSI report 1936 may be a UCI. For example, wireless device 1920 may transmit the UCI on the uplink resources 1924. The UCI (e.g., CSI report 1936) may be multiplexed on uplink resources 1924 (on PUSCH). CSI report 1936 may indicate, or comprise, the same information as CSI report 1918 of FIG. 19A.

The (advance) notification, provided by PUCCH transmission 1934, may enable the network (e.g., base station 1930) to indicate (e.g., allocate) uplink resources 1924 to multiple wireless devices and reassign uplink resources 1924 prior to the (notified) CSI reporting is transmitted. In order to reassign uplink resources 1924 or otherwise prevent a collision (interference) from occurring on uplink resources 1924 when uplink resources 1924 are configured to multiple wireless devices, base station 1930 may transmit a reconfiguration (e.g., via RRC message with modified values for the parameters of one or more RRC messages 1922). In another example, the network uses a combination of the first mode and the second mode as discussed below in FIG. 19C.

FIG. 19C illustrates a scenario in which wireless device 1940 and base station 1950 use a combination of the first mode of FIG. 19A (using dynamic uplink grants) and the second mode of FIG. 19B (using preconfigured uplink resources) for reporting CSI triggered by wireless device 1940.

As illustrated, wireless device 1940 receives one or more RRC messages 1938. One or more RRC messages 1938 indicate uplink resources 1942 for transmitting CSI reporting triggered by wireless device 1940 (similar to one or more RRC messages 1922 and uplink resources 1924). After receiving one or more RRC messages 1938, wireless device 1940 receives a reference signal 1944, which may be a (current) reference signal of an (indicated) TCI state (similar to reference signal 1904 and reference signal 1926). Wireless device 1940 receives a reference signal 1946, which may be a candidate reference signal (similar to reference signal 1906 and reference signal 1928).

Based on (measurements of radio link qualities of) reference signal 1944 and reference signal 1946, wireless device 1940 detects an event 1948 for CSI reporting (e.g., that triggers UE-initiated CSI reporting). Event 1948 may be the same as event 1908 and/or event 1932 of FIGs. 19A and 19B, respectively.

Based on detecting event 1948, wireless device 1940 transmits a PUCCH transmission 1952 to base station 1950. Like PUCCH transmission 1934, PUCCH transmission notifies base station 1950 that CSI reporting is to be transmitted on uplink resources 1942.

In the example in FIG. 19C, base station 1950 may determine, after receiving PUCCH transmission 1952, that another wireless device is to transmit on uplink resources 1942. Additionally or alternatively, base station 1950 may determine that another wireless device is to perform a transmission on other radio resources (uplink or downlink) that may interfere (or collide) with the CSI reporting that wireless device 1940 intends to transmit using uplink resources 1942.

After receiving PUCCH transmission 1952, base station 1950 transmits a DCI 1954. DCI 1954 may indicate (alternative) uplink resources in order to avoid inference. For example, as illustrated, DCI 1954 indicates uplink resources 1956. Uplink resources 1956 may be the same as uplink resources 1916. For example, DCI 1954 may comprise an uplink grant indicating uplink resources 1956. Uplink resources 1956 may be PUSCH resources.

Based on receiving DCI 1954, wireless device 1940 transmits a CSI report 1958 via uplink resource 1956. Wireless device 1940 may transmit CSI report 1958 on uplink resources 1956 instead of transmitting CSI report 1958 on the preconfigured uplink resources (i.e., uplink resources 1942). For example, based on receiving DCI 1954, wireless device 1940 may cancel (or skip) transmitting CSI report 1958 on the preconfigured resources.

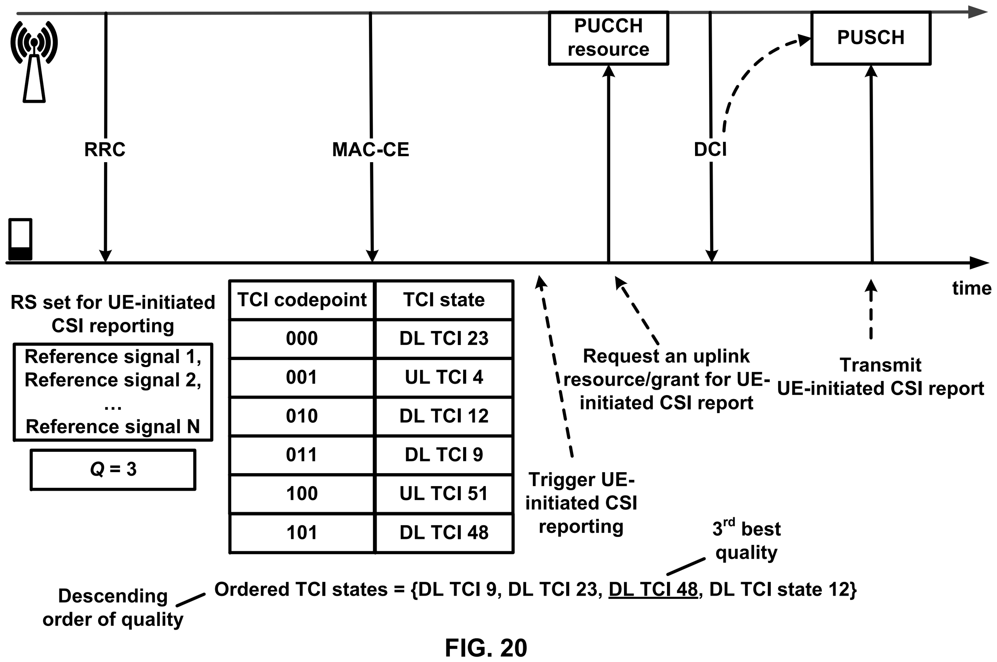

FIG. 20 illustrates an example of a first mode for UE-initiated CSI reporting as per an aspect of an embodiment of the present disclosure.

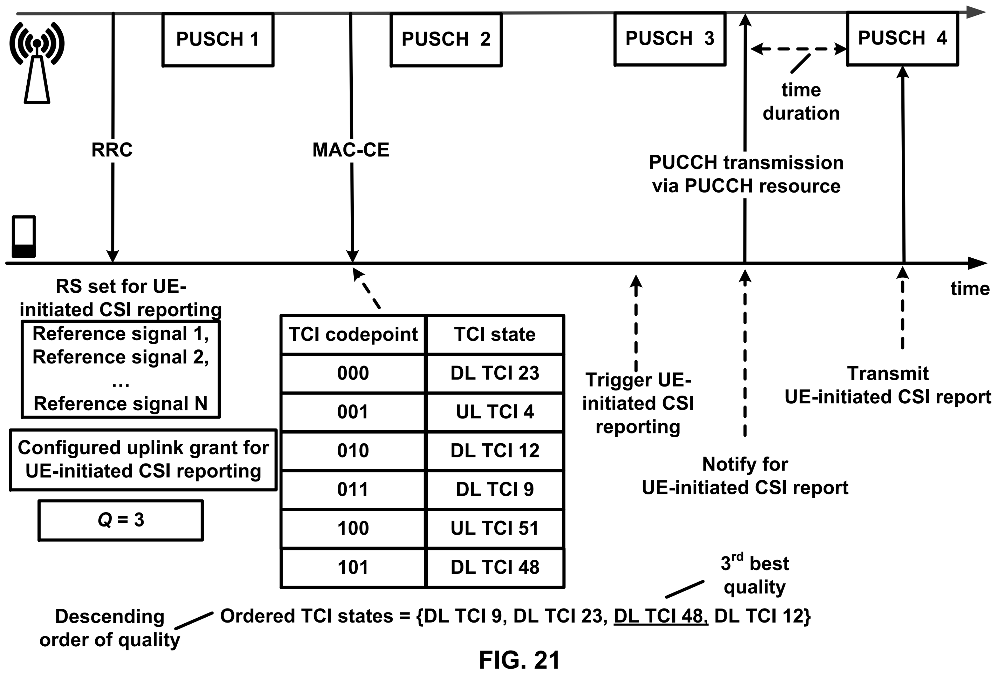

FIG. 21 illustrates an example of a second mode for UE-initiated CSI reporting as per an aspect of an embodiment of the present disclosure.

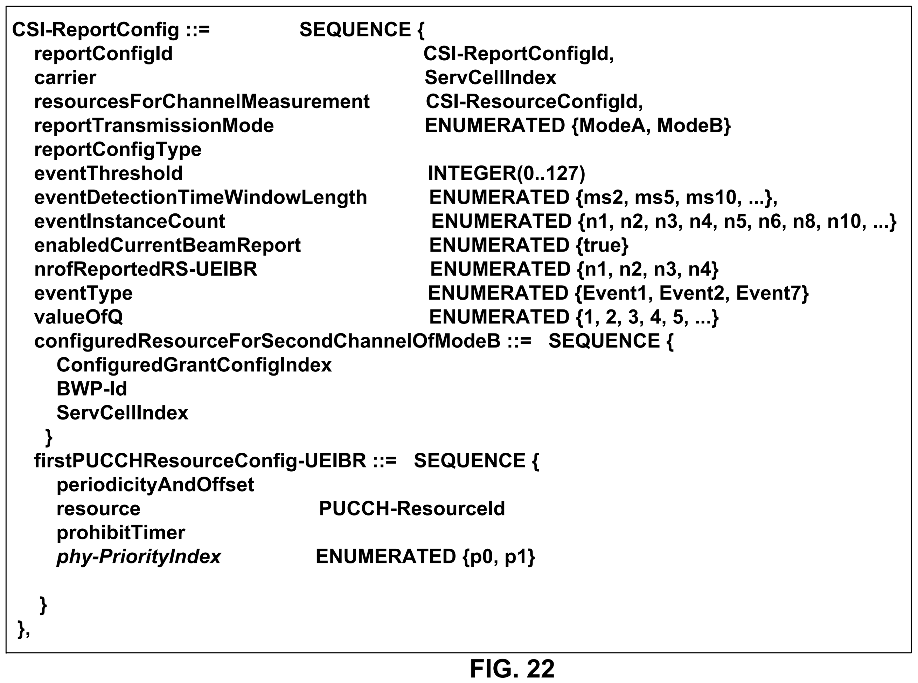

FIG. 22 illustrates an example of a CSI report configuration as per an aspect of an embodiment of the present disclosure.

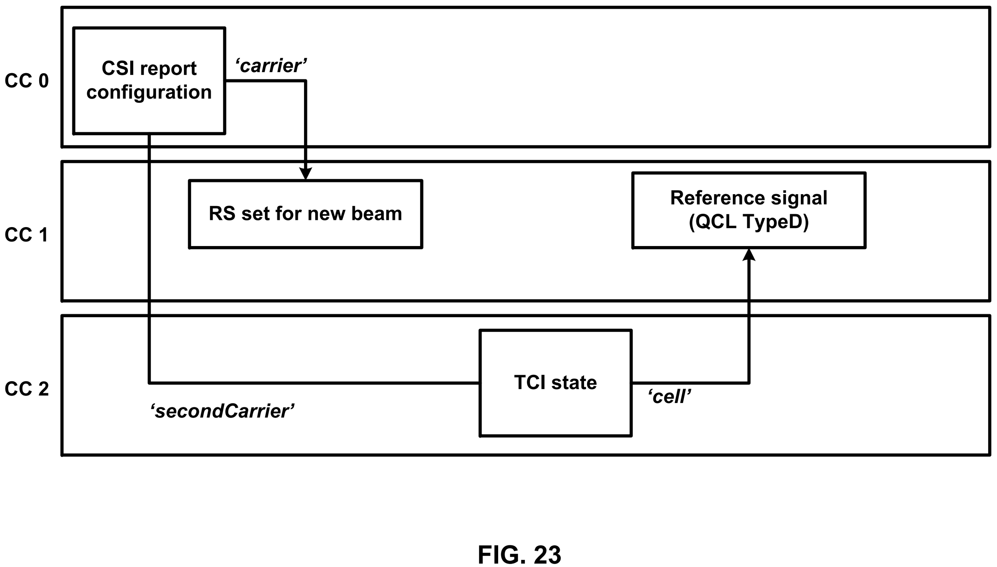

FIG. 23 illustrates an example of a cross-cell CSI reporting as per an aspect of an embodiment of the present disclosure.

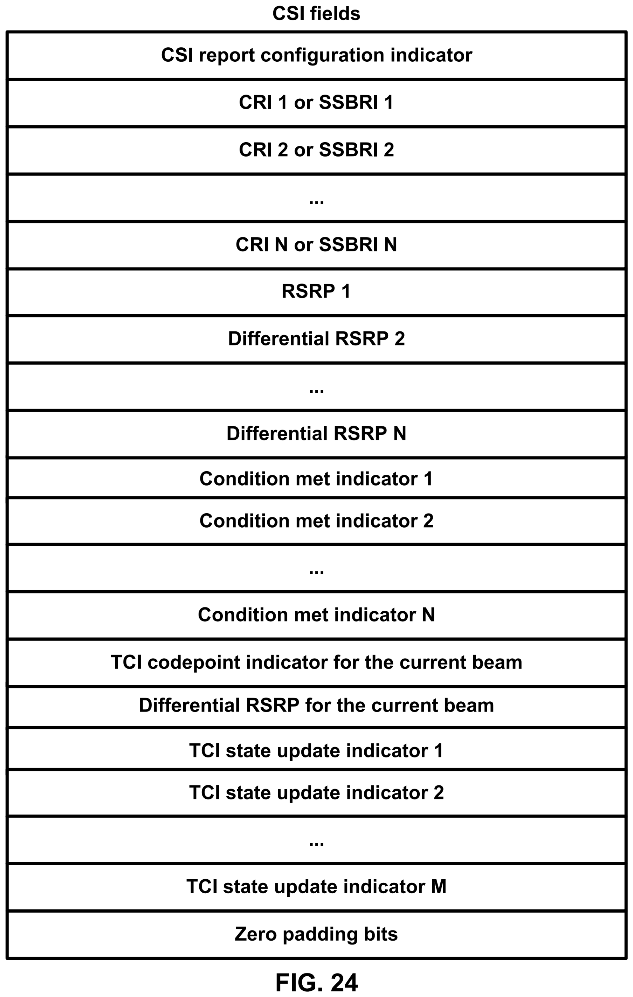

FIG. 24, FIG. 25A, FIG. 25B, FIG. 25C, FIG. 25D, FIG. 26A, and FIG. 26B illustrate examples of CSI report contents as per an aspect of an embodiment of the present disclosure.

In an example, a wireless device may receive one or more messages (e.g., RRC in FIG. 20 and FIG. 21). In an example, the wireless device may receive the one or more messages from a base station. In an example, the wireless device may receive the one or more messages from a relay node. In an example, the wireless device may receive the one or more messages from another wireless device (e.g., TRP, vehicle, remote radio head, and the like).

The one or more messages may be, for example, one or more RRC messages. The one or more messages may be, for example, one or more RRC reconfiguration messages.

The one or more messages may comprise one or more configuration parameters. In an example, the one or more configuration parameters may be RRC configuration parameter(s). In an example, the one or more configuration parameters may be RRC reconfiguration parameter(s).

In an example, the one or more configuration parameters may be for one or more cells.

The one or more cells may comprise a first cell. The first cell may be, for example, a serving cell. In an example, at least one configuration parameter of the one or more configuration parameters may be for the first cell. In an example, the first cell may be a primary cell (PCell). In an example, the first cell may be a primary secondary cell (PSCell). In an example, the first cell may be a secondary cell (SCell). The first cell may be a secondary cell configured with PUCCH (e.g., PUCCH SCell). In an example, the first cell may be an unlicensed cell, e.g., operating in an unlicensed band. In an example, the first cell may be a licensed cell, e.g., operating in a licensed band. In an example, the first cell may operate in a first frequency range (FR1). The FR1 may, for example, comprise frequency bands below 6 GHz. In an example, the first cell may operate in a second frequency range (FR2). The FR2 may, for example, comprise frequency bands from 24 GHz to 52.6 GHz. In an example, the first cell may operate in a third frequency range (FR3). The FR3 may, for example, comprise frequency bands from 52.6 GHz to 71 GHz. The FR3 may, for example, comprise frequency bands starting from (or above) 52.6 GHz.

In an example, the wireless device may perform uplink transmissions (e.g., PUSCH, PUCCH, PUCCH) vialof the first cell in a first time and in a first frequency. The wireless device may perform downlink receptions (e.g., PDCCH, PDSCH) via/of the first cell in a second time and in a second frequency. In an example, the first cell may operate in a time-division duplex (TDD) mode. In the TDD mode, the first frequency and the second frequency may be the same. In the TDD mode, the first time and the second time may be different. In an example, the first cell may operate in a frequency-division duplex (FDD) mode. In the FDD mode, the first frequency and the second frequency may be different. In the FDD mode, the first time and the second time may be the same.

In an example, the wireless device may be in an RRC connected mode. In an example, the wireless device may be in an RRC idle mode. In an example, the wireless device may be in an RRC inactive mode.

In an example, the first cell may comprise a plurality of BWPs. The plurality of BWPs may comprise one or more uplink BWPs comprising an uplink BWP of the first cell. The plurality of BWPs may comprise one or more downlink BWPs comprising a downlink BWP of the first cell.

In an example, a BWP of the plurality of BWPs may be in one of an active state and an inactive state. In an example, in the active state of a downlink BWP of the one or more downlink BWPs, the wireless device may monitor a downlink channel/signal (e.g., PDCCH, DCI, CSI-RS, PDSCH) on/for/via the downlink BWP. In an example, in the active state of a downlink BWP of the one or more downlink BWPs, the wireless device may receive a PDSCH on/via/for the downlink BWP. In an example, in the inactive state of a downlink BWP of the one or more downlink BWPs, the wireless device may not monitor a downlink channel/signal (e.g., PDCCH, DCI, CSI-RS, PDSCH) on/via/for the downlink BWP. In the inactive state of a downlink BWP of the one or more downlink BWPs, the wireless device may stop monitoring (or receiving) a downlink channel/signal (e.g., PDCCH, DCI, CSI-RS, PDSCH) on/via/for the downlink BWP. In an example, in the inactive state of a downlink BWP of the one or more downlink BWPs, the wireless device may not receive a PDSCH on/via/for the downlink BWP. In the inactive state of a downlink BWP of the one or more downlink BWPs, the wireless device may stop receiving a PDSCH on/via/for the downlink BWP.

In an example, in the active state of an uplink BWP of the one or more uplink BWPs, the wireless device may transmit an uplink signal/channel (e.g., PUCCH, preamble, PUSCH, PRACH, PUCCH, etc.) on/via the uplink BWP. In an example, in the inactive state of an uplink BWP of the one or more uplink BWPs, the wireless device may not transmit an uplink signal/channel (e.g., PUCCH, preamble, PUSCH, PRACH, PUCCH, etc.) on/via the uplink BWP.

In an example, the wireless device may activate the downlink BWP of the one or more downlink BWPs of the first cell. In an example, the activating the downlink BWP may comprise setting (or switching to) the downlink BWP as an active downlink BWP of the first cell. In an example, the activating the downlink BWP may comprise setting the downlink BWP in the active state. In an example, the activating the downlink BWP may comprise switching the downlink BWP from the inactive state to the active state.

In an example, the wireless device may activate the uplink BWP of the one or more uplink BWPs of the first cell. In an example, the activating the uplink BWP may comprise that the wireless device sets (or switches to) the uplink BWP as an active uplink BWP of the first cell. In an example, the activating the uplink BWP may comprise setting the uplink BWP in the active state. In an example, the activating the uplink BWP may comprise switching the uplink BWP from the inactive state to the active state.

In an example, the one or more configuration parameters may be for the (active) downlink BWP of the first cell. In an example, at least one configuration parameter of the one or more configuration parameters may be for the downlink BWP of the first cell.

In an example, the one or more configuration parameters may be for the (active) uplink BWP of the first cell. In an example, at least one configuration parameter of the one or more configuration parameters may be for the uplink BWP of the first cell.

The one or more configuration parameters may indicate a subcarrier spacing (or a numerology) for the downlink BWP.

The one or more configuration parameters may indicate a subcarrier spacing (or numerology) for the uplink BWP.

A value of the subcarrier spacing (of the downlink BWP and/or the uplink BWP) may be/indicate, for example, 15 kHz (mu = 0). A value of the subcarrier spacing may be/indicate, for example, 30 kHz (mu = 1). A value of the subcarrier spacing may be/indicate, for example, 60 kHz (mu = 2). A value of the subcarrier spacing may be/indicate, for example, 120 kHz (mu = 3). A value of the subcarrier spacing may be/indicate, for example, 240 kHz (mu = 4). A value of the subcarrier spacing may be/indicate, for example, 480 kHz (mu = 5). A value of the subcarrier spacing may be/indicate, for example, 960 kHz (mu = 6). For example, 480 kHz may be valid/applicable in FR3. For example, 960 kHz may be valid/applicable in FR3. For example, 240 kHz may be valid/applicable in FR3. For example, 120 kHz may be valid/applicable in FR3.

The use of the term "UE-initiated CSI report (or UE-initiated CSI reporting)" is exemplary and is not intended to limit the scope of the invention. Alternative terms that may be substituted include "CSI report', "CSI report triggered by the wireless device", "CSI report initiated by the wireless device", "event-triggered CSI report (event-triggered CSI reporting)", "event-triggered beam report (event-triggered beam reporting)", "UE-initiated event-triggered CSI report", "event-driven CSI report", "event-based CSI report" and "UE-initiated beam report", among others.

The one or more configuration parameters may comprise one or more CSI reporting configuration parameters (e.g., *CSI-ReportConfig* in FIG. 22) of a CSI report configuration.

The one or more CSI reporting configuration parameters may be configured for/on the first cell (e.g., CC 0 in FIG. 23).

The one or more CSI reporting configuration parameters may comprise a report configuration type parameter (e.g., *reportConfigType* in FIG. 22). A value (e.g., *EventTriggered, UE-initiated, UEIBR,* and the like) of the report configuration type parameter may indicate UE-initiated CSI reporting. The value of the report configuration type parameter may indicate CSI reporting triggered/initiated by the wireless device. The value may be different from *'periodic', 'semiPersistentOnPUCCH', 'semiPersistentOnPUSCH,* and *'aperiodic'.* The one or more CSI reporting configuration parameters may be, for example, for event-triggered CSI reporting (or UE-initiated CSI reporting or UE-initiated beam reporting).

The one or more CSI reporting configuration parameters may indicate a list/set of reference signals (e.g., CSI-RS, SS/PBCH blocks) for UE-initiated CSI reporting (e.g., RS set for UE-initiated CSI reporting in FIG. 20 and FIG. 21, or a candidate RS set or RS set for new beam in FIG. 23). The list/set of reference signals (hereinafter "a list/set of candidate reference signals") may be a list/set of candidate reference signals. The list/set of reference signals may be interchangeably used with the list/set of candidate reference signals. The list/set of reference signals may be interchangeably used with a list/set of reference signal resources.

The one or more CSI reporting configuration parameters may indicate the list/set of candidate reference signals (e.g., CSI-RS, SS/PBCH blocks) for UE-initiated CSI reporting. In an example, the one or more CSI reporting configuration parameters may indicate the list/set of candidate reference signals for use by the wireless device to detect an event (or a trigger-event or for trigger-event detection) that triggers UE-initiated CSI reporting. The one or more CSI reporting configuration parameters may comprise a resource parameter (e.g., *resourcesForChannelMeasurement* in FIG. 22, *newBeamResourceSet, candidateBeamResourceSet,* a reference signal resource parameter, or a reference signal resource set parameter, and the like) indicating the list/set of candidate reference signals. The list/set of candidate reference signals may comprise/indicate one or more reference signals (e.g., Reference signal 1, 2, ..., N in FIG. 20 and FIG. 21). The one or more reference signals (hereinafter "one or more candidate reference signals") may be one or more candidate reference signals. The one or more reference signals may be interchangeably used with the one or more candidate reference signals. The one or more reference signals may be interchangeably used with one or more reference signal resources.

In an example, the one or more CSI reporting configuration parameters may comprise a carrier parameter (e.g., *carrier, ServCellIndex* in FIG. 22) indicating/identifying a second cell (e.g., CC1 in FIG. 23). The carrier parameter may indicate the second cell that the list/set of candidate reference signals are configured/transmitted/located/found. The carrier parameter may be set/equal to a serving cell index/identifier (e.g., *ServCellIndex*) indicating/identifying the second cell.

In an example, the one or more CSI reporting configuration parameters may not comprise a carrier parameter (e.g., *carrier, ServCellIndex* in FIG. 22). The carrier parameter may be absent in the one or more CSI reporting configuration parameters. Based on the carrier parameter being absent in the one or more CSI reporting configuration parameters, the list/set of candidate reference signals may be configured/transmitted/found/located on the first cell that the one or more CSI reporting configuration parameters are configured for/on. The one or more cells may comprise the second cell.

In an example, the second cell that the list/set of candidate reference signals are configured/transmitted on and the first cell that the one or more CSI reporting configuration parameters are configured for/on may be different. In an example, the second cell that the list/set of candidate reference signals are configured/transmitted on and the first cell that the one or more CSI reporting configuration parameters are configured for/on may be the same.

The second cell that the list/set of candidate reference signals are configured/transmitted on and the first cell that the one or more CSI reporting configuration parameters are configured for/on may be the same, for example, based on the one or more CSI reporting configuration parameters not comprising the carrier parameter.

The second cell that the list/set of candidate reference signals are configured/transmitted on and the first cell that the one or more CSI reporting configuration parameters are configured for/on may be different, for example, based on the one or more CSI reporting configuration parameters comprising the carrier parameter.

The one or more configuration parameters may comprise one or more PDSCH configuration parameters, for example, for a third cell (e.g., CC 2 in FIG. 23). The one or more PDSCH configuration parameters may comprise a TCI state list parameter (e.g., *dl-OrJointTCI-StateList*) indicating a list/set of TCI states. The one or more cells may comprise the third cell.

The list of TCI states may indicate a transmission configuration that includes QCL-relationships between downlink RS(s) in one RS set and PDSCH DMRS port(s), PDCCH DMRS port(s), and CSI-RS. In case of joint mode, the list of TCI states may further indicate a transmission configuration that includes QCL-relationships between downlink RS(s) in one RS set and PUSCH, PUCCH and SRS. Each TCI state in the list of TCI states may provide/indicate a respective reference signal for quasi co-location for DM-RS of PDSCH and DM-RS of PDCCH in a BWP/CC, for CSI-RS. Each TCI state in the list of TCI states may provide/indicate a respective reference signal with *qcl-Type* set to 'typeD' for determining uplink transmission spatial filter and/or transmission power for dynamic-grant and configured-grant based PUSCH and PUCCH resource in a BWP/CC, and SRS.

The wireless device may receive an activation command (e.g., MAC-CE, DCI, MAC-CE in FIG. 20 and FIG. 21) indicating activation of one or more TCI states from/among the list of TCI states. The activation command may be used to map the one or more TCI states to one or more TCI codepoints. The wireless device may map the one or more TCI states to the one or more TCI codepoints. The wireless device may map the one or more TCI states to the one or more TCI codepoints of TCI field in a DCI format (e.g., DCI format 1_1/1_2/1_3). Each TCI codepoint of the one or more TCI codepoints may indicate/have/comprise (or be mapped to) respective TCI state(s) of the one or more TCI states. For example, each TCI codepoint may indicate a single TCI state (e.g., a single joint TCI state, a single downlink TCI state, a single uplink TCI state, and the like). Each TCI state of the one or more TCI states may be mapped to a respective TCI codepoint of the one or more TCI codepoints.

The one or more TCI states may be, for example, one or more joint TCI states that are applicable for both uplink transmissions (e.g., PUSCH/PUCCH/SRS) via the third cell and downlink receptions (e.g., PDCCH/PDSCH/CSI-RS) via the third cell.

The one or more TCI states may comprise, for example, one or more downlink TCI states applicable and one or more uplink TCI states. The one or more downlink TCI states may be applicable for downlink receptions (e.g., PDCCH/PDSCH/CSI-RS) via the third cell. The one or more uplink TCI states may be applicable for uplink transmissions (e.g., PUSCH/PUCCH/SRS) via the third cell.

The one or more downlink TCI states (hereinafter "one or more activated TCI states") may be one or more activated TCI states. The one or more activated TCI states may be, for example, the one or more downlink TCI states.

The one or more joint TCI states (hereinafter "one or more activated TCI states") may be one or more activated TCI states. The one or more activated TCI states may be, for example, the one or more joint TCI states.

The one or more activated TCI states may not comprise any uplink TCI state.

For example, in FIG. 20 and FIG. 21, the one or more TCI states are DL TCI 23, UL TCI 4, DL TCI 12, DL TCI 9, UL TCI 51, and DL TCI 48. The one or more TCI codepoints are TCI codepoint 000, TCI codepoint 001, TCI codepoint 010, TCI codepoint 011, TCI codepoint 100, and TCI codepoint 101. TCI codepoint 000 may indicate (or be mapped to) DL TCI 23. TCI codepoint 001 may indicate (or be mapped to) UL TCI 4. TCI codepoint 010 may indicate (or be mapped to) DL TCI 12. TCI codepoint 011 may indicate (or be mapped to) DL TCI 9. TCI codepoint 100 may indicate (or be mapped to) UL TCI 51. TCI codepoint 101 may indicate (or be mapped to) DL TCI 48. The one or more downlink TCI states are DL TCI 23, DL TCI 12, DL TCI 9, and DL TCI 48. The one or more uplink TCI states are UL TCI 4 and UL TCI 51. The one or more activated TCI states are DL TCI 23, DL TCI 12, DL TCI 9, and DL TCI 48.

The one or more activated TCI states may be mapped to at least one TCI codepoint among the one or more TCI codepoints. The at least one TCI codepoint may indicate (or be mapped to) the one or more activated TCI states. Each TCI codepoint of the at least one TCI codepoint may indicate (or be mapped to) a respective activated TCI state of the one or more activated TCI states. Each TCI codepoint of the at least one TCI codepoint may indicate (or be mapped to) a joint TCI state or a downlink TCI state. For example, in FIG. 20 and FIG. 21, the at least one TCI codepoint are TCI codepoint 000 mapped to DL TCI 23, TCI codepoint 010 mapped to DL TCI 12, TCI codepoint 011 mapped to DL TCI 9, and TCI codepoint 101 mapped to DL TCI 48.

In an example, the first cell that the one or more CSI reporting configuration parameters are configured for/on and the third cell that the wireless device activates the one or more TCI states for may be the same. In an example, the first cell that the one or more CSI reporting configuration parameters are configured for/on and the third cell that the wireless device activates the one or more TCI states for may be different.

In an example, the second cell that the list/set of candidate reference signals are configured/transmitted on and the third cell that the wireless device activates the one or more TCI states for may be the same. In an example, the second cell that the list/set of candidate reference signals are configured/transmitted on and the third cell that the wireless device activates the one or more TCI states for may be different.

The wireless device may receive a control command.

The control command may be, for example, a MAC-CE. The control command may be, for example, a DCI (e.g., DCI format 1_1/1_2/1_3, DCI 1718). The control command may be, for example, a downlink control command/message (e.g., activation command).

The control command may indicate, for the third cell, a TCI state among the one or more TCI states. The wireless device may have the TCI state for the third cell, for example, based on the control command indicating, for the third cell, the TCI state. The wireless device may apply the (indicated) TCI state for/on/to the third cell.

In an example, the TCI state may be a downlink TCI state. The one or more downlink TCI states may comprise the downlink TCI state. The control command may indicate, for downlink receptions (e.g., PDCCH, PDSCH, CSI-RS) via the third cell, the downlink TCI state. The downlink TCI state may be for use by the wireless device for downlink receptions (e.g., PDSCH, PDCCH) via the third cell and not for uplink transmissions (e.g., PUSCH, PUCCH) via the third cell.

In an example, the TCI state may be a joint TCI state. The one or more joint TCI states may comprise the joint TCI state. The control command may indicate, for both downlink receptions (e.g., PDCCH, PDSCH, CSI-RS) via the third cell and uplink transmissions (e.g., PUCCH, PUSCH, SRS) via the third cell, the joint TCI state. The joint TCI state may be for use by the wireless device for both downlink receptions (e.g., PDSCH, PDCCH) and uplink transmissions (e.g., PUSCH, PUCCH) via the third cell.

In an example, a number of the one or more TCI codepoints may be equal to one (e.g., a single TCI codepoint). The single TCI codepoint may indicate the TCI state. The control command indicating the TCI state may be the activation command activating the one or more TCI states, for example, based on the number of the one or more TCI codepoints being equal to one. The one or more joint TCI states may be the TCI state (or the joint TCI state), for example, based on the number of the one or more TCI codepoints being equal to one. The one or more downlink TCI states may be the TCI state (or the downlink TCI state), for example, based on the number of the one or more TCI codepoints being equal to one. The activation command may indicate the TCI state based on the number of the one or more TCI codepoints being equal to one. The control command may be, for example, a MAC-CE.

In an example, a number of the one or more TCI codepoints may be more than one. The control command indicating the TCI state may be different from the activation command activating the one or more TCI states, for example, based on the number of the one or more TCI codepoints being more than one. The wireless device may receive the control command after receiving the activation command. The control command may be, for example, a DCI (e.g., DCI format 1_1/1_2/1_3, DCI 1718). The control command (e.g., DCI format 1_1/1_2/1_3) may comprise a TCI field indicating the TCI state. A value of the TCI field (e.g., '010') may be equal to a TCI codepoint (e.g., TCI codepoint 010), of the one or more TCI codepoints, indicating (or mapped to/with) the TCI state (e.g., DL TCI state 12). The control command may indicate, for the TCI field, the TCI codepoint. The TCI state may be mapped to the TCI codepoint.

In an example, the first cell that the one or more CSI reporting configuration parameters are configured for/on and the third cell that the wireless device applies the (indicated) TCI state to/for may be the same. In an example, the first cell that the one or more CSI reporting configuration parameters are configured for/on and the third cell that the wireless device applies the (indicated) TCI state to/for may be different.

In an example, the second cell that the list/set of candidate reference signals are configured/transmitted on and the third cell that the wireless device applies the (indicated) TCI state to/for may be the same. In an example, the second cell that the list/set of candidate reference signals are configured/transmitted on and the third cell that the wireless device applies the (indicated) TCI state to/for may be different.

The one or more CSI reporting configuration parameters may comprise a parameter (e.g., *CCofIndicatedTCI, CCofIndicateTCI, CCofTCI, targetCCforIndicatedTCI-State, referenceCCforIndicatedTCI-State, carrier2, ServCelllndex, secondCarrier* in FIG. 23) for UE-initiated CSI reporting.

For the second event, the parameter indicate, for example, a cell (or a component carrier (CC)) on which an indicated TCI state used for UE-initiated CSI reporting (or trigger-event detection) is applied. The parameter may indicate, for example, a cell that the wireless device uses a reference signal associated with an indicated TCI state of the cell for UE-initiated CSI reporting. The indicated TCI state of the cell indicated by the parameter may be associated with the current reference signal. The wireless device may measure/assess monitor/determine/assess/measure a radio link quality of the current reference signal, for example, for the UE-initiated CSI reporting. The parameter (or a value of the parameter) may indicate/identify a cell that the indicated TCI state used for the UE-initiated CSI reporting is applied to.

In an example, the one or more CSI reporting configuration parameters may not comprise the parameter (e.g., *CCofIndicatedTCI, CCofIndicateTCI, CCofTCI, targetCCforIndicatedTCI-State, referenceCCforIndicatedTCI-State, carrier2, ServCellIndex, secondCarrier* in FIG. 23). The parameter may be absent in the one or more CSI reporting configuration parameters.

In an example, based on the parameter being absent in the one or more CSI reporting configuration parameters, the cell on which an indicated TCI state used for UE-initiated CSI reporting (or trigger-event detection) is applied is the first cell that the one or more CSI reporting configuration parameters are configured for/on. Based on the parameter being absent in the one or more CSI reporting configuration parameters, the cell that the indicated TCI state used for the UE-initiated CSI reporting is applied to is the first cell that the one or more CSI reporting configuration parameters are configured for/on.

In an example, based on the parameter being absent in the one or more CSI reporting configuration parameters, the cell on which an indicated TCI state used for UE-initiated CSI reporting (or trigger-event detection) is applied is the second cell indicated by the carrier parameter. Based on the parameter being absent in the one or more CSI reporting configuration parameters, the cell that the indicated TCI state used for the UE-initiated CSI reporting is applied to is the second cell indicated by the carrier parameter.

In an example, based on both the carrier parameter and the parameter being absent in the one or more CSI reporting configuration parameters, the cell on which an indicated TCI state used for UE-initiated CSI reporting (or trigger-event detection) is applied is the first cell that the one or more CSI reporting configuration parameters are configured for/on. Based on both the carrier parameter and the parameter being absent in the one or more CSI reporting configuration parameters, the cell that the indicated TCI state used for the UE-initiated CSI reporting is applied to is the first cell that the one or more CSI reporting configuration parameters are configured for/on.

In an example, the parameter (or the value of the parameter) may indicate/identify the third cell (e.g., CC 2 in FIG. 23). The parameter (or the value of the parameter) may indicate/identify the third cell that the indicated TCI state used for the UE-initiated CSI reporting (or used for trigger-event detection) is applied to. The parameter (or the value of the parameter) may be set/equal to a serving cell index/identifier (e.g., *ServCellIndex*) indicating/identifying/of the third cell.

In an example, the second cell that the list/set of candidate reference signals are configured/transmitted on and the third cell that the indicated TCI state used for the UE-initiated CSI reporting (or used for trigger-event detection) is applied to may be different. In an example, the second cell that the list/set of candidate reference signals are configured/transmitted on and the third cell that the indicated TCI state used for the UE-initiated CSI reporting (or used for trigger-event detection) is applied to may be the same.

In an example, the first cell that the one or more CSI reporting configuration parameters are configured for/on and the third cell that the indicated TCI state used for the UE-initiated CSI reporting (or used for trigger-event detection) is applied to may be different. In an example, the first cell that the one or more CSI reporting configuration parameters are configured for/on and the third cell that the indicated TCI state used for the UE-initiated CSI reporting (or used for trigger-event detection) is applied to may be the same.

For the third event, the parameter (e.g., *CCofActivatedTCI, CCofActiveTCI, CCofTCI, targetCCforIndicatedTCI-State, referenceCCforIndicatedTCI-State, carrier2, ServCellIndex, secondCarrier* in FIG. 23) may indicate, for example, a cell (or a component carrier (CC)) on which activated TCI state(s) used for UE-initiated CSI reporting (or trigger-event detection) is applied/activated. The parameter may indicate, for example, a cell that the wireless device uses reference signal(s) associated with activated TCI state(s) of the cell for UE-initiated CSI reporting. The activated TCI state(s) of the cell indicated by the parameter may comprise the TCI state associated with the current reference signal. The wireless device may measure/assess monitor/determine/assess/measure a radio link quality of the current reference signal, for example, for the UE-initiated CSI reporting. The parameter (or a value of the parameter) may indicate/identify a cell that the TCI state used for the UE-initiated CSI reporting is activated for.

In an example, the one or more CSI reporting configuration parameters may not comprise the parameter (e.g., *CCofActivatedTCI, CCofActiveTCI, CCofTCI, targetCCforIndicatedTCI-State, referenceCCforIndicatedTCI-State, carrier2, ServCelllndex, secondCarrier* in FIG. 23). The parameter may be absent in the one or more CSI reporting configuration parameters.

In an example, based on the parameter being absent in the one or more CSI reporting configuration parameters, the cell on which activated TCI state(s) used for UE-initiated CSI reporting (or trigger-event detection) is applied/activated is the first cell that the one or more CSI reporting configuration parameters are configured for/on. Based on the parameter being absent in the one or more CSI reporting configuration parameters, the cell that the activated TCI state(s) used for the UE-initiated CSI reporting is applied to (or activated for) is the first cell that the one or more CSI reporting configuration parameters are configured for/on.

In an example, based on the parameter being absent in the one or more CSI reporting configuration parameters, the cell on which activated TCI state(s) used for UE-initiated CSI reporting (or trigger-event detection) is applied/activated is the second cell indicated by the carrier parameter. Based on the parameter being absent in the one or more CSI reporting configuration parameters, the cell that the activated TCI state(s) used for the UE-initiated CSI reporting is applied to (or activated for) is the second cell indicated by the carrier parameter.

In an example, based on both the carrier parameter and the parameter being absent in the one or more CSI reporting configuration parameters, the cell on which activated TCI state(s) used for UE-initiated CSI reporting (or trigger-event detection) is applied/activated is the first cell that the one or more CSI reporting configuration parameters are configured for/on. Based on both the carrier parameter and the parameter being absent in the one or more CSI reporting configuration parameters, the cell that the activated TCI state(s) used for the UE-initiated CSI reporting is applied to (or activated for) is the first cell that the one or more CSI reporting configuration parameters are configured for/on.

In an example, the parameter (or the value of the parameter) may indicate/identify the third cell (e.g., CC 2 in FIG. 23). The parameter (or the value of the parameter) may indicate/identify the third cell that the one or more activated TCI states used for the UE-initiated CSI reporting (or used for trigger-event detection) is applied to (or activated for). The parameter (or the value of the parameter) may be set/equal to a serving cell index/identifier (e.g., *ServCellIndex*) indicating/identifying/of the third cell. The parameter (or the value of the parameter) may indicate/identify the third cell that the TCI state associated with the Q-th best radio link quality used for the UE-initiated CSI reporting (or used for trigger-event detection) is applied to (or activated for).

In an example, the second cell that the list/set of candidate reference signals are configured/transmitted on and the third cell that the one or more activated TCI state used for the UE-initiated CSI reporting (or used for trigger-event detection) is applied to (or activated for) may be different. In an example, the second cell that the list/set of candidate reference signals are configured/transmitted on and the third cell that the one or more activated TCI state used for the UE-initiated CSI reporting (or used for trigger-event detection) is applied to (or activated for) may be the same.

In an example, the first cell that the one or more CSI reporting configuration parameters are configured for/on and the third cell that the one or more activated TCI state used for the UE-initiated CSI reporting (or used for trigger-event detection) is applied to (or activated for) may be different. In an example, the first cell that the one or more CSI reporting configuration parameters are configured for/on and the third cell that the one or more activated TCI state used for the UE-initiated CSI reporting (or used for trigger-event detection) is applied to (or activated for) may be the same.

The parameter (e.g., *CCofActivatedTCI, CCofActiveTCI, CCofTCI, targetCCforIndicatedTCI-State, referenceCCforIndicatedTCI-State, carrier2, ServCellIndex, secondCarrier* in FIG. 23) may indicate, for example, a cell (or a component carrier (CC)) on which activated TCI state(s) used for UE-initiated CSI reporting (or trigger-event detection) is applied. The parameter may indicate, for example, a cell that the wireless device uses a reference signal associated with an activated TCI state, of the cell, with the Q-th best radio link quality for UE-initiated CSI reporting. The activated TCI state of the cell indicated by the parameter may be associated with the current reference signal. The wireless device may measure/assess monitor/determine/assess/measure a radio link quality of the current reference signal, for example, for the UE-initiated CSI reporting. The parameter (or a value of the parameter) may indicate/identify a cell that the activated TCI state used for the UE-initiated CSI reporting is activated for.

The one or more CSI reporting configuration parameters may comprise an event type parameter (e.g., *eventType* in FIG. 22) indicating an event type for UE-initiated CSI reporting. A value of the event type parameter may indicate the event type. For example, a first value (e.g., 'event1') of the event type parameter may indicate a first event (e.g., Event 1). A second value (e.g., 'event2') of the event type parameter may indicate a second event (e.g., Event 2). A third value (e.g., 'event7') of the event type parameter may indicate a third event (e.g., Event 7). The one or more CSI reporting configuration parameters may be, for example, for event-triggered CSI reporting (or UE-initiated CSI reporting or UE-initiated beam reporting).

A current reference signal of the wireless device may correspond to a current beam used by the wireless device. In the first event and the second event, the current beam may be a beam corresponding to the TCI state indicated to the wireless device (the indicated TCI state).

The current reference signal (e.g., Reference signal in FIG. 23) indicated by (or associated with) the (indicated) TCI state (e.g., TCI state in FIG. 23) of the third cell may be configured/transmitted/located on the second cell (e.g., CC 1 in FIG. 23). The TCI state may indicate (or be associated) with the current reference signal configured/transmitted/located on the second cell. The list/set of candidate reference signals and the current reference signal may be configured/transmitted on the same cell (e.g., CC 1 in FIG. 23).

The one or more CSI reporting configuration parameters may comprise a value parameter (e.g., *valueOfQ* in FIG. 22, *currentBeamIndex*)*.* The value parameter may indicate (or be set to) a value of Q. The value of Q may be equal to, for example, one. The value of Q may be equal to, for example, two. The value of Q may be equal to, for example, four. The value of Q may be equal to, for example, eight, and so on. Hereinafter, for convenience, the value of Q will be referred to interchangeably as Q.

A current reference signal of the wireless device may correspond to a current beam used/activated by the wireless device. In the third event, the current beam may be a beam corresponding to a TCI state, among the one or more activated TCI states, associated with the Q-th best/highest radio link quality. The TCI state may be in (or may be mapped to) a TCI codepoint among the one or more TCI codepoints. The TCI codepoint may indicate/have (or be mapped) to the TCI state.

In an example, a number of the one or more activated TCI states may be equal to or greater/larger than the value of Q. For example, if the one or more activated TCI states are TCI state 1 and TCI state 2, the value of Q may be 1 or 2. The value of Q may not be 3 or more. For example, if the one or more activated TCI states are TCI state 1, TCI state 2 and TCI state 3, the value of Q may be 1, 2, or 3. The value of Q may not be 4 or more.

In an example, a number of the one or more activated TCI states may be equal to or less/smaller than a maximum number of activated TCI states. The maximum number of activated TCI states may be, for example, fixed/preconfigured (e.g., 8, 16). The maximum number of activated TCI states may be, for example, indicated by the one or more configuration parameters. The maximum number of activated TCI states may be, for example, indicated by the wireless device in a UE capability information message.

Q-th best radio link quality may refer to Q-th highest radio link quality (e.g., Q-th highest RSRP, Q-th highest SINR, Q-th lowest BLER, and the like).

The wireless device may measure/determine/assess radio link qualities of one or more reference signals indicated by (or associated with) the one or more activated TCI states. Each activated TCI state of the one or more activated TCI states may indicate (or be associated with) a respective reference signal (e.g., CSI-RS, SSB, SS/PBCH block) of the one or more reference signals. The wireless device may measure/determine/assess a respective radio link quality of each reference signal of the one or more reference signals. Each radio link quality of the radio link qualities may be for (or associated with) a respective reference signal of the one or more reference signals.

The radio link qualities may be, for example, L1-RSRP. The radio link qualities may be, for example, L1-SINR. The radio link qualities may be, for example, L3-RSRP.

The wireless device may order the radio link qualities of the one or more activated TCI states. The wireless device may order the radio link qualities of the one or more reference signals indicated by the one or more activated TCI states. The wireless device may order the radio link qualities of the one or more reference signals, for example, in a descending order.

The wireless device may determine/select the TCI state, among the one or more activated TCI states, with the Q-th best/highest radio link quality. The wireless device may determine/select the TCI state, among the one or more activated TCI states, with the Q-th best/highest radio link quality, for example, for detection of the trigger-event (e.g., Event 7). The TCI state may be a TCI state with the Q-th best/highest radio link quality among the radio link qualities of the one or more activated TCI states. A radio link quality of the TCI state may be the Q-th best/highest radio link quality among (or out of) the radio link qualities of the one or more activated TCI states. The radio link qualities of the one or more activated TCI states may comprise the radio link quality of the TCI state.

The wireless device may determine/select the TCI state, among the one or more activated TCI states, associated with a reference signal with the Q-th best/highest radio link quality among the radio link qualities of the one or more reference signals associated with the one or more activated TCI states. The wireless device may determine/select the TCI state, among the one or more activated TCI states, associated with the reference signal with the Q-th best/highest radio link quality, for example, for detection of the trigger-event (e.g., Event 7). The TCI state may be a TCI state associated with the reference signal with the Q-th best/highest radio link quality among the radio link qualities of the one or more reference signals associated with the one or more activated TCI states. A radio link quality of the reference signal associated with the TCI state may be the Q-th best/highest radio link quality among the radio link qualities of the one or more activated TCI states. The radio link qualities of the one or more reference signals associated with the one or more activated TCI states may comprise the radio link quality of the reference signal associated with the TCI state. The one or more reference signals associated with the one or more activated TCI states may comprise the reference signal associated with the TCI state.

For example, in FIG. 20 and FIG. 21, a first radio link quality of a first reference signal indicated by DL TCI 23 may be -90 dBm. A second radio link quality of a second reference signal indicated by DL TCI 12 may be - 140 dBm. A third radio link quality of a third reference signal indicated by DL TCI 9 may be -80 dBm. A fourth radio link quality of a fourth reference signal indicated by DL TCI 48 may be -100 dBm. The radio link qualities of the one or more activated TCI states comprise the first radio link quality, the second radio link quality, the third radio link quality, and the fourth radio link quality. The one or more reference signals indicated by the one or more activated TCI states comprise the first reference signal, the second reference signal, the third reference signal, and the fourth reference signal. The wireless device orders the radio link qualities as [-80 dBm (DL TCI 9), -90 dBm (DL TCI 23), -100 dBm (TCI state 48), -140 dBm (DL TCI 12)]. In FIG. 20 and FIG. 21, when the value (of Q) of the value parameter is set to three (e.g., Q = 3), the TCI state is DL TCI 48 based on DL TCI 48 having the third best/highest radio link quality. The TCI codepoint indicating the TCI state is TCI codepoint 101 indicating DL TCI 48. When the value (of Q) of the value parameter is set to, for example, one, the TCI state is DL TCI state 9 based on DL TCI 9 having the first best/highest radio link quality. The TCI codepoint indicating the TCI state is TCI codepoint 011 indicating DL TCI 9. When the value (of Q) of the value parameter is set to, for example, four, the TCI state is DL TCI 12 based on DL TCI 12 having the fourth best/highest radio link quality. The TCI codepoint indicating the TCI state is TCI codepoint 010 indicating DL TCI 12.

The current reference signal (e.g., Reference signal in FIG. 23) indicated by (or associated with) the (activated) TCI state (e.g., TCI state in FIG. 23) of the third cell may be configured/transmitted/located on the second cell (e.g., CC 1 in FIG. 23). The TCI state may indicate (or be associated) with the current reference signal configured/transmitted/located on the second cell. The list/set of candidate reference signals and the current reference signal may be configured/transmitted on the same cell (e.g., CC 1 in FIG. 23).

The one or more configuration parameters may comprise a TCI state configuration (e.g., *TCI-State*) of the TCI state (e.g., TCI state in FIG. 23).

In an example, the TCI state configuration may comprise a reference signal parameter (e.g., *referenceSignal*) indicating/identifying a reference signal (e.g., CSI-RS, TRS). The reference signal parameter may be, for example, a reference signal index/identifier (e.g., *NZP-CSI-RS-ResourceId, SSB-Index*)*.* The reference signal may provide/indicate quasi-collocation information.

In an example, the current reference signal may be the reference signal indicated by (or the reference signal in) the TCI state. The current reference signal may be the reference signal indicated by (or the reference signal in) the TCI state, for example, based on each candidate reference signal of the list/set of candidate reference signals being CSI-RS or TRS. The current reference signal and the list/set of candidate reference signals may have the same RS type (e.g., CSI-RS).

In an example, the current reference signal may be implicitly derived from a quasi-co-location reference signal (QCL RS) of the indicated TCI state. The reference signal (e.g., CSI-RS, TRS) indicated by the TCI state may be quasi co-located with the current reference signal (e.g., SS/PBCH block or SSB). The current reference signal may be a reference signal (e.g., SS/PBCH block) quasi co-located with the reference signal (e.g., CSI-RS, TRS) indicated by (or the reference signal in) the TCI state. The current reference signal may be a reference signal (e.g., SS/PBCH block) quasi co-located with the reference signal indicated by the TCI state, for example, based on each candidate reference signal of the list/set of candidate reference signals being SS/PBCH block. The current reference signal and the list/set of candidate reference signals may have the same RS type (e.g., SS/PBCH block or SSB).

The TCI state configuration may comprise a BWP parameter (e.g., *BWP-Id*) indicating/identifying a downlink BWP that the reference signal is located/transmitted/configured in/on. When/if the BWP parameter is absent in the TCI state configuration of the TCI state, the reference signal is located/transmitted/configured in/on a downlink BWP that the wireless device applies the TCI state to.

The TCI state configuration may comprise a cell parameter (e.g., *cell*) indicating the second cell in which the reference signal is configured/transmitted/located. When/if the cell parameter is absent in the TCI state configuration of the TCI state, the reference signal may be configured/transmitted/located on a cell that the wireless device applies the TCI state to.

The second cell and the third cell may be the same, for example, when/if the cell parameter is absent in the TCI state configuration of the TCI state.

In an example, the control command (e.g., DCI, MAC-CE, DCI 1718) may indicate the TCI state for the second cell. The wireless device may apply the (indicated) TCI state for/on/to the second cell. In an example, the activation command may indicate activation of the one or more TCI states for the second cell. The wireless device may activate the one or more TCI states for/on/to the second cell.

The TCI state configuration may comprise a QCL-type parameter (e.g., *qcl-Type*) indicating a QCL type. The QCL type for the reference signal may be, for example, QCL-TypeD. The QCL type for/of the reference signal may be, for example, set to 'TypeD' indicating QCL-TypeD.

In an example, the TCI state may indicate (or may be associated with) the current reference signal. The wireless device may determine the current beam (or a spatial domain filter), based on the reference signal (e.g., or the current reference signal) indicated by the TCI state, for receiving downlink transmissions and/or for transmitting uplink transmissions.

The reference signal indicated by (or associated with) the TCI state (hereinafter " the current reference signal") may be the current reference signal. The reference signal indicated by the TCI state may be interchangeably used with the current reference signal.

Based on a radio link quality of the current reference signal, the wireless device may trigger a UE-initiated CSI reporting.

For example, in the first event (e.g., Event 1), when the radio link quality of the current reference signal becomes worse/lower than a threshold (or a threshold value or a value of a threshold), the wireless device may trigger a UE-initiated CSI reporting.

For example, in the second event (e.g., Event 2), when a radio link quality of at least one candidate reference signal in/of the list/set of candidate reference signals becomes better than the radio link quality of the current reference signal of (or associated with) the TCI state by a threshold (or a threshold value or a value of a threshold), the wireless device may trigger a UE-initiated CSI reporting.

For example, in the third event (e.g., Event 7), when a radio link quality of at least one candidate reference signal in/of the list/set of candidate reference signals becomes better than the radio link quality of the current reference signal of (or associated with) the TCI state associated with the Q-th best radio link quality by a threshold (or a threshold value or a value of a threshold), the wireless device may trigger a UE-initiated CSI reporting. For example, when the value of Q is equal to two, when a radio link quality of at least one candidate reference signal in/of the list/set of candidate reference signals becomes better than a radio link quality of a reference signal (or a current reference signal) of an activated TCI state, among the one or more activated TCI states, associated with the second best quality by a threshold (or a threshold value or a value of a threshold), the wireless device may trigger a UE-initiated CSI reporting. For example, when the value of Q is equal to three, when a radio link quality of at least one candidate reference signal in/of the list/set of candidate reference signals becomes better than a radio link quality of a reference signal (or a current reference signal) of an activated TCI state, among the one or more activated TCI states, associated with the third best quality by a threshold (or a threshold value or a value of a threshold), the wireless device may trigger a UE-initiated CSI reporting.

The one or more CSI reporting configuration parameters may comprise a threshold parameter (e.g., *eventThreshold* in FIG. 22, *eventThresholdEvent2orEvent7, eventThresholdEvent1,* and the like) indicating a value of the threshold. The one or more CSI reporting configuration parameters may comprise a threshold parameter (e.g., *eventThreshold* in FIG. 22, *eventThresholdEvent2orEvent7, eventThresholdEvent1,* and the like) indicating (or set to) the threshold value (e.g., *eventThreshold* in FIG. 22). The one or more CSI reporting configuration parameters may comprise/indicate the value (or the threshold value) for UE-initiated CSI reporting. The one or more CSI reporting configuration parameters may comprise/indicate the threshold (e.g., the threshold value) for use by the wireless device to detect a trigger-event (an event that triggers a CSI report according to the UE-initiated CSI reporting).

The radio link quality of the current reference signal may be, for example, a layer 1 received signal received power (L1-RSRP). The radio link quality of the at least one candidate reference signal may be, for example, a L1-RSRP.

In the first event, the wireless device may trigger the UE-initiated CSI reporting, for example, when L1-RSRP of the current reference signal < the threshold. In the first event, the wireless device may trigger the UE-initiated CSI reporting, for example, when L1-RSRP of the current reference signal ≤ the threshold.

In the second event, the wireless device may trigger the UE-initiated CSI reporting, for example, when L1-RSRP of the at least one candidate reference signal > (the threshold + L1-RSRP of the current reference signal). The wireless device may trigger the UE-initiated CSI reporting, for example, when L1-RSRP of the at least one candidate reference signal ≥ (the threshold + L1-RSRP of the current reference signal).

In the third event, the wireless device may trigger the UE-initiated CSI reporting, for example, when L1-RSRP of the at least one candidate reference signal > (the threshold + L1-RSRP of the reference signal of the TCI state associated with the Q-th best radio link quality). The wireless device may trigger the UE-initiated CSI reporting, for example, when L1-RSRP of the at least one candidate reference signal ≥ (the threshold + L1-RSRP of the reference signal of the TCI state associated with the Q-th best radio link quality).

The radio link quality of the current reference signal may be, for example, layer 1 signal-to-interference-plus-noise ratio (L1-SINR). The radio link quality of the at least one candidate reference signal may be, for example, L1-SINR.

In the first event, the wireless device may trigger the UE-initiated CSI reporting, for example, when L1-SINR of the current reference signal < the threshold. In the first event, the wireless device may trigger the UE-initiated CSI reporting, for example, when L1-SINR of the current reference signal ≤ the threshold.

In the second event, the wireless device may trigger the UE-initiated CSI reporting, for example, when L1-SINR of the at least one candidate reference signal > (the threshold + L1-SINR of the current reference signal). The wireless device may trigger the UE-initiated CSI reporting, for example, when L1-SINR of the at least one candidate reference signal ≥ (the threshold + L1-SINR of the current reference signal).

In the third event, the wireless device may trigger the UE-initiated CSI reporting, for example, when L1-SINR of the at least one candidate reference signal > (the threshold + L1-SINR of the reference signal of the TCI state associated with the Q-th best radio link quality). The wireless device may trigger the UE-initiated CSI reporting, for example, when L1-SINR of the at least one candidate reference signal ≥ (the threshold + L1-SINR of the reference signal of the TCI state associated with the Q-th best radio link quality).

The wireless device may implement a first mode/option/scheme of UE-initiated CSI reporting (as illustrated in FIG. 19A and FIG. 20), a second mode/option of UE-initiated CSI reporting (as illustrated in FIG. 19B and FIG. 21), or a combination of the first mode/option and the second mode/option for UE-initiated CSI reporting (as illustrated in FIG. 19C). The first mode/option/scheme, which may be referred to as mode A, may include the wireless device requesting an uplink resource to transmit a UE-initiated CSI report and transmitting the UE-initiated CSI report via a dynamically indicated uplink resource. The second mode/option/scheme, which may be referred to as mode B, may include the wireless device using a pre-configured uplink resource (e.g., configured/indicated by the one or more CSI reporting configuration parameters) to transmit a UE-initiated CSI report. As would be understood by a person of skill in the art, a UE-initiated CSI report may be referred, interchangeably, as a UE-initiated beam report, an event-driven CSI/beam report, or a UE-triggered CSI/beam report, event-triggered CSI/beam report, a CSI report triggered by the UE, for example).

In an example, the one or more CSI reporting configuration parameters may comprise report mode parameter (e.g., *reportTransmissionMode* in FIG. 22). A first value (e.g., Mode A) of the report mode parameter may indicate the first mode/option/scheme of UE-initiated CSI reporting. A second value (e.g., Mode B) of the report mode parameter may indicate the second mode/option/scheme of UE-initiated CSI reporting.

In an example, the one or more CSI reporting configuration parameters may comprise a configured resource configuration/parameter (e.g., *ConfiguredGrant, configuredResourceOfModeB, configuredResourceForSecondChannelOfModeB* in FIG. 22, and the like) indicating a configured uplink grant (or a Type 1 configured grant PUSCH) on a second uplink BWP of a second cell. The configured resource configuration/parameter may indicate the configured uplink grant (or the Type 1 configured grant PUSCH) in Mode B. The configured resource configuration may comprise a configured grant configuration index/identifier (e.g., *ConfiguredGrantConfigIndex* in FIG 22) indicating/identifying the configured uplink grant. The configured resource configuration may comprise a BWP index/identifier (e.g., *BWP-Id* in FIG 22) indicating/identifying the second uplink BWP. The configured resource configuration may comprise a serving cell index/identifier (e.g., *ServCellIndex* in FIG 22) indicating/identifying the second cell. The one or more CSI reporting configuration parameters may indicate the configured uplink grant for UE-initiated CSI reporting. The one or more CSI reporting configuration parameters may indicate the configured uplink grant for UE-initiated CSI reporting, for example, for a PUSCH transmission in/for a second step in/of the UE-initiated CSI reporting.

In an example, the first cell that the one or more CSI reporting configuration parameters are configured for/on and the second cell that the configured resource configuration/parameter is configured for/on may be the same. In an example, the first cell and the second cell may be different.

The second mode/option/scheme of UE-initiated CSI reporting may be indicated based on the one or more CSI reporting configuration parameters comprising the configured resource configuration/parameter. The second mode/option/scheme of UE-initiated CSI reporting may be indicated based on the configured resource configuration being present/provided in the one or more CSI reporting configuration parameters. The one or more CSI reporting configuration parameters comprising the configured resource configuration may indicate the second mode/option/scheme of UE-initiated CSI reporting.

In an example, the one or more CSI reporting configuration parameters may not comprise the configured resource configuration/parameter (e.g., *ConfiguredGrant, configuredResourceOfModeB, configuredResourceForSecondChannelOfModeB* in FIG. 22, and the like).

The first mode/option/scheme of UE-initiated CSI reporting may be indicated based on the one or more CSI reporting configuration parameters not comprising the configured resource configuration. The first mode/option/scheme of UE-initiated CSI reporting may be indicated based on the configured resource configuration being absent (or not being provided) in the one or more CSI reporting configuration parameters. The one or more CSI reporting configuration parameters not comprising the configured resource configuration may indicate the first mode/option/scheme of UE-initiated CSI reporting.

The wireless device may monitor/determine/assess/measure a radio link quality (e.g., L1-RSRP) of the current reference signal.

The wireless device may monitor/determine/assess/measure a radio link quality (e.g., L1-RSRP) of each candidate reference signal in/of the list/set of candidate reference signals. The wireless device may monitor a respective radio link quality (e.g., L1-RSRP) of each candidate reference signal in/of the list/set of candidate reference signals.

In the first event, the wireless device may monitor/determine/assess/measure the radio link quality (e.g., L1-RSRP) of the current reference signal, for example, after receiving the control command indicating the TCI state.

In the second event, the wireless device may monitor/determine/assess/measure the radio link quality (e.g., L1-RSRP) of each candidate reference signal in/of the list/set of candidate reference signals, for example, after receiving the control command indicating the TCI state.

In the third event, the wireless device may monitor/determine/assess/measure the radio link quality (e.g., L1-RSRP) of each candidate reference signal in/of the list/set of candidate reference signals, for example, after receiving the activation command indicating activation of the one or more activated TCI states.

In an example, the one or more CSI reporting configuration parameters may comprise a time window parameter (e.g., *eventDetectionTimeWindowLength* in FIG. 22) indicating (or set to) a time window (or a value of a time window or a length of a time window).

The one or more CSI reporting configuration parameters may comprise/indicate the time window parameter (e.g., the value of the time window or the length of the time window) for use by the wireless device to detect the trigger-event (the event that triggers a CSI report according to the UE-initiated CSI reporting).

In an example, the one or more CSI reporting configuration parameters may comprise a count parameter (e.g., *eventInstanceCount, eventInstanceMaxCount*) indicating an event instance count. The count parameter may indicate (or be set to) a value for counting event instances for detection of the trigger-event (the event that triggers a CSI report according to the UE-initiated CSI reporting).

In/for the first event, the wireless device may compare the radio link quality of the current reference signal and/against the threshold. The current reference signal may correspond to the current beam used by the wireless device. The current reference signal may correspond to the indicated TCI state by the control command.

In/for the first event, the wireless device may be configured to detect a trigger-event (an event that triggers a CSI report according to the UE-initiated CSI reporting) when the radio link quality of the current reference signal becomes worse/lower the threshold value (e.g., L1-RSRP of the current reference signal < threshold). In example, the wireless device may detect a trigger-event based on the radio link quality of the current reference signal being worse/lower the threshold value. Based on detecting the trigger-event, the wireless device may trigger a UE-initiated CSI reporting, for example, to indicate (or trigger a UE-initiated CSI report that indicates) the first event.

The wireless device may trigger the UE-initiated CSI reporting, for example, for the first cell (e.g., CC 0 in FIG. 23). The wireless device may trigger the UE-initiated CSI reporting, for example, for the second cell (e.g., CC 1 in FIG. 23).

In an example, the wireless device may detect/determine a trigger-event instance based on the radio link quality of the current reference signal becoming worse/lower the threshold value.

A 'trigger-event instance' may be interchangeably used with an 'event instance'.

In an example, the one or more CSI reporting configuration parameters may not comprise the time window parameter (e.g., *eventDetectionTimeWindowLength* in FIG. 22). The one or more CSI reporting configuration parameters may not comprise the count parameter (e.g., *eventlnstanceCount, eventInstanceMaxCount*). The radio link quality of the current reference signal determined/measured in/for a transmission occasion of the current reference signal may be the threshold value worse/lower the threshold value. The radio link quality of the current reference signal determined/measured in/for a transmission occasion of the current reference signal may be, at least once, the threshold value worse/lower the threshold value. In an example, the wireless device may detect the trigger-event based on the radio link quality of the current reference signal becoming worse/lower the threshold value. The wireless device may detect the trigger-event based on detecting/determining the trigger-event instance. The wireless device may detect the trigger-event based on detecting/determining one trigger-event instance. The wireless device may transmit a UE capability information message. The UE capability information message may not comprise a parameter indicating capability/support of detecting the trigger-event based on a total number of trigger-event instances determined/generated with the time window being equal to or greater than the event instance count.

In an example, the one or more CSI reporting configuration parameters may comprise the time window parameter (e.g., *eventDetectionTimeWindowLength* in FIG. 22). The one or more CSI reporting configuration parameters may comprise the count parameter (e.g., *eventInstanceCount, eventInstanceMaxCount*). The radio link quality of the current reference signal determined/measured in/for each transmission occasion of the current reference signal may be, at least the event instance count of times, the threshold value worse/lower the threshold value within the time window. A respective radio link quality of the current reference signal determined/measured in/for each transmission occasion of the current reference signal may be, at least the event instance count of times, the threshold value worse/lower the threshold value within the time window. In an example, the wireless device may detect the trigger-event based on a total number of trigger-event instances determined/generated with the time window being equal to or greater than the event instance count. The wireless device may transmit a UE capability information message. The UE capability information message may comprise a parameter indicating capability/support of detecting the trigger-event based on a total number of trigger-event instances determined/generated with the time window being equal to or greater than the event instance count.

In/for the second event, the wireless device may compare the monitored radio link quality of each candidate reference signal to a radio link quality of the current reference signal of the (indicated) TCI state.

In/for the second event, the wireless device may be configured to detect a trigger-event (an event that triggers a CSI report according to the UE-initiated CSI reporting) when the radio link quality of at least one candidate reference signal in/of the list/set of candidate reference signals becomes/is better than the radio link quality of the current reference signal by the threshold value (e.g., L1-RSRP of at least one candidate reference signal > threshold + L1-RSRP of the current reference signal). In example, the wireless device may detect a trigger-event based on the radio link quality of a first candidate reference signal (e.g., Reference signal 1 in FIG. 20 and FIG. 21) in/of the list/set of candidate reference signals becoming better than the radio link quality of the current reference signal by the threshold value. Based on detecting the trigger-event, the wireless device may trigger a UE-initiated CSI reporting to indicate (or a UE-initiated CSI report that indicates) the first candidate reference signal. The first candidate reference signal may satisfy the second event (or condition(s) to trigger the second event).

In an example, the wireless device may detect/determine a trigger-event instance based on the radio link quality of at least one candidate reference signal in/of the list/set of candidate reference signals becoming/being better than the radio link quality of the current reference signal by the threshold value.

The wireless device may detect the trigger-event based on the radio link quality of at least one candidate reference signal in/of the list/set of candidate reference signals becoming/being better than the radio link quality of the current reference signal by the threshold value.

In an example, the wireless device may detect/determine a trigger-event instance based on a radio link quality of a first candidate reference signal in/of the list/set of candidate reference signals becoming/being better than the radio link quality of the current reference signal by the threshold value.

The wireless device may detect the trigger-event based on detecting/determining the trigger-event instance. The wireless device may detect the trigger-event based on detecting/determining one trigger-event instance. The wireless device may transmit a UE capability information message. The UE capability information message may not comprise a parameter indicating capability/support of detecting the trigger-event based on a total number of trigger-event instances determined/generated with the time window being equal to or greater than the event instance count.

In an example, the one or more CSI reporting configuration parameters may not comprise the time window parameter (e.g., *eventDetectionTimeWindowLength* in FIG. 22). The one or more CSI reporting configuration parameters may not comprise the count parameter (e.g., *eventlnstanceCount, eventInstanceMaxCount*). The radio link quality of the at least one candidate reference signal in/of the list/set of candidate reference signals may be the threshold value better than the radio link quality of the current reference signal. The radio link quality of the at least one candidate reference signal determined/measured in/for a transmission occasion of the at least one candidate reference signal may be the threshold value better than the radio link quality of the current reference signal. The radio link quality of the at least one candidate reference signal determined/measured in/for a transmission occasion of the at least one candidate reference signal may be, at least once, the threshold value better than the radio link quality of the current reference signal. A radio link quality of the first candidate reference signal in/of the list/set of candidate reference signals may be the threshold value better than the radio link quality of the current reference signal. The radio link quality of the first candidate reference signal determined/measured in/for a transmission occasion of the first candidate reference signal may be the threshold value better than the radio link quality of the current reference signal. The radio link quality of the first candidate reference signal determined/measured in/for a transmission occasion of the first candidate reference signal may be, at least once, the threshold value better than the radio link quality of the current reference signal.

In an example, the one or more CSI reporting configuration parameters may comprise the time window parameter (e.g., *eventDetectionTimeWindowLength* in FIG. 22). The one or more CSI reporting configuration parameters may comprise the count parameter (e.g., *eventInstanceCount, eventInstanceMaxCount*). A radio link quality of the first candidate reference signal in/of the list/set of candidate reference signals determined/measured in/for each transmission occasion of the first candidate reference signal may be, at least the event instance count of times, the threshold value better than the radio link quality of the current reference signal within the time window. A respective radio link quality of the first candidate reference signal determined/measured in/for each transmission occasion of the first candidate reference signal may be, at least the event instance count of times, the threshold value better than the radio link quality of the current reference signal within the time window. In an example, the wireless device may detect the trigger-event based on a total number of trigger-event instances determined/generated with the time window being equal to or greater than the event instance count. The wireless device may transmit a UE capability information message. The UE capability information message may comprise a parameter indicating capability/support of detecting the trigger-event based on a total number of trigger-event instances determined/generated with the time window being equal to or greater than the event instance count.

The wireless device may trigger the UE-initiated CSI reporting, for example, for the first cell (e.g., CC 0 in FIG. 23). The wireless device may trigger the UE-initiated CSI reporting, for example, for the first candidate reference signal of the first cell.

The wireless device may trigger the UE-initiated CSI reporting, for example, for the second cell (e.g., CC 1 in FIG. 23). The wireless device may trigger the UE-initiated CSI reporting, for example, for the first candidate reference signal of the second cell (e.g., CC 1 in FIG. 23).

In/for the third event, the wireless device may compare the monitored radio link quality of each candidate reference signal to a radio link quality of the reference signal (or the current reference signal) of the TCI state associated with the Q-th best radio link quality.

In/for the third event, the wireless device may be configured to detect a trigger-event (an event that triggers a CSI report according to the UE-initiated CSI reporting) when the radio link quality of at least one candidate reference signal in/of the list/set of candidate reference signals becomes/is better than the radio link quality of the reference signal of the TCI state associated with the Q-th best radio link quality by the threshold value (e.g., L1-RSRP of at least one candidate reference signal > threshold + L1-RSRP of the reference signal of the TCI state associated with the Q-th best radio link quality). In example, the wireless device may detect a trigger-event based on the radio link quality of a first candidate reference signal in/of the list/set of candidate reference signals becoming better than the radio link quality of the reference signal of the TCI state associated with the Q-th best radio link quality by the threshold value. Based on detecting the trigger-event, the wireless device may trigger a UE-initiated CSI reporting to indicate (or a UE-initiated CSI report that indicates) the first candidate reference signal. The first candidate reference signal may satisfy the third event (or condition(s) to trigger the third event).

The wireless device may trigger the UE-initiated CSI reporting, for example, for the first cell. The wireless device may trigger the UE-initiated CSI reporting, for example, for the first candidate reference signal of the first cell.

The wireless device may trigger the UE-initiated CSI reporting, for example, for the second cell (e.g., CC 1 in FIG. 23). The wireless device may trigger the UE-initiated CSI reporting, for example, for the first candidate reference signal of the second cell (e.g., CC 1 in FIG. 23).

In an example, the wireless device may detect/determine a trigger-event instance based on the radio link quality of at least one candidate reference signal in/of the list/set of candidate reference signals becoming/being better than the radio link quality of the reference signal of the TCI state associated with the Q-th best radio link quality by the threshold value.

In an example, the wireless device may detect/determine a trigger-event instance based on a radio link quality of a first candidate reference signal in/of the list/set of candidate reference signals becoming/being better than the radio link quality of the reference signal of the TCI state associated with the Q-th best radio link quality by the threshold value.

The wireless device may detect the trigger-event based on detecting/determining the trigger-event instance. The wireless device may detect the trigger-event based on detecting/determining one trigger-event instance. The wireless device may transmit a UE capability information message. The UE capability information message may not comprise a parameter indicating capability/support of detecting the trigger-event based on a total number of trigger-event instances determined/generated with the time window being equal to or greater than the event instance count.

In an example, the wireless device may detect the trigger-event based on the radio link quality of the at least one candidate reference signal in/of the list/set of candidate reference signals becoming/being better than the radio link quality of the reference signal of the TCI state associated with the Q-th best radio link quality by the threshold value.

In an example, the wireless device may detect the trigger-event based on the radio link quality of the first candidate reference signal in/of the list/set of candidate reference signals becoming/being better than the radio link quality of the reference signal of the TCI state associated with the Q-th best radio link quality by the threshold value.

In an example, the one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*). The radio link quality of the at least one candidate reference signal in/of the list/set of candidate reference signals may be the threshold value better than the radio link quality of the reference signal of the TCI state associated with the Q-th best radio link quality. The radio link quality of the at least one candidate reference signal determined/measured in/for a transmission occasion of the at least one candidate reference signal may be the threshold value better than the radio link quality of the reference signal of the TCI state associated with the Q-th best radio link quality. The radio link quality of the at least one candidate reference signal determined/measured in/for a transmission occasion of the at least one candidate reference signal may be, at least once, the threshold value better than the radio link quality of the reference signal of the TCI state associated with the Q-th best radio link quality. A radio link quality of the first candidate reference signal in/of the list/set of candidate reference signals may be the threshold value better than the radio link quality of the reference signal of the TCI state associated with the Q-th best radio link quality. The radio link quality of the first candidate reference signal determined/measured in/for a transmission occasion of the first candidate reference signal may be the threshold value better than the radio link quality of the reference signal of the TCI state associated with the Q-th best radio link quality. The radio link quality of the first candidate reference signal determined/measured in/for a transmission occasion of the first candidate reference signal may be, at least once, the threshold value better than the radio link quality of the reference signal of the TCI state associated with the Q-th best radio link quality.

In an example, the one or more CSI reporting configuration parameters may comprise the time window parameter (e.g., *eventDetectionTimeWindowLength* in FIG. 22). The one or more CSI reporting configuration parameters may comprise the count parameter (e.g., *eventInstanceCount, eventInstanceMaxCount*). A radio link quality of the first candidate reference signal in/of the list/set of candidate reference signals determined/measured in/for each transmission occasion of the first candidate reference signal may be, at least the event instance count of times, the threshold value better than the radio link quality of the reference signal of the TCI state associated with the Q-th best radio link quality within the time window. A respective radio link quality of the first candidate reference signal determined/measured in/for each transmission occasion of the first candidate reference signal may be, at least the event instance count of times, the threshold value better than the radio link quality of the reference signal within the time window. In an example, the wireless device may detect the trigger-event based on a total number of trigger-event instances determined/generated with the time window being equal to or greater than the event instance count. The wireless device may transmit a UE capability information message. The UE capability information message may comprise a parameter indicating capability/support of detecting the trigger-event based on a total number of trigger-event instances determined/generated with the time window being equal to or greater than the event instance count.

For the first event and/or the second event and/or the third event, based on detecting/determining the trigger-event instance, the wireless device may detect the trigger-event, for example, in response to the one or more CSI reporting configuration parameters not indicating the time window. Based on detecting/determining the trigger-event instance, the wireless device may detect the trigger-event, for example, in response to the one or more CSI reporting configuration parameters not comprising the time window parameter (e.g., *eventDetectionTimeWindowLength* in FIG. 22). Based on detecting/determining the trigger-event instance, the wireless device may detect the trigger-event, for example, in response to the time window parameter being absent in the one or more CSI reporting configuration parameters.

For the first event and/or the second event and/or the third event, based on detecting/determining the trigger-event instance, the wireless device may detect the trigger-event, for example, in response to the one or more CSI reporting configuration parameters not indicating the event instance count. Based on detecting/determining the trigger-event instance, the wireless device may detect the trigger-event, for example, in response to the one or more CSI reporting configuration parameters not comprising the count parameter (e.g., *eventInstanceCount, eventInstanceMaxCount*). Based on detecting/determining the trigger-event instance, the wireless device may detect the trigger-event, for example, in response to the count parameter being absent in the one or more CSI reporting configuration parameters.

In an example of the first event, based on, during the time window (e.g., *eventDetection Time WindowLength*), a respective radio link quality (e.g., L1-RSRP value) determined for each transmission occasion (or occurence) of the current reference signal being at least *eventlnstanceCount* times lower/less than the threshold value, the wireless device may trigger the UE-initiated CSI reporting. In an example of the first event, based on, during the time window (e.g., *eventDetectionTimeWindowLength*), radio link qualities (e.g., L1-RSRP value) determined for transmission occasions (or occurences) of the current reference signal being at least *eventlnstanceCount* times lower/less than the threshold value, the wireless device may trigger the UE-initiated CSI reporting.

In an example of the first event, based on a radio link quality (e.g., L1-RSRP value) determined for a transmission occasion (or occurrence) of the current reference signal being at least once lower/lesss than the threshold value, the wireless device may trigger the UE-initiated CSI reporting. The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*).

In an example of the second event, based on, during the time window (e.g., *eventDetection Time WindowLength*), a respective radio link quality (e.g., L1-RSRP value) determined for each transmission occasion of at least one same reference signal of/from/among the list/set of candidate reference signals being at least *eventInstanceCount* times the threshold value greater than a radio link quality (e.g., L1-RSRP value) of the current reference signal, the wireless device may trigger the UE-initiated CSI reporting. In an example of the second event, based on, during the time window (e.g., *eventDetectionTimeWindowLength*), radio link qualities (e.g., L1-RSRP value) determined for transmission occasions of at least one same reference signal of/from/among the list/set of candidate reference signals being at least *eventlnstanceCount* times the threshold value greater than the radio link quality (e.g., L1-RSRP value) of the current reference signal, the wireless device may trigger the UE-initiated CSI reporting.

In an example of the second event, based on a radio link quality (e.g., L1-RSRP value) determined for a transmission occasion of at least one same reference signal of/from/among the list/set of candidate reference signals being at least once the threshold value greater than a radio link quality (e.g., L1-RSRP value) of the current reference signal, the wireless device may trigger the UE-initiated CSI reporting. The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*).

In an example of the third event, based on, during the time window (e.g., *eventDetection Time WindowLength*), a respective radio link quality (e.g., L1-RSRP value) determined for each transmission occasion of at least one same reference signal of/from/among the list/set of candidate reference signals being at least *eventInstanceCount* times the threshold value greater than a radio link quality (e.g., L1-RSRP value) of the current reference signal (e.g., reference signal with the *valueOfQ* highest L1-RSRP out of the one or more reference signals of the one or more activated TCI states), the wireless device may trigger the UE-initiated CSI reporting. In an example of the third event, based on, during the time window (e.g., *eventDetection Time WindowLength*), radio link qualities (e.g., L1-RSRP value) determined for transmission occasions of at least one same reference signal of/from/among the list/set of candidate reference signals being at least *eventlnstanceCount* times the threshold value greater than the radio link quality (e.g., L1-RSRP value) of the current reference signal, the wireless device may trigger the UE-initiated CSI reporting.

In an example of the third event, based on a radio link quality (e.g., L1-RSRP value) determined for a transmission occasion of at least one same reference signal of/from/among the list/set of candidate reference signals being at least once the threshold value greater than a radio link quality (e.g., L1-RSRP value) of the current reference signal (e.g., reference signal with the *valueOfQ* highest L1-RSRP out of the one or more reference signals of the one or more activated TCI states), the wireless device may trigger the UE-initiated CSI reporting. The one or more CSI reporting configuration parameters may not comprise the time window parameter (e.g., *eventDetectionTimeWindowLength* in FIG. 22). The one or more CSI reporting configuration parameters may not comprise the count parameter (e.g., *eventInstanceCount, eventInstanceMaxCount*).

A respective periodicity of each candidate reference signal in/of the list/set of candidate reference signals may be the same. The one or more configuration parameters may indicate, for each candidate reference signal in/of the list/set of candidate reference signals, a respective periodicity. Each candidate reference signal in/of the list/set of candidate reference signals may have a first periodicity.

The one or more configuration parameters may indicate, for the current reference signal, a second periodicity. The current reference signal may have a second periodicity.

In an example, the first periodicity and the second periodicity may be the same (or equal). In an example, the first periodicity and the second periodicity may be different.

An evaluation periodicity for the trigger-event instance may be, for example, based on the second periodicity of the current reference signal. The evaluation periodicity for the trigger-event instance may be, for example, same as (or equal to) the second periodicity of the current reference signal.

An evaluation periodicity for the trigger-event instance may be, for example, based on the first periodicity of a candidate reference signal in/of the list/set of candidate reference signals. An evaluation periodicity for the trigger-event instance may be, for example, based on the first periodicity of any candidate reference signal in/of the list/set of candidate reference signals. The evaluation periodicity for the trigger-event instance may be, for example, same as (or equal to) the first periodicity.

An evaluation periodicity for the trigger-event instance may be, for example, based on both the first periodicity of a candidate reference signal in/of the list/set of candidate reference signals and the second periodicity of the current reference signal. The evaluation periodicity for the trigger-event instance may be, for example, same as (or equal to) a shortest/minimum periodicity among the first periodicity and the second periodicity (e.g., minimum{the first periodicity, the second periodicity}. The evaluation periodicity for the trigger-event instance may be, for example, same as (or equal to) a largest/maximum periodicity among the first periodicity and the second periodicity (e.g., maximum{the first periodicity, the second periodicity}. The evaluation periodicity for the trigger-event instance may be, for example, same as (or equal to) a maximum of a time duration and a shortest/minimum periodicity among the first periodicity and the second periodicity (e.g., maximum{the time duration, minimum{the first periodicity, the second periodicity}}. The time duration may be, for example, fixed/predefined/preset/preconfigured (e.g., 2 ms, 4 ms, 6 ms, and the like). The time duration may be, for example, in milliseconds. In an example, the one or more configuration parameters may indicate the time duration.

The evaluation periodicity may be interchangeably used with an evaluation period.

The wireless device may be configured, after detecting the trigger-event, to trigger a UE-initiated CSI reporting.

The one or more CSI reporting configuration parameters may comprise a PUCCH resource configuration parameter (e.g., *firstPUCCH-ResourceConfig-UEIBR* in FIG. 22, *PUCCHResourceConfig-UEIBR, PUCCHResourceConfig, PUCCHResource, FirstPUCCH-ID-UEIBR, FirstPUCCH-UEIBR, PUCCHResourceConfig-UEIBR-RequestNotification, eventIndicatorChannel, eventIndicatorPUCCH, eventIndicatorUEIBR*) for UE-initiated CSI reporting. The PUCCH resource configuration parameter may indicate a PUCCH resource configuration.

The PUCCH resource configuration may comprise/indicate a PUCCH resource identifier (e.g., *resource PUCCH-ResourceId* in FIG. 22) indicating/identifying a PUCCH resource (e.g., PUCCH resource in FIG. 20 and FIG. 21). The PUCCH resource may be, for example, for a PUCCH transmission for the UE-initiated CSI reporting. The PUCCH resource may be, for example, for a PUCCH transmission for/in a first/initial step of the UE-initiated CSI reporting. The PUCCH resource configuration may comprise/indicate the PUCCH resource for beam reporting information (BRI) in a PUCCH transmission using either PUCCH format 0 or PUCCH format 1.

The PUCCH resource may be, for example, a periodic PUCCH resource.

The PUCCH resource configuration may comprise a periodicity-and-offset parameter (e.g., *periodicityAndOffset* in FIG. 22). The periodicity-and-offset parameter may indicate, for PUCCH transmissions via the PUCCH resource, a periodicity in number of symbols or slots and an offset in slots. The PUCCH transmissions via the PUCCH resource may use, for example, PUCCH format 0. The PUCCH transmissions via the PUCCH resource may use, for example, PUCCH format 1. The PUCCH transmissions via the PUCCH resource may not use, for example, a PUCCH format different from PUCCH format 0 and PUCCH format 1.

The one or more configuration parameters may comprise one or more PUCCH configuration parameters (e.g., *PUCCH-Config*). The one or more PUCCH configuration parameters may comprise one or more PUCCH format configuration parameters (e.g., *PUCCH-format0* or *in PUCCH-format1*).

The PUCCH resource may be, for example, on a second cell (or on a second uplink BWP of a second cell). In an example, the first cell may be different from the second cell. In an example, the first cell may be the same as the second cell.

Based on (or after) triggering the UE-initiated CSI reporting, the wireless device may transmit, via the PUCCH resource, a PUCCH transmission (e.g., PUCCH resource in FIG. 20 and FIG. 21). The wireless device may transmit, via the PUCCH resource of the second cell, the PUCCH transmission. The wireless device may transmit, via the PUCCH resource, the PUCCH transmission for the UE-initiated CSI reporting.

The PUCCH transmission via the PUCCH resource may carry (or may be with or may be multiplexed with) a BRI.

The use of the term "BRI" is exemplary and is not intended to limit the scope of the invention. Alternative terms that may be substituted include "UE-initiated beam report (UEIBR)", "Event indicator", "Event Indicator for UEIBR", "Event indicator channel", "UE-initiated-Request-Notification", "UEIBR-Request-Notification", and "UEIBR indicator", "UEIBR indication", "UE-initiated CSI report indication", "UE-initiated CSI report", "UE-initiated CSI", "UE-initiated beam report indication", "Beam report indication", among others.

The BRI (or UE-initiated CSI) may be different from scheduling request (SR). The BRI may be different from HARQ-ACK. The BRI may be different from CSI report. The BRI may be different from link recovery request (LRR).

UCI types reported in a PUCCH transmission may comprise BRI, HARQ-ACK information, SR, LRR, and CSI.

UCI bits may comprise, for example BRI bits, if any, HARQ-ACK information bits, if any, SR information bits, if any, LRR information bits, if any, and CSI bits, if any.

UCI bits may comprise, for example, BRI information bits, if any, HARQ-ACK information bits, if any, SR information bits, if any, LRR information bits, if any, and CSI bits, if any.

In accordance with the first mode/option/scheme of UE-initiated CSI reporting in FIG. 20, the PUCCH transmission via the PUCCH resource may request an uplink resource (or an uplink grant) for a PUSCH transmission (e.g., PUSCH in FIG. 20) to carry/multiplex the UE-initiated CSI report. The PUCCH transmission with the BRI may indicate the request of the uplink resource (or the uplink grant) for the PUSCH transmission. The BRI may request a dynamically scheduled PUSCH for a CSI report (or to carry UE-initiated CSI report for Mode A).

After transmitting the PUCCH transmission via the PUCCH resource, the wireless device may receive/detect a DCI (e.g., DCI in FIG. 20) indicating an uplink resource (or an uplink grant) for the PUSCH transmission (e.g., PUSCH in FIG. 20). The wireless device may receive/detect the DCI in a PDCCH reception after the end of the PUCCH transmission. The DCI may schedule/indicate the PUSCH transmission.

The DCI may be, for example, a DCI format 0_1. The DCI may be, for example, a DCI format 0_2. The DCI may be, for example, a DCI format 0_3.

The DCI may comprise a CSI request field indicating a CSI trigger state associated with the CSI report configuration. The DCI may comprise the CSI request field with a value. The value may indicate (or may be mapped to) the CSI trigger state (or an aperiodic CSI trigger state) associated with the CSI report configuration.

After receiving the DCI, the wireless device may transmit the PUSCH transmission via the uplink resource indicated by the uplink grant.

The wireless device may transmit the PUSCH transmission with the UE-initiated CSI report, for example, based on the value of the CSI request field in the DCI indicating the CSI trigger state associated with the CSI report configuration that is associated with the UE-initiated CSI reporting.

The PUSCH transmission may carry (or may be with or may be multiplexed with) the UE-initiated CSI report.

The PUSCH transmission may be, for example, on a second cell (or on a second uplink BWP of a second cell). In an example, the first cell may be different from the second cell. In an example, the first cell may be the same as the second cell.

In an example, the second cell that the wireless device transmits the PUCCH transmission may be different from the second cell that the wireless device transmits the PUSCH transmission. In an example, the second cell that the wireless device transmits the PUCCH transmission may be the same as the second cell that the wireless device transmits the PUSCH transmission.

FIG. 21 shows an example that illustrates a procedure according to a second mode/option/scheme for UE-initiated CSI reporting. Further, in accordance with the second mode/option/scheme for UE-initiated CSI reporting, the configured resource configuration (e.g., *ConfiguredGrant, RRC-ConfiguredGrant configuredResourceForSecondChannelOfModeB* in FIG. 22, and the like) may indicate one or more PUSCH transmission occasions of the configured uplink grant for use by the wireless device to transmit UE-initiated CSI reports to the base station (e.g., PUSCH 1, 2, 3, 4 in FIG. 21). The one or more PUSCH transmission occasions of the configured uplink grant may be, for example, periodic.

In accordance with the second mode/option/scheme of UE-initiated CSI reporting in FIG. 21, the PUCCH transmission via the PUCCH resource may notify of a PUSCH transmission that will carry (be multiplexed with) the UE-initiated CSI report via a PUSCH transmission occasion (e.g., PUSCH 4 in FIG. 21) of the configured uplink grant. The one or more PUSCH transmission occasions of the configured uplink grant may comprise the PUSCH transmission occasion of the configured uplink grant. The PUCCH transmission via the PUCCH resource may notify the base station that the PUSCH transmission with the UE-initiated CSI report is to be transmitted via the PUSCH transmission occasion of the one or more PUSCH transmission occasions. The PUCCH transmission may notify the base station that the UE-initiated CSI reporting has been triggered. The PUCCH transmission may comprise a notification that indicates the PUSCH transmission occasion, of the one or more PUSCH transmission occasions, that will be used by the wireless device for the PUSCH transmission. In example, the notification may indicate the PUSCH transmission occasion (e.g., PUSCH 4 in FIG. 21), of the one or more PUSCH transmission occasions, for the PUSCH transmission. In the second mode of UE-initiated CSI reporting, the PUCCH transmission with the UCI for/of UE-initiated CSI reporting may notify of the PUSCH transmission that will carry (be multiplexed with) the UE-initiated CSI report via the PUSCH transmission occasion. The BRI may notify a type-1 configured grant PUSCH to carry a CSI report (or to carry UE-initiated CSI report for Mode B).

The PUSCH transmission may be, for example, on/for a Type 1 configured grant. The PUSCH transmission may be, for example, a Type 1 configured grant PUSCH transmission.

The PUSCH transmission may be, for example, in a starting/first/initial available transmission occasion that occurs a number of symbols from/after the end of the PUCCH transmission.

The PUSCH transmission occasion may be, for example, an earliest/first/starting PUSCH transmission occasion, among the one or more PUSCH transmission occasions of the configured uplink grant, that occurs after the PUCCH transmission.

The PUSCH transmission occasion may be, for example, an earliest/first/starting PUSCH transmission occasion, among the one or more PUSCH transmission occasions, that occurs a time duration/gap/delay/offset (e.g., time duration in FIG. 21) after the PUCCH transmission. The PUSCH transmission occasion may be an earliest/first/starting available PUSCH transmission occasion, among the one or more PUSCH transmission occasions, that occurs a time duration/gap/delay/offset after the PUCCH transmission. The PUSCH transmission occasion may be an earliest/first/starting available PUSCH transmission occasion, among the one or more PUSCH transmission occasions, that occurs a time duration/gap/delay/offset after a last/final repetition of the PUCCH transmission. The wireless device may not drop PUSCH transmission(s) in an available PUSCH transmission occasion. The PUSCH transmission occasion may be an earliest/first/starting available PUSCH transmission occasion, among the one or more PUSCH transmission occasions, that is at least the time duration/gap/delay/offset after a last/final/ending symbol of the PUCCH transmission.

In an example, the one or more CSI reporting configuration parameters may indicate the time duration/gap/delay/offset. In an example, the one or more configuration parameters may indicate the time duration/gap/delay /offset.

The one or more CSI reporting configuration parameters may comprise a symbol number parameter (e.g., *numOfSymbols-ModeB, timeDomainOffset*). The symbol number parameter may indicate the number of symbols (or indicate a time offset in number of symbols for determining available transmission occasion of the PUSCH transmission in Mode B from the PUCCH transmission). The symbol number parameter may indicate the time duration/gap/delay/offset

The wireless device may transmit a UE capability message. In an example, the UE capability message may comprise a parameter indicating a minimum time duration/gap/delay/offset. The minimum time duration/gap/delay may be, for example, in terms of symbols. The time duration/gap/delay may be equal to or greater/larger than the minimum time duration/gap/delay/offset. In an example, the UE capability message may comprise a parameter indicating a second time duration/gap/delay/offset. The second time duration/gap/delay may be, for example, in terms of symbols. The time duration/gap/delay may be equal to or greater/larger than the second time duration/gap/delay/offset.

After transmitting the PUCCH transmission, the wireless device may transmit the PUSCH transmission via the PUSCH transmission occasion. After notifying the PUSCH transmission, the wireless device may transmit the PUSCH transmission via the PUSCH transmission occasion.

The PUSCH transmission may carry (or may be with or may be multiplexed with) the UE-initiated CSI report.

The PUSCH transmission may be, for example, on a second cell (or on a second uplink BWP of a second cell). In an example, the first cell may be different from the second cell. In an example, the first cell may be the same as the second cell.

In an example, the second cell that the wireless device transmits the PUCCH transmission may be different from the second cell that the wireless device transmits the PUSCH transmission. In an example, the second cell that the wireless device transmits the PUCCH transmission may be the same as the second cell that the wireless device transmits the PUSCH transmission.

In an example, the second cell that the wireless device transmits the PUSCH transmission may be the first cell that the one or more CSI reporting configuration parameters are configured for/on.

The one or more CSI reporting configuration parameters may comprise a reference signal report parameter (e.g., *nrofReportedRS-UEIBR* in FIG. 22). The reference signal report parameter (or a value of the reference signal report parameter) may indicate a number of reference signals to report in a report format for UE-initiated CSI reporting (or for the CSI report configuration). The reference signal report parameter (or a value of the reference signal report parameter) may indicate a number of reference signals to report in a UE-initiated CSI report. The reference signal report parameter (or a value of the reference signal report parameter) may indicate a number of measured RS resources to be reported per/for the CSI report configuration.

The UE-initiated CSI report may comprise one or more reference signal resource indicators (e.g., SS/PBCH block resource indicators (SRIs) or CSI-RS resource indicators (CRIs)) indicating/identifying one or more candidate reference signals in/from/among the list/set of candidate reference signals. Each reference signal resource indicator of the one or more reference signal resource indicators may indicate/identify a respective candidate reference signal of the one or more candidate reference signals. A number of the one or more candidate reference signals may be equal to the value of the reference signal report parameter. In FIG. 24, the one or more reference signal resource indicators are CRI/SSBRI 1, CRI/SSBRI 2, ..., CRI/SSBRI N.

The wireless device may report, in the UE-initiated CSI report and in a single reporting instance, the one or more reference signal resource indicators. The wireless device may report, in the UE-initiated CSI report and in a single reporting instance, the number of the one or more reference signal resource indicators.

The UE-initiated CSI report may indicate/comprise one or more radio link qualities (e.g., absolute L1-RSRP or differential L1-RSRP) of the one or more candidate reference signals. Each radio link quality of the one or more radio link qualities may be for (or associated with) a respective candidate reference signal of the one or more candidate reference signals. In FIG. 24, the one or more radio link qualities are RSRP 1 (e.g., absolute L1-RSRP) of a reference signal indicated/identified by CRI/SSBRI 1, differential RSRP 2 (e.g., differential L1-RSRP) of a reference signal indicated/identified by CRI/SSBRI 2, ..., differential RSRP N (e.g., differential L1-RSRP) of a reference signal indicated/identified by CRI/SSBRI N.

The one or more candidate reference signals may comprise the first candidate reference signal that satisfies the event (or the trigger-event). The one or more candidate reference signals may comprise the first candidate reference signal that satisfies the event (or the trigger-event), for example, for the second event and/or the third event. The one or more reference signal resource indicators may comprise a reference signal resource indicator of the first candidate reference signal. The one or more radio link qualities may comprise a radio link quality (e.g., absolute L1-RSRP or differential L1-RSRP) of the first candidate reference signal.

The one or more CSI reporting configuration parameters may comprise a current beam parameter (e.g., *enabledCurrentBeamReport* in FIG. 22, *enabledCurrentRS-Report,* and the like). The current beam parameter may indicate (or enable or disable) whether the current reference signal (or the current beam) is reported in the UE-initiated CSI report, or not.

In an example, when the current beam parameter is enabled (or present in the one or more CSI reporting configuration parameters), the UE-initiated CSI report may comprise a radio link quality (e.g., a differential L1-RSRP) of the current reference signal. The UE-initiated CSI report may comprise the radio link quality (e.g., a differential L1-RSRP) of the current reference signal and the one or more radio link qualities (e.g., absolute L1-RSRP or differential L1-RSRP) of the one or more candidate reference signals. A number of reference signals indicated/reported by the UE-initiated CSI report may be equal to the value of the reference signal report parameter plus one. A number of radio link qualities indicated by the UE-initiated CSI report may be equal to the value of the reference signal report parameter plus one. In FIG. 24, the radio link quality (e.g., a differential L1-RSRP) of the current reference signal is 'Differential RSRP for the current beam'.

In an example, when the current beam parameter is not enabled (or is disabled or is absent in the one or more CSI reporting configuration parameters), the UE-initiated CSI report may not comprise a radio link quality (e.g., a differential L1-RSRP) of the current reference signal. A number of reference signals indicated by the UE-initiated CSI report may be equal to the value of the reference signal report parameter. A number of radio link qualities indicated by the UE-initiated CSI report may be equal to the value of the reference signal report parameter.

The wireless device may report, in the UE-initiated CSI report and in a single reporting instance, *nrofReportedRS-UEIBR* CSI reference signal resource indicators (CRIs) or SS/PBCH block resource indicators (SSBRIs) and their absolute L1-RSRPs or differential L1-RSRPs corresponding to the one or more candidate reference signals in/from/among the list/set of candidate reference signals.

In the second event, the one or more candidate reference signals may comprise the first candidate reference signal that satisfies the second event. In the second event, the one or more candidate reference signals may comprise the at least one candidate reference signal that satisfies the second event.

In the third event, the one or more candidate reference signals may comprise the first candidate reference signal that satisfies the third event. In the third event, the one or more candidate reference signals may comprise the at least one candidate reference signal that satisfies the third event.

If the current beam parameter (e.g., *enabledCurrentBeamReport* in FIG. 22) is present/configured/provided, the wireless device may further report, in the UE-initiated CSI report and in the single reporting instance, the differential L1-RSRP correponding to the current reference signal.

The UE-initiated CSI report may comprise a CSI report configuration indicator (e.g., CSI report configuration indicator in FIG. 24) with a value indicating the CSI report configuration among one or more CSI report configurations associated with the PUCCH resource carrying the BRI. The wireless device may order the one or more CSI report configurations in ascending order of one or more CSI report configuration identifiers (e.g., *CSI-ReportConfigID*) of the one or more CSI report configurations. Each CSI report configuration identifier of the one or more CSI report configuration identifiers may indicate/identify a respective CSI report configuration of the one or more CSI report configurations. The value of i of the CSI report configuration indicator may indicate (i+1)-th CSI report configuration in the ordered CSI report configurations.

The UE-initiated CSI report may comprise one or more condition met indicator fields for the one or more candidate reference signals. Each condition met indicator field of the one or more condition met indicator fields may be for (or associated with) a respective candidate reference signal of the one or more candidate reference signals.

Each condition met indicator field of the one or more condition met indicator fields may be for (or associated with) a respective reference signal resource indicator of the one or more reference signal resource indicators. For example, in FIG. 24, Condition met indicator 1 is for (or associated with) CRI/SSBRI 1, Condition met indicator 2 is for (or associated with) CRI/SSBRI 2, ..., Condition met indicator N is for (or associated with) CRI/SSBRI N.

The UE-initiated CSI report may comprise one or more condition met indicator fields, for example, for the second event and/or the third event. The UE-initiated CSI report may comprise one or more condition met indicator fields, for example, based on the one or more CSI reporting configuration parameters comprising a condition met present parameter (e.g., *PresenceOfConditionMetIndicator*). A UE-initiated CSI report may not comprise any condition met indicator field, for example, when the one or more CSI reporting configuration parameters do not comprise a condition met present parameter.

A first value (e.g., 0) of a condition met indicator field for (or associated with) a candidate reference signal among the one or more candidate reference signals may indicate that a number of trigger-event instances (or a total number of trigger-event instances) for the candidate reference signal within the time window doesn't reach (or is less/smaller than) the event instance count. The one or more condition met indicator fields may comprise the condition met indicator field for (or associated with) the candidate reference signal

A second value (e.g., 1) of a condition met indicator field for (or associated with) a candidate reference signal among the one or more candidate reference signals may indicate that a number of trigger-event instances (or a total number of trigger-event instances) for the candidate reference signal within the time window reaches (or is equal to or greater/larger than) the event instance count. The one or more condition met indicator fields may comprise the condition met indicator field for (or associated with) the candidate reference signal

For the third event, the UE-initiated CSI report may comprise a TCI codepoint indicator (or codepoint indicator) with a value indicating/identifying (or equal/set to) the TCI codepoint indicating (or mapped to) the TCI state associated with the Q-th best radio link quality. The one or more TCI codepoints may comprise the TCI codepoint indicating (or mapped to) the TCI state associated with the Q-th best radio link quality. For example, in FIG. 20 and FIG. 21, the TCI state associated with the Q-th best radio link quality is DL TCI 48. The TCI codepoint indicating the TCI state associated with the Q-th best radio link quality is TCI codepoint 101 indicating DL TCI 48.

The base station may receive, from the wireless device and in/via the PUSCH transmission occasion, the PUSCH transmission with the UE-initiated CSI report.

The UE-initiated CSI report may comprise a bitmap. The UE-initiated CSI report may comprise the bitmap, for example, for the third event.

The bitmap may be (or may be interchangeably used with) a field (e.g., TCI state indicator, TCI state update indicator, TCI codepoint indicator, TCI codepoint update indicator, codepoint indicator, codepoint update indicator, and the like).

The bitmap may be (or may be interchangeably used with) fields (e.g., TCI state indicators, TCI state update indicators, TCI codepoint indicators, TCI codepoint update indicators, codepoint indicators, codepoint update indicators, and the like).

The bitmap may be (or may be interchangeably used with) one or more fields (e.g., TCI state indicator(s), TCI state update indicator(s), TCI codepoint indicator(s), TCI codepoint update indicator(s), codepoint indicator(s), codepoint update indicator(s), and the like). Each bit in the bitmap may be (or may be interchangeably used with) a respective field of the one or more fields.

The UE-initiated CSI report may comprise the bitmap (or the one or more fields), for example, based on the one or more CSI reporting configuration parameters comprising a TCI present parameter (e.g., *PresenceOfTCI-UpdateIndicator, PresenceOfCodepoint-UpdateIndicator, PresenceOfTCI-Indicator, PresenceOfCodepointIndicator,* and the like).

The UE-initiated CSI report may comprise the bitmap (or the one or more fields), for example, based on the value of Q. The UE-initiated CSI report may comprise the bitmap (or the one or more fields), for example, based on the value of Q being less than 8. The UE-initiated CSI report may comprise the bitmap (or the one or more fields), for example, based on the value of Q not being equal to 8. The UE-initiated CSI report may comprise the bitmap (or the one or more fields), for example, based on the value of Q being equal to or less than a value (e.g., 2, 3, 4, ..., 7, 8). The UE-initiated CSI report may comprise the bitmap (or the one or more fields), for example, based on the value of Q being equal to or greater than a value (e.g., 1, 2, 3, 4, ..., 7).

The UE-initiated CSI report may comprise the bitmap (or the one or more fields), for example, based on the value of the reference signal report parameter (e.g., *nrofReportedRS-UEIBR* in FIG. 22). The UE-initiated CSI report may comprise the bitmap (or the one or more fields), for example, based on the value of the reference signal report parameter being equal to or less than a value (e.g., 2, 3, 4, 5, 6, 7, 8). The UE-initiated CSI report may comprise the bitmap (or the one or more fields), for example, based on the value of the reference signal report parameter being equal to or greater than a value (e.g., 1, 2, 3, 4, 5, 6, 7).

The bitmap may comprise one or more bits. Each bit of the one or more bits in the bitmap may be (or correspond to) a respective field of the one or more fields. A number of bits in the bitmap (or a number of fields in the one or more fields) may be equal to a first value.

For example, in FIG. 24, the bitmap (or the one or more fields) is TCI state update indicator 1, TCI state update indicator 2, ..., TCI state update indicator M. The first value may be, for example, M.

A first bit (e.g., TCI state update indicator 1 in FIG. 24) that occurs first in the bitmap may be to (or may correspond to or may be interchangeably used with) a first field of the one or more fields. The first field may occur first in an ordered set/list of the one or more fields. The first field may occur (be located/positioned) in the highest/uppermost position among position(s) of the one or more fields in the UE-initiated CSI report.

A second bit (e.g., TCI state update indicator 2 in FIG. 24) that occurs second in the bitmap may be to (or may correspond to or may be interchangeably used with) a second field of the one or more fields. The second field may occur second in an ordered set/list of the one or more fields. The second field may occur (be located/positioned) in the second highest/uppermost position among the position(s) of the one or more fields in the UE-initiated CSI report.

A third bit (e.g., TCI state update indicator 3 in FIG. 24) that occurs third in the bitmap may be to (or may correspond to or may be interchangeably used with) a third field of the one or more fields. The third field may occur third in an ordered set/list of the one or more fields. The third field may occur (be located/positioned) in the third highest/uppermost position among the position(s) of the one or more fields in the UE-initiated CSI report.

A fourth bit (e.g., TCI state update indicator 4 in FIG. 24) that occurs fourth in the bitmap may be to (or may correspond to or may be interchangeably used with) a fourth field of the one or more fields. The fourth field may occur fourth in an ordered set/list of the one or more fields. The fourth field may occur (be located/positioned) in the fourth highest/uppermost position among the position(s) of the one or more fields in the UE-initiated CSI report.

The first value may be, for example, based on the maximum number of activated TCI states (e.g., 8). The first value may be, for example, equal to the maximum number of activated TCI states. The first value may be, for example, equal to the maximum number of activated TCI states minus one (e.g., 7).

The first value may be, for example, based on a maximum number of TCI codepoints (e.g., 8). The first value may be, for example, equal to the maximum number of TCI codepoints. The first value may be, for example, equal to the maximum number of TCI codepoints minus one (e.g., 7).

The first value may be, for example, based on the number of the one or more activated TCI states (e.g., a number of the one or more joint TCI states or a number of the one or more downlink TCI states). The first value may be, for example, equal to the number of the one or more activated TCI states. The first value may be, for example, equal to the number of the one or more activated TCI states minus one. In FIG. 20 and FIG. 21, the one or more activated TCI states are DL TCI 23, DL TCI 12, DL TCI 9, and DL TCI 48. The number of the one or more activated TCI states is equal to four.

The first value may be, for example, based on a number of TCI codepoints indicating (or mapped to) the one or more activated TCI states (e.g., the one or more joint TCI states or the one or more downlink TCI states). The first value may be, for example, equal to the number of TCI codepoints indicating (or mapped to) the one or more activated TCI states. The first value may be, for example, equal to the number of TCI codepoints indicating (or mapped to) the one or more activated TCI states minus one. In FIG. 20 and FIG. 21, the TCI codepoints indicating (or mapped to) the one or more activated TCI states are TCI codepoint 000, TCI codepoint 010, TCI codepoint 011, and TCI codepoint 101. The number of TCI codepoints indicating (or mapped to) the one or more activated TCI states is equal to four.

The first value may be, for example, based on the value of the reference signal report parameter (e.g., *nrofReportedRS-UEIBR* in FIG. 22). The first value may be, for example, equal to the value of the reference signal report parameter. The first value may be, for example, equal to the value of the reference signal report parameter minus one.

The one or more CSI reporting configuration parameters may comprise a TCI number parameter (e.g. *nrofReportedTCI, nrofReportedCodepoint,* and the like). The TCI number parameter may indicate a number of TCI states (or TCI codepoints) to indicate/report in a report format for UE-initiated CSI reporting (or for the CSI report configuration).

The first value may be, for example, based on a value of the TCI number parameter. The first value may be, for example, equal to the value of the TCI number parameter. The first value may be, for example, equal to the value of the TCI number parameter minus one.

The one or more configuration parameters may indicate, for each TCI state in the list of TCI states, a respective TCI state identifier (e.g., *TCI-StateId*)*.* Each TCI state in the list of TCI states may be indicated/identified by a respective TCI state identifier. The one or more activated TCI states may be indicated/identified by one or more TCI state identifiers (e.g., *TCI-StateId*)*.* The one or more configuration parameters may indicate, for each TCI state of the one or more activated TCI states, a respective TCI state identifier of the one or more TCI state identifiers. Each TCI state of the one or more activated TCI states may be indicated/identified by a respective TCI state identifier of the one or more TCI state identifiers

The wireless device may order the one or more activated TCI states.

The wireless device may order the one or more activated TCI states, for example, based on the one or more TCI state identifiers of the one or more activated TCI states.

The wireless device may order the one or more activated TCI states, for example, in an ascending/increasing order of the one or more TCI state identifiers of the one or more activated TCI states. A TCI state that occurs/located/positioned first in the one or more ordered activated TCI states may be a TCI state with a lowest TCI state identifier among the one or more TCI state identifiers of the one or more activated TCI states. The one or more activated TCI states may comprise the TCI state with the lowest TCI state identifier. A TCI state that occurs/located/positioned second in the one or more ordered activated TCI states may be a TCI state with a second lowest TCI state identifier among the one or more TCI state identifiers of the one or more activated TCI states. The one or more activated TCI states may comprise the TCI state with the second lowest TCI state identifier. A TCI state that occurs/located/positioned last in the one or more ordered activated TCI states may be a TCI state with a highest TCI state identifier among the one or more TCI state identifiers of the one or more activated TCI states. The one or more activated TCI states may comprise the TCI state with the highest TCI state identifier.

For example, in FIG. 20 and FIG. 21, the one or more activated TCI states are DL TCI 9, DL TCI 12, DL TCI 23, and DL TCI 48. If TCI state identifier of DL TCI 9 < TCI state identifier of DL TCI 12 < TCI state identifier of DL TCI 23 < TCI state identifier of DL TCI 48, the one or more ordered activated TCI states is [DL TCI 9, DL TCI 12, DL TCI 23, DL TCI 48]. If TCI state identifier of DL TCI 23 < TCI state identifier of DL TCI 12 < TCI state identifier of DL TCI 9 < TCI state identifier of DL TCI 48, the one or more ordered activated TCI states is [DL TCI 23, DL TCI 12, DL TCI 9, DL TCI 48].

In an example, the wireless device may map the one or more ordered activated TCI states (or the one or more TCI state identifiers of the one or more ordered activated TCI states) in ascending/increasing order from most significant bit (MSB) of the bitmap to least significant bit (LSB) of the bitmap. In an example, the wireless device may map the one or more activated TCI states in ascending/increasing order of the one or more TCI state identifiers from MSB of the bitmap to LSB of the bitmap.

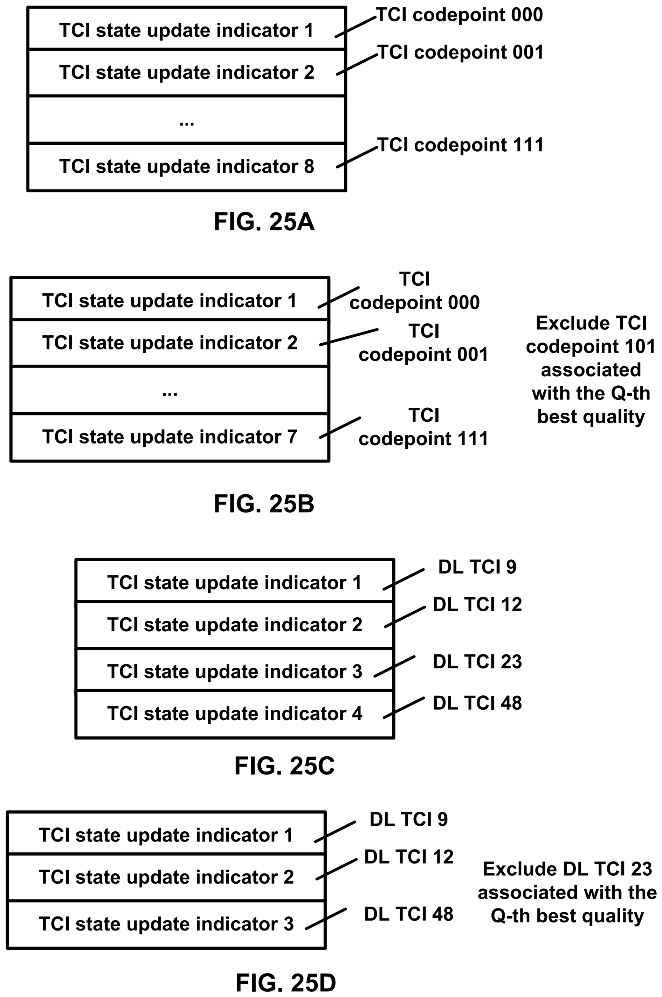

For example, when the one or more ordered activated TCI states is [DL TCI 9, DL TCI 12, DL TCI 23, DL TCI 48], the MSB of the bitmap is mapped to DL TCI 9 and the LSB of the bitmap is mapped to DL TCI 48. For example, when the one or more ordered activated TCI states is [DL TCI 9, DL TCI 12, DL TCI 23, DL TCI 48], a starting/initial/first bit in the bitmap is mapped to DL TCI 9. A first bit (e.g., TCI state update indicator 1 in FIG. 25C) that occurs (or is located/positioned) first in the bitmap is mapped to DL TCI 9. A second bit (e.g., TCI state update indicator 2 in FIG. 25C) that occurs (is located/positioned) second in the bitmap is mapped to DL TCI 12. A third bit (e.g., TCI state update indicator 3 in FIG. 25C) that occurs (is located/positioned) third in the bitmap is mapped to DL TCI 23. A fourth bit (e.g., TCI state update indicator 4 in FIG. 25C) that occurs (is located/positioned) fourth in the bitmap is mapped to DL TCI 48.

The starting/initial/first bit in the bitmap (or the first bit that occurs first in the bitmap) may correspond to the TCI state, among the one or more activated TCI states, with the lowest TCI state identifier among the one or more TCI state identifiers of the one or more activated TCI states. The second bit that occurs second in the bitmap may correspond to the TCI state, among the one or more activated TCI states, with the second lowest TCI state identifier among the one or more TCI state identifiers of the one or more activated TCI states, and so on. A bit that occurs last in the bitmap may correspond to the TCI state, among the one or more activated TCI states, with the highest TCI state identifier among the one or more TCI state identifiers of the one or more activated TCI states.

The wireless device may order the one or more activated TCI states, for example, in a decreasing/descending order of the one or more TCI state identifiers of the one or more activated TCI states.

The wireless device may number the one or more activated TCI states, for example, in an ascending/increasing order of the one or more TCI state identifiers of the one or more activated TCI states. The wireless device may number the one or more activated TCI states, for example, continuously. The wireless device may number a TCI state with a lowest TCI state identifier among the one or more TCI state identifiers of the one or more activated TCI states as an activated TCI state 0. The one or more activated TCI states may comprise the TCI state with the lowest TCI state identifier. The wireless device may number a TCI state with a second lowest TCI state identifier among the one or more TCI state identifiers of the one or more activated TCI states as an activated TCI state 1. The one or more activated TCI states may comprise the TCI state with the second lowest TCI state identifier, and so on.

For example, in FIG. 20 and FIG. 21, the one or more activated TCI states are DL TCI 9, DL TCI 12, DL TCI 23, and DL TCI 48. If TCI state identifier of DL TCI 9 < TCI state identifier of DL TCI 12 < TCI state identifier of DL TCI 23 < TCI state identifier of DL TCI 48, DL TCI 9 is an activated TCI state 0, DL TCI 12 is an activated TCI state 1, DL TCI 23 is an activated TCI state 2, and DL TCI 48 is an activated TCI state 3. If TCI state identifier of DL TCI 23 < TCI state identifier of DL TCI 12 < TCI state identifier of DL TCI 9 < TCI state identifier of DL TCI 48, DL TCI 23 is an activated TCI state 0, DL TCI 12 is an activated TCI state 1, DL TCI 9 is an activated TCI state 2, and DL TCI 48 is an activated TCI state 3.

In an example, the wireless device may map the one or more numbered activated TCI states (or the one or more TCI state identifiers of the one or more ordered activated TCI states) in ascending/increasing order from MSB of the bitmap to LSB of the bitmap. In an example, the wireless device may map the one or more activated TCI states in ascending/increasing order of the one or more TCI state identifiers from MSB of the bitmap to LSB of the bitmap.

For example, when DL TCI 9 is an activated TCI state 0, DL TCI 12 is an activated TCI state 1, DL TCI 23 is an activated TCI state 2, and DL TCI 48 is an activated TCI state 3, the MSB of the bitmap is mapped to DL TCI 9 and the LSB of the bitmap is mapped to DL TCI 48. A first bit (e.g., TCI state update indicator 1 in FIG. 25C) that occurs (or is located/positioned) first in the bitmap is mapped to DL TCI 9. A second bit (e.g., TCI state update indicator 2 in FIG. 25C) that occurs (is located/positioned) second in the bitmap is mapped to DL TCI 12. A third bit (e.g., TCI state update indicator 3 in FIG. 25C) that occurs (is located/positioned) third in the bitmap is mapped to DL TCI 23. A fourth bit (e.g., TCI state update indicator 4 in FIG. 25C) that occurs (is located/positioned) fourth in the bitmap is mapped to DL TCI 48. For example, when DL TCI 23 is an activated TCI state 0, DL TCI 12 is an activated TCI state 1, DL TCI 9 is an activated TCI state 2, and DL TCI 48 is an activated TCI state 3, a starting/initial/first bit in the bitmap is mapped to DL TCI 23.

The wireless device may number the one or more activated TCI states, for example, in a decreasing/descending order of the one or more TCI state identifiers of the one or more activated TCI states.

In an example, the wireless device may order the one or more activated TCI states, except/excluding the TCI state associated with the Q-th best radio link quality. The one or more ordered activated TCI states may not comprise the TCI state associated with the Q-th best radio link quality. The wireless device may order the one or more activated TCI states, except/excluding the TCI state associated with the Q-th best radio link quality, for example, by excluding a TCI state identifier of the TCI state associated with the Q-th best radio link quality. The one or more TCI state identifiers of the one or more activated TCI states may comprise the TCI state identifier of the TCI state associated with the Q-th best radio link quality. When ordering the one or more activated TCI states, the wireless device may remove (or may not use or may not take into account) the TCI state identifier of the TCI state associated with the Q-th best radio link quality from the one or more TCI state identifiers of the one or more activated TCI states. When ordering the one or more activated TCI states, the wireless device may remove (or may not use or may not take into account) the TCI state associated with the Q-th best radio link quality from the one or more activated TCI states. A TCI state that occurs/located/positioned first in the one or more ordered activated TCI states may be a TCI state with a lowest TCI state identifier among the one or more TCI state identifiers of the one or more activated TCI states except/excluding the TCI state identifier of the TCI state associated with the Q-th best radio link quality. The one or more activated TCI states except the TCI state identifier of the TCI state associated with the Q-th best radio link quality may comprise the TCI state with the lowest TCI state identifier. A TCI state that occurs/located/positioned second in the one or more ordered activated TCI states may be a TCI state with a second lowest TCI state identifier among the one or more TCI state identifiers of the one or more activated TCI states except/excluding the TCI state identifier of the TCI state associated with the Q-th best radio link quality. The one or more activated TCI states except the TCI state associated with the Q-th best radio link quality may comprise the TCI state with the second lowest TCI state identifier. A TCI state that occurs/located/positioned last in the one or more ordered activated TCI states may be a TCI state with a highest TCI state identifier among the one or more TCI state identifiers of the one or more activated TCI states except/excluding the TCI state identifier of the TCI state associated with the Q-th best radio link quality. The one or more activated TCI states except the TCI state associated with the Q-th best radio link quality may comprise the TCI state with the highest TCI state identifier.

For example, in FIG. 20 and FIG. 21, the one or more activated TCI states are DL TCI 9, DL TCI 12, DL TCI 23, and DL TCI 48. The TCI state associated with the Q-th best radio link quality is DL TCI 48. If TCI state identifier of DL TCI 9 < TCI state identifier of DL TCI 12 < TCI state identifier of DL TCI 23, the one or more ordered activated TCI states is [DL TCI 9, DL TCI 12, DL TCI 23]. If TCI state identifier of DL TCI 12 < TCI state identifier of DL TCI 9 < TCI state identifier of DL TCI 23, the one or more ordered activated TCI states is [DL TCI 12, DL TCI 9, DL TCI 23].

In an example, the wireless device may map the one or more ordered activated TCI states (or the one or more TCI state identifiers of the one or more ordered activated TCI states except/excluding the TCI state identifier of the TCI state associated with the Q-th best radio link quality) in ascending/increasing order from MSB of the bitmap to LSB of the bitmap. In an example, the wireless device may map the one or more activated TCI states except the TCI state associated with the Q-th best radio link quality in ascending/increasing order of the one or more TCI state identifiers, except/excluding the TCI state identifier of the TCI state associated with the Q-th best radio link quality, from MSB of the bitmap to LSB of the bitmap.

For example, when the one or more ordered activated TCI states is [DL TCI 9, DL TCI 12, DL TCI 23], the MSB of the bitmap is mapped to DL TCI 9 and the LSB of the bitmap is mapped to DL TCI 23. For example, when the one or more ordered activated TCI states is [DL TCI 9, DL TCI 12, DL TCI 23], a starting/initial/first bit (e.g., TCI state update indicator 1 in FIG. 25D) in the bitmap is mapped to DL TCI 9. A first bit (e.g., TCI state update indicator 1 in FIG. 25D) that occurs (or is located/positioned) first in the bitmap is mapped to DL TCI 9. A second bit (e.g., TCI state update indicator 2 in FIG. 25D) that occurs (is located/positioned) second in the bitmap is mapped to DL TCI 12. A third bit (e.g., TCI state update indicator 3 in FIG. 25D) that occurs (is located/positioned) third in the bitmap is mapped to DL TCI 23.

The starting/initial/first bit in the bitmap (or the first bit that occurs first in the bitmap) may correspond to the TCI state, among the one or more activated TCI states except/excluding the TCI state associated with the Q-th best radio link quality, with the lowest TCI state identifier among the one or more TCI state identifiers of the one or more activated TCI states except/excluding the TCI state identifier of the TCI state associated with the Q-th best radio link quality. The second bit that occurs second in the bitmap may correspond to the TCI state, among the one or more activated TCI states except/excluding the TCI state associated with the Q-th best radio link quality, with the second lowest TCI state identifier among the one or more TCI state identifiers of the one or more activated TCI states except/excluding the TCI state identifier of the TCI state associated with the Q-th best radio link quality, and so on. A bit that occurs last in the bitmap may correspond to the TCI state, among the one or more activated TCI states except/excluding the TCI state associated with the Q-th best radio link quality, with the highest TCI state identifier among the one or more TCI state identifiers of the one or more activated TCI states except/excluding the TCI state identifier of the TCI state associated with the Q-th best radio link quality.

The wireless device may order the one or more activated TCI states except the TCI state associated with the Q-th best radio link quality, for example, in a decreasing/descending order of the one or more TCI state identifiers of the one or more activated TCI states except/excluding the TCI state identifier of the TCI state associated with the Q-th best radio link quality.

In an example, the wireless device may number the one or more activated TCI states, except/excluding the TCI state associated with the Q-th best radio link quality. The one or more numbered activated TCI states may not comprise the TCI state associated with the Q-th best radio link quality. The wireless device may number the one or more activated TCI states, except/excluding the TCI state associated with the Q-th best radio link quality, for example, by excluding the TCI state identifier of the TCI state associated with the Q-th best radio link quality. When numbering the one or more activated TCI states, the wireless device may remove (or may not use or may not take into account) the TCI state identifier of the TCI state associated with the Q-th best radio link quality from the one or more TCI state identifiers of the one or more activated TCI states. When numbering the one or more activated TCI states, the wireless device may remove (or may not use or may not take into account) the TCI state associated with the Q-th best radio link quality from the one or more activated TCI states.

The wireless device may number a TCI state with a lowest TCI state identifier among the one or more TCI state identifiers of the one or more activated TCI states except/excluding the TCI state identifier of the TCI state associated with the Q-th best radio link quality as an activated TCI state 0. The one or more activated TCI states except the TCI state associated with the Q-th best radio link quality may comprise the TCI state with the lowest TCI state identifier. The wireless device may number a TCI state with a second lowest TCI state identifier among the one or more TCI state identifiers of the one or more activated TCI states except/excluding the TCI state identifier of the TCI state associated with the Q-th best radio link quality as an activated TCI state 1. The one or more activated TCI states except the TCI state associated with the Q-th best radio link quality may comprise the TCI state with the second lowest TCI state identifier, and so on.

For example, in FIG. 20 and FIG. 21, the one or more activated TCI states are DL TCI 9, DL TCI 12, DL TCI 23, and DL TCI 48. The TCI state associated with the Q-th best radio link quality is DL TCI 48. If TCI state identifier of DL TCI 9 < TCI state identifier of DL TCI 12 < TCI state identifier of DL TCI 23, DL TCI 9 is an activated TCI state 0, DL TCI 12 is an activated TCI state 1, and DL TCI 23 is an activated TCI state 2. If TCI state identifier of DL TCI 12 < TCI state identifier of DL TCI 9 < TCI state identifier of DL TCI 23, DL TCI 12 is an activated TCI state 0, DL TCI 9 is an activated TCI state 1, and DL TCI 23 is an activated TCI state 2.

In an example, the wireless device may map the one or more numbered activated TCI states (or the one or more TCI state identifiers of the one or more ordered activated TCI states except/excluding the TCI state identifier of the TCI state associated with the Q-th best radio link quality) in ascending/increasing order from MSB of the bitmap to LSB of the bitmap. In an example, the wireless device may map the one or more activated TCI states, except/excluding the TCI state associated with the Q-th best radio link quality, in ascending/increasing order of the one or more TCI state identifiers, except/excluding the TCI state identifier of the TCI state associated with the Q-th best radio link quality, from MSB of the bitmap to LSB of the bitmap.

For example, when DL TCI 9 is an activated TCI state 0, DL TCI 12 is an activated TCI state 1, and DL TCI 23 is an activated TCI state 2, the MSB of the bitmap is mapped to DL TCI 9 and the LSB of the bitmap is mapped to DL TCI 23. A first bit (e.g., TCI state update indicator 1 in FIG. 25D) that occurs (or is located/positioned) first in the bitmap is mapped to DL TCI 9. A second bit (e.g., TCI state update indicator 2 in FIG. 25D) that occurs (is located/positioned) second in the bitmap is mapped to DL TCI 12. A third bit (e.g., TCI state update indicator 3 in FIG. 25D) that occurs (is located/positioned) third in the bitmap is mapped to DL TCI 23. When DL TCI 12 is an activated TCI state 0, DL TCI 9 is an activated TCI state 1, and DL TCI 23 is an activated TCI state 2, a starting/initial/first bit in the bitmap is mapped to DL TCI 12. A first bit that occurs (or is located/positioned) first in the bitmap is mapped to DL TCI 12. A second bit that occurs (is located/positioned) second in the bitmap is mapped to DL TCI 9. A third bit that occurs (is located/positioned) third in the bitmap is mapped to DL TCI 23.

The wireless device may number the one or more activated TCI states except the TCI state associated with the Q-th best radio link quality, for example, in a decreasing/descending order of the one or more TCI state identifiers of the one or more activated TCI states except/excluding the TCI state identifier of the TCI state associated with the Q-th best radio link quality.

For example, in FIG. 24, the first bit in the bitmap is TCI state update indicator 1, the second bit in the bitmap is TCI state update indicator 2, ..., the M-th bit in the bitmap is TCI state update indicator M.

The bitmap may comprise a bit. The bit may be associated with (or may correspond to) a first TCI state among the one or more activated TCI states.

In an example, a first value (e.g., 0) of the bit may indicate that a radio link quality of a reference signal associated with (or indicated by) the first TCI state is better/higher (or equal to or higher) than the radio link quality of the current reference signal of (or associated with) the TCI state associated with the Q-th best radio link quality. In an example, the first value of the bit may indicate that the first TCI state may not be updated/replaced by another TCI state from the list/set of TCI states. The first value of the bit may indicate that the first TCI state may not be updated/replaced by another TCI state, from the list/set of TCI states, indicating (or associated with) at least one reference signal in/among the one or more candidate reference signals in the UE-initiated CSI report. The first value of the bit may indicate that the first TCI state is not a candidate for update by another TCI state.

In an example, a second value (e.g., 1) of the bit may indicate that a radio link quality of a reference signal associated with (or indicated by) the first TCI state is lower/worse than the radio link quality of the current reference signal of (or associated with) the TCI state associated with the Q-th best radio link quality. In an example, the second value of the bit may indicate that the first TCI state may be updated/replaced by another TCI state from the list/set of TCI states. The second value of the bit may indicate that the first TCI state may be updated/replaced by another TCI state, from the list/set of TCI states, indicating (or associated with) at least one reference signal in/among the one or more candidate reference signals in the UE-initiated CSI report. The second value of the bit may indicate that the first TCI state is a candidate for update by another TCI state.

In an example, the wireless device may map TCI codepoints in ascending/increasing order from MSB of the bitmap to LSB of the bitmap. In an example, the wireless device may map the TCI codepoints in ascending/increasing order of indexes/values of the TCI codepoints from MSB of the bitmap to LSB of the bitmap.

In an example, in FIG. 25A, the TCI codepoints are TCI codepoint 000, TCI codepoint 001, ..., TCI codepoint 111 (e.g., 8 TCI codepoints). The MSB of the bitmap is mapped to TCI codepoint 000, and the LSB of the bitmap is mapped to TCI codepoint 111. A first bit (e.g., TCI state update indicator 1 in FIG. 25A) that occurs (or is located/positioned) first in the bitmap is mapped to TCI codepoint 000. A second bit (e.g., TCI state update indicator 2 in FIG. 25A) that occurs (is located/positioned) second in the bitmap is mapped to TCI codepoint 001. A third bit (e.g., TCI state update indicator 3 in FIG. 25A) that occurs (is located/positioned) third in the bitmap is mapped to TCI codepoint 010. A fourth bit (e.g., TCI state update indicator 4 in FIG. 25A) that occurs (is located/positioned) fourth in the bitmap is mapped to TCI codepoint 011, and so on.

In an example, the wireless device may map TCI codepoints, except/excluding the TCI codepoint indicating (or mapped to) the TCI state associated with the Q-th best radio link quality, in ascending/increasing order from MSB of the bitmap to LSB of the bitmap. In an example, the wireless device may map the TCI codepoints, except/excluding the TCI codepoint indicating (or mapped to) the TCI state associated with the Q-th best radio link quality, in ascending/increasing order of indexes/values of the TCI codepoints from the MSB of the bitmap to the LSB of the bitmap.

In an example, in FIG. 20 and FIG. 21, the TCI state associated with the Q-th best radio link quality is DL TCI 48, and the TCI codepoint indicating (or mapped to) the TCI state associated with the Q-th best radio link quality is TCI codepoint 101. In FIG. 25B, the TCI codepoints, except/excluding the TCI codepoint 101 indicating (or mapped to) the TCI state associated with the Q-th best radio link quality, are TCI codepoint 000, TCI codepoint 001, TCI codepoint 010, TCI codepoint 011, TCI codepoint 100, TCI codepoint 110, and TCI codepoint 111 (e.g., 7 TCI codepoints). The MSB of the bitmap is mapped to TCI codepoint 000, and the LSB of the bitmap is mapped to TCI codepoint 111. A first bit (e.g., TCI state update indicator 1 in FIG. 25B) that occurs (or is located/positioned) first in the bitmap is mapped to TCI codepoint 000. A second bit (e.g., TCI state update indicator 2 in FIG. 25B) that occurs (is located/positioned) second in the bitmap is mapped to TCI codepoint 001. A third bit that occurs (is located/positioned) third in the bitmap is mapped to TCI codepoint 010. A fourth bit that occurs (is located/positioned) fourth in the bitmap is mapped to TCI codepoint 011, and so on.

In an example, the TCI state associated with the Q-th best radio link quality may be DL TCI 23, and in FIG. 20-21, the TCI codepoint indicating (or mapped to) DL TCI 23 associated with the Q-th best radio link quality is TCI codepoint 000. The TCI codepoints, except/excluding the TCI codepoint 000 indicating (or mapped to) the TCI state associated with the Q-th best radio link quality, are TCI codepoint TCI codepoint 001, TCI codepoint 010, TCI codepoint 011, TCI codepoint 100, TCI codepoint 101, TCI codepoint 110, and TCI codepoint 111 (e.g., 7 TCI codepoints). The MSB of the bitmap is mapped to TCI codepoint 001, and the LSB of the bitmap is mapped to TCI codepoint 111. A first bit (e.g., TCI state update indicator 1) that occurs (or is located/positioned) first in the bitmap is mapped to TCI codepoint 001. A second bit (e.g., TCI state update indicator 2) that occurs (is located/positioned) second in the bitmap is mapped to TCI codepoint 010. A third bit that occurs (is located/positioned) third in the bitmap is mapped to TCI codepoint 011. A fourth bit that occurs (is located/positioned) fourth in the bitmap is mapped to TCI codepoint 100, and so on.

In an example, the wireless device may map the at least one TCI codepoint indicating (or mapped to) the one or more activated TCI states in ascending/increasing order from MSB of the bitmap to LSB of the bitmap. In an example, the wireless device may map the least one TCI codepoint in ascending/increasing order of indexes/values of the least one TCI codepoint from MSB of the bitmap to LSB of the bitmap. The wireless device may map the at least one TCI codepoint indicating (or mapped to) a joint TCI state or a downlink TCI state in ascending/increasing order from MSB of the bitmap to LSB of the bitmap. The wireless device may not map a TCI codepoint, among the one or more TCI codepoints, not indicating (or not mapped to) a joint TCI state or a downlink TCI state to a bit in the bitmap. The wireless device may not map a TCI codepoint, among the one or more TCI codepoints, indicating only (or mapped only to) an uplink TCI state to a bit in the bitmap.

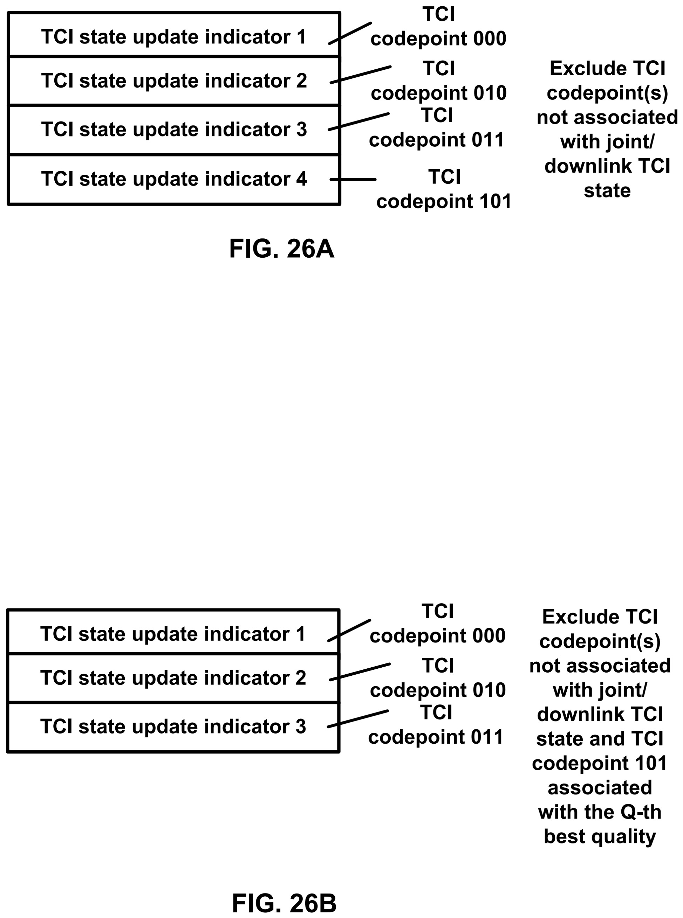

In an example, in FIG. 26A, the at least one TCI codepoint are TCI codepoint 000, TCI codepoint 010, TCI codepoint 011, and TCI codepoint 101 (e.g., 4 TCI codepoints). The MSB of the bitmap is mapped to TCI codepoint 000, and the LSB of the bitmap is mapped to TCI codepoint 101. A first bit (e.g., TCI state update indicator 1 in FIG. 26A) that occurs (or is located/positioned) first in the bitmap is mapped to TCI codepoint 000. A second bit (e.g., TCI state update indicator 2 in FIG. 26A) that occurs (is located/positioned) second in the bitmap is mapped to TCI codepoint 010. A third bit (e.g., TCI state update indicator 3 in FIG. 26A) that occurs (is located/positioned) third in the bitmap is mapped to TCI codepoint 011. A fourth bit (e.g., TCI state update indicator 4 in FIG. 26A) that occurs (is located/positioned) fourth in the bitmap is mapped to TCI codepoint 101, and so on. In FIG. 26A, the wireless device may not map TCI codepoint 001 indicating UL TCI 4 to a bit in the bitmap. The wireless device may not map TCI codepoint 100 indicating UL TCI 51 to a bit in the bitmap.

The at least one TCI codepoint may indicate (or be mapped to) the one or more activated TCI states.

In an example, the wireless device may map the at least one TCI codepoint, except/excluding the TCI codepoint indicating (or mapped to) the TCI state associated with the Q-th best radio link quality, in ascending/increasing order from MSB of the bitmap to LSB of the bitmap. In an example, the wireless device may map the least one TCI codepoint, except/excluding the TCI codepoint indicating (or mapped to) the TCI state associated with the Q-th best radio link quality, in ascending/increasing order of indexes/values of the least one TCI codepoint from MSB of the bitmap to LSB of the bitmap. The wireless device may map the at least one TCI codepoint, except/excluding the TCI codepoint indicating (or mapped to) the TCI state associated with the Q-th best radio link quality, indicating (or mapped to) a joint TCI state or a downlink TCI state in ascending/increasing order from MSB of the bitmap to LSB of the bitmap. The wireless device may not map a TCI codepoint, among the one or more TCI codepoints, not indicating (or not mapped to) a joint TCI state or a downlink TCI state to a bit in the bitmap. The wireless device may not map a TCI codepoint, among the one or more TCI codepoints, indicating only (or mapped only to) an uplink TCI state to a bit in the bitmap.

In an example, in FIG. 20 and FIG. 21, the TCI state associated with the Q-th best radio link quality is DL TCI 48, and the TCI codepoint indicating (or mapped to) the TCI state associated with the Q-th best radio link quality is TCI codepoint 101. The at least one TCI codepoint except/excluding the TCI codepoint 101 indicating (or mapped to) the TCI state associated with the Q-th best radio link quality are TCI codepoint 000, TCI codepoint 010, and TCI codepoint 011 (e.g., 3 TCI codepoints). The MSB of the bitmap is mapped to TCI codepoint 000, and the LSB of the bitmap is mapped to TCI codepoint 011. A first bit (e.g., TCI state update indicator 1 in FIG. 26B) that occurs (or is located/positioned) first in the bitmap is mapped to TCI codepoint 000. A second bit (e.g., TCI state update indicator 2 in FIG. 26B) that occurs (is located/positioned) second in the bitmap is mapped to TCI codepoint 010. A third bit (e.g., TCI state update indicator 3 in FIG. 26B) that occurs (is located/positioned) third in the bitmap is mapped to TCI codepoint 011. In FIG. 26B, the wireless device may not map TCI codepoint 001 indicating UL TCI 4 to a bit in the bitmap. The wireless device may not map TCI codepoint 100 indicating UL TCI 51 to a bit in the bitmap. The wireless device may not map TCI codepoint 101 indicating (or mapped to) the TCI state associated with the Q-th best radio link quality to a bit in the bitmap.

By excluding the TCI codepoint indicating (or mapped to) the TCI state associated with the Q-th best radio link quality, the size of the UE-initiated CSI report may be reduced. Reduction of the CSI report size may increase probability of successful reception of the CSI report.

The TCI codepoints may comprise the one or more TCI codepoints mapped to the one or more TCI states.

The bitmap may comprise a bit. The bit may be associated with (or may correspond to) a first TCI codepoint. The TCI codepoints may comprise the first TCI codepoint. In an example, the at least one TCI codepoint may comprise the first TCI codepoint.

In an example, the first TCI codepoint may indicate (or may be mapped to) a first TCI state among the one or more activated TCI states.

In an example, a first value (e.g., 0) of the bit may indicate that a radio link quality of a reference signal associated with (or indicated by) the first TCI state in the first TCI codepoint is better/higher (or equal to or higher) than the radio link quality of the current reference signal of (or associated with) the TCI state associated with the Q-th best radio link quality. In an example, the first value of the bit may indicate that the first TCI state may not be updated/replaced by another TCI state from the list/set of TCI states. The first value of the bit may indicate that the first TCI state may not be updated/replaced by another TCI state, from the list/set of TCI states, indicating (or associated with) at least one reference signal in/among the one or more candidate reference signals in the UE-initiated CSI report. The first value of the bit may indicate that the first TCI state is not a candidate for update by another TCI state.

In an example, a second value (e.g., 1) of the bit may indicate that a radio link quality of a reference signal associated with (or indicated by) the first TCI state in the first TCI codepoint is lower/worse than the radio link quality of the current reference signal of (or associated with) the TCI state associated with the Q-th best radio link quality. In an example, the second value of the bit may indicate that the first TCI state may be updated/replaced by another TCI state from the list/set of TCI states. The second value of the bit may indicate that the first TCI state may be updated/replaced by another TCI state, from the list/set of TCI states, indicating (or associated with) at least one reference signal in/among the one or more candidate reference signals in the UE-initiated CSI report. The second value of the bit may indicate that the first TCI state is a candidate for update by another TCI state.

In an example, the one or more TCI codepoints mapped to the one or more TCI states may not comprise the first TCI codepoint. For example, in FIG. 20 and FIG. 21, the first TCI codepoint may be TCI codepoint 110 and/or TCI codepoint 111.

The wireless device may set the bit associated with (or corresponding to) the first TCI codepoint to the second value (e.g., 0), for example, based on the one or more TCI codepoints not comprising the first TCI codepoint. The wireless device may set the bit associated with (or corresponding to) the first TCI codepoint as a zero-padding bit, for example, based on the one or more TCI codepoints not comprising the first TCI codepoint. The wireless device may set the bit associated with (or corresponding to) the first TCI codepoint as a reserved bit, for example, based on the one or more TCI codepoints not comprising the first TCI codepoint. The wireless device may set the bit associated with (or corresponding to) the first TCI codepoint to zero, for example, based on the one or more TCI codepoints not comprising the first TCI codepoint. The wireless device may ignore the bit (or a value of the bit) associated with (or corresponding to) the first TCI codepoint, for example, based on the one or more TCI codepoints not comprising the first TCI codepoint.

In an example, the one or more TCI codepoints mapped to the one or more TCI states may comprise the first TCI codepoint. The first TCI codepoint may not indicate (or may not be mapped to) a joint TCI state or a downlink TCI state. The first TCI codepoint may indicate (or may be mapped to) an uplink TCI state. The one or more TCI states may comprise the uplink TCI state. For example, in FIG. 20 and FIG. 21, the first TCI codepoint may be TCI codepoint 001 and the uplink TCI state is UL TCI 4. The first TCI codepoint may be TCI codepoint 100 and the uplink TCI state is UL TCI 51.

The wireless device may set the bit associated with (or corresponding to) the first TCI codepoint to the second value (e.g., 0), for example, based on the first TCI codepoint not indicating (or not being mapped to) a joint TCI state or a downlink TCI state. The wireless device may set the bit associated with (or corresponding to) the first TCI codepoint as a zero-padding bit, for example, based on the first TCI codepoint not indicating (or not being mapped to) a joint TCI state or a downlink TCI state. The wireless device may set the bit associated with (or corresponding to) the first TCI codepoint as a reserved bit, for example, based on the first TCI codepoint not indicating (or not being mapped to) a joint TCI state or a downlink TCI state. The wireless device may set the bit associated with (or corresponding to) the first TCI codepoint to zero, for example, based on the first TCI codepoint not indicating (or not being mapped to) a joint TCI state or a downlink TCI state. The wireless device may ignore the bit (or a value of the bit) associated with (or corresponding to) the first TCI codepoint, for example, based on the first TCI codepoint not indicating (or not being mapped to) a joint TCI state or a downlink TCI state.

The wireless device may set the bit associated with (or corresponding to) the first TCI codepoint to the second value (e.g., 0), for example, based on the first TCI codepoint indicating (or being mapped to) an uplink TCI state. The wireless device may set the bit associated with (or corresponding to) the first TCI codepoint as a zero-padding bit, for example, based on the first TCI codepoint indicating (or being mapped to) an uplink TCI state. The wireless device may set the bit associated with (or corresponding to) the first TCI codepoint as a reserved bit, for example, based on the first TCI codepoint indicating (or being mapped to) an uplink TCI state. The wireless device may set the bit associated with (or corresponding to) the first TCI codepoint to zero, for example, based on the first TCI codepoint indicating (or being mapped to) an uplink TCI state. The wireless device may ignore the bit (or a value of the bit) associated with (or corresponding to) the first TCI codepoint, for example, based on the first TCI codepoint indicating (or being mapped to) an uplink TCI state.

The wireless device may set the bit associated with (or corresponding to) the first TCI codepoint to the second value (e.g., 0), for example, based on the first TCI codepoint indicating only (or being only mapped to) an uplink TCI state. The wireless device may set the bit associated with (or corresponding to) the first TCI codepoint as a zero-padding bit, for example, based on the first TCI codepoint indicating only (or being only mapped to) an uplink TCI state. The wireless device may set the bit associated with (or corresponding to) the first TCI codepoint as a reserved bit, for example, based on the first TCI codepoint indicating only (or being only mapped to) an uplink TCI state. The wireless device may set the bit associated with (or corresponding to) the first TCI codepoint to zero, for example, based on the first TCI codepoint indicating only (or being only mapped to) an uplink TCI state. The wireless device may ignore the bit (or a value of the bit) associated with (or corresponding to) the first TCI codepoint, for example, based on the first TCI codepoint indicating only (or being only mapped to) an uplink TCI state.

The UE-initiated CSI report may comprise, for example, one or more zero padding bits.

The UE-initiated CSI report may comprise one or more zero padding bits, for example, based on the number of the one or more activated TCI states.

The UE-initiated CSI report may comprise one or more zero padding bits, for example, based on the number of the one or more activated TCI states being smaller/less than the maximum number of activated TCI states (e.g., 8).

The UE-initiated CSI report may comprise one or more zero padding bits, for example, based on the number of the one or more TCI codepoints.

The UE-initiated CSI report may comprise one or more zero padding bits, for example, based on the number of the one or more TCI codepoints being smaller/less than a first value (e.g., 8). The first value may be, for example, fixed/preconfigured. The first value may be, for example, indicated by the one or more configuration parameters. The UE-initiated CSI report may comprise one or more zero padding bits, for example, based on the number of the one or more TCI codepoints being smaller/less than a maximum number of TCI codepoints (e.g., 8).

The UE-initiated CSI report may comprise one or more zero padding bits, for example, based on a number of the at least one TCI codepoint. The UE-initiated CSI report may comprise one or more zero padding bits, for example, based on the number of the at least one TCI codepoint being smaller/less than the first value (e.g., 8). The UE-initiated CSI report may comprise one or more zero padding bits, for example, based on the number of the at least one TCI codepoint being smaller/less than a maximum number of TCI codepoints (e.g., 8).

The wireless device may determine/calculate a number of the one or more zero padding bits.

The wireless device may determine/calculate the number of the one or more zero padding bits, for example, based on the number of the one or more activated TCI states

The wireless device may determine/calculate the number of the one or more zero padding bits, for example, based on the maximum number of activated TCI states.

The wireless device may determine/calculate the number of the one or more zero padding bits, for example, based on the number of the one or more TCI codepoints.

The wireless device may determine/calculate the number of the one or more zero padding bits, for example, based on the maximum number of TCI codepoints.

The wireless device may determine/calculate the number of the one or more zero padding bits, for example, based on the number of the at least one TCI codepoint.

The number of the one or more zero padding bits may be equal to, for example, the maximum number of activated TCI states minus the number of the one or more activated TCI states.

The number of the one or more zero padding bits may be equal to, for example, the maximum number of activated TCI states minus one minus the number of the one or more activated TCI states.

The number of the one or more zero padding bits may be equal to, for example, (the maximum number of activated TCI states minus one) minus (the number of the one or more activated TCI states minus one).

The number of the one or more zero padding bits may be equal to, for example, the maximum number of TCI codepoints minus the number of the one or more TCI codepoints.

The number of the one or more zero padding bits may be equal to, for example, the maximum number of TCI codepoints minus one minus the number of the one or more TCI codepoints.

The number of the one or more zero padding bits may be equal to, for example, (the maximum number of TCI codepoints minus one) minus (the number of the one or more TCI codepoints minus one).

The number of the one or more zero padding bits may be equal to, for example, the maximum number of TCI codepoints minus the number of the at least one TCI codepoint.

The number of the one or more zero padding bits may be equal to, for example, the maximum number of TCI codepoints minus one minus the number of the at least one TCI codepoint.

The number of the one or more zero padding bits may be equal to, for example, (the maximum number of TCI codepoints minus one) minus (the number of the at least one TCI codepoint minus one).

In the existing technologies, there may be misalignment between the base station and the wireless device in terms of the size of the UE-initiated CSI report. The base station may need to perform blind decoding for different CSI report sizes leading to increased power consumption and latency in reception of the UE-initiated CSI report.

Example embodiments enhance the size alignment of the UE-initiated CSI report between the base station and the wireless device. Zero padding may be used to align the size of the UE-initiated CSI report between the base station and the wireless device. This may lead to reduced power consumption and reduced latency in reception of the UE-initiated CSI report

## Claims

1. A method comprising:
receiving, by a wireless device, one or more radio resource control, RRC, messages comprising one or more channel state information, CSI, reporting configuration parameters for user equipment, UE, initiated CSI reporting, wherein the one or more CSI reporting configuration parameters comprise:
a resource parameter indicating a list of reference signals; and
a value parameter indicating a value of Q;
receiving an activation command indicating activation of one or more transmission configuration indicator, TCI, states for a cell;
detecting an event based on:
a radio link quality of at least one reference signal of the list of reference signals; and
a radio link quality of a reference signal associated with a TCI state associated with a Q-th best radio link quality among the one or more activated TCI states; and
based on detecting the event, transmitting a UE-initiated CSI report comprising a bitmap, wherein:
each bit, of one or more bits in the bitmap, corresponds to a respective activated TCI state of the one or more activated TCI states;
a first value of a bit of the one or more bits indicates that a radio link quality of a reference signal associated with a corresponding activated TCI state is better than the radio link quality of the reference signal associated with the TCI state associated with the Q-th best radio link quality; and
a second value of the bit indicates that the radio link quality of the reference signal associated with the corresponding activated TCI state is worse than the radio link quality of the reference signal associated with the TCI state associated with the Q-th best radio link quality.

2. The method of claim 1, wherein:
the one or more bits of the bitmap correspond to the one or more activated TCI states excluding the TCI state associated with the Q-th best radio link quality.

3. The method of claim 2, wherein:
the UE-initiated CSI report further comprises a TCI codepoint indicator indicating a TCI codepoint mapped to the TCI state associated with the Q-th best radio link quality.

4. The method of any one of claims 1 to 3, wherein:
each activated TCI state of the one or more activated TCI states is identified by a respective TCI state identifier; and
the one or more bits are mapped from a most significant bit of the bitmap to a least significant bit of the bitmap in an ascending order of the respective TCI state identifiers of the one or more activated TCI states.

5. The method of claim 4, wherein:
the ascending order excludes a TCI state identifier of the TCI state associated with the Q-th best radio link quality.

6. The method of any one of claims 1 to 3, wherein:
the one or more bits are mapped from a most significant bit of the bitmap to a least significant bit of the bitmap in an ascending order of indexes of TCI codepoints.

7. The method of claim 6, wherein:
the TCI codepoints comprise TCI codepoints mapped to the one or more TCI states activated for the cell; and
the ascending order excludes a TCI codepoint mapped to the TCI state associated with the Q-th best radio link quality.

8. A method comprising:
transmitting, by a base station to a wireless device, one or more radio resource control, RRC, messages comprising one or more channel state information, CSI, reporting configuration parameters for user equipment, UE, initiated CSI reporting, wherein the one or more CSI reporting configuration parameters comprise:
a resource parameter indicating a list of reference signals; and
a value parameter indicating a value of Q;
transmitting, to the wireless device, an activation command indicating activation of one or more transmission configuration indicator, TCI, states for a cell; and
receiving, from the wireless device, a UE-initiated CSI report comprising a bitmap, wherein:
each bit, of one or more bits in the bitmap, corresponds to a respective activated TCI state of the one or more activated TCI states;
a first value of a bit of the one or more bits indicates that a radio link quality of a reference signal associated with a corresponding activated TCI state is better than a radio link quality of a reference signal associated with a TCI state associated with a Q-th best radio link quality, the TCI state associated with the Q-th best radio link quality being among the one or more activated TCI states; and
a second value of the bit indicates that the radio link quality of the reference signal associated with the corresponding activated TCI state is worse than the radio link quality of the reference signal associated with the TCI state associated with the Q-th best radio link quality.

9. The method of claim 8, wherein:
the one or more bits of the bitmap correspond to the one or more activated TCI states excluding the TCI state associated with the Q-th best radio link quality; and
the UE-initiated CSI report further comprises a TCI codepoint indicator indicating a TCI codepoint mapped to the TCI state associated with the Q-th best radio link quality.

10. The method of any one of claims 8 to 9, wherein:
each activated TCI state of the one or more activated TCI states is identified by a respective TCI state identifier; and
the one or more bits are mapped from a most significant bit of the bitmap to a least significant bit of the bitmap in an ascending order of the respective TCI state identifiers of the one or more activated TCI states.

11. The method of claim 10, wherein:
the ascending order excludes a TCI state identifier of the TCI state associated with the Q-th best radio link quality.

12. The method of any one of claims 8 to 9, wherein:
the one or more bits are mapped from a most significant bit of the bitmap to a least significant bit of the bitmap in an ascending order of indexes of TCI codepoints.

13. The method of claim 12, wherein:
the TCI codepoints comprise TCI codepoints mapped to the one or more TCI states activated for the cell; and
the ascending order excludes a TCI codepoint mapped to the TCI state associated with the Q-th best radio link quality.

14. An apparatus comprising:
one or more processors; and
memory storing instructions that, when executed by the one or more processors, cause the apparatus to perform the method of any one of claims 1 to 13.

15. A non-transitory computer-readable medium comprising instructions that, when executed by one or more processors of an apparatus, cause the apparatus to perform the method of any one of claims 1 to 13.
